# EUROPÄISCHE PATENTSCHRIFT

(11) **EP 2 340 292 B1**
(45) Veröffentlichungstag und Bekanntmachung des Hinweises auf die Patenterteilung: **29.05.2013**
(21) Anmeldenummer: 09778761.8
(22) Anmeldetag: 29.09.2009
(51) Int. Cl.: C09K 19/34

(54) **FLÜSSIGKRISTALLANZEIGE**
LIQUID CRYSTAL DISPLAY
DISPOSITIF D'AFFICHAGE A BASE DE CRISTAUX LIQUIDES

(30) Priorität: 29.10.2008 DE 102008053636
(43) Veröffentlichungstag der Anmeldung: 06.07.2011
(73) Patentinhaber: Merck Patent GmbH, 64293 Darmstadt (DE)
(72) Erfinder: GÖTZ, Achim, 64665 Alsbach-Hähnlein (DE); DURMAZ, Erdal, 64285 Darmstadt (DE); RILLICH, Malgorzata, 64291 Darmstadt (DE); TAUGERBECK, Andreas, 64285 Darmstadt (DE)
(86) Internationale Anmeldenummer: PCT/EP2009/006993
(87) Internationale Veröffentlichungsnummer: WO 2010/049044

(56) Entgegenhaltungen:
- EP-A- 0 661 366
- WO-A-2004/003103
- US-A1- 2003 021 913
- US-A1- 2003 099 785
- US-A1- 2005 233 094
- US-A1- 2007 179 266
- DAVE J S ET AL: "SYNTHESIS AND MESOMORPHIC CHARACTERIZATION OF AZOESTERS WITH A COUMARIN RING" LIQUID CRYSTALS, TAYLOR AND FRANCIS, ABINGDON, GB, Bd. 29, Nr. 4, 1. April 2002 (2002-04-01), Seiten 543-549, XP001082970 ISSN: 0267-8292
- CHUDGAR N K ET AL: "NEW FLUORESCENT MESOGENS WITH BENZOPYRAN-4ÚH 3/4 ONE HETEROCYCLIC MOIETY" LIQUID CRYSTALS, TAYLOR AND FRANCIS, ABINGDON, GB, Bd. 19, Nr. 6, 1. Dezember 1995 (1995-12-01), Seiten 807-810, XP000554521 ISSN: 0267-8292

## Beschreibung

Die vorliegende Erfindung betrifft polymerisierbare Verbindungen, Verfahren und Zwischenprodukte zu ihrer Herstellung, und ihre Verwendung für optische, elektrooptische und elektronische Zwecke, insbesondere in Flüssigkristall (FK)-Medien und FK-Anzeigen, vor allem in FK-Anzeigen des PS- (polymer stabilized) oder PSA- (polymer sustained alignment) Typs.

Die derzeit verwendeten Flüssigkristallanzeigen (FK-Anzeigen) sind meist solche des TN-Typs (twisted nematic). Diese weisen allerdings den Nachteil einer starken Blickwinkelabhängigkeit des Kontrastes auf. Daneben sind sogenannte VA-Anzeigen (vertical alignment) bekannt, die einen breiteren Blickwinkel aufweisen. Die FK-Zelle einer VA-Anzeige enthält eine Schicht eines FK-Mediums zwischen zwei transparenten Elektroden, wobei das FK-Medium üblicherweise einen negativen Wert der dielektrischen (DK-) Anisotropie aufweist. Die Moleküle der FK-Schicht sind im ausgeschalteten Zustand senkrecht zu den Elektrodenflächen (homöotrop) oder gekippt homöotrop (engl. "tilted") orientiert. Bei Anlegen einer elektrischen Spannung an die Elektroden findet eine Umorientierung der FK-Moleküle parallel zu den Elektrodenflächen statt. Weiterhin sind OCB-Anzeigen (optically compensated bend) bekannt, die auf einem Doppelbrechungseffekt beruhen und eine FK-Schicht mit einer sogenannten "bend"-Orientierung und üblicherweise positiver (DK-) Anisotropie aufweisen. Bei Anlegen einer elektrischen Spannung findet eine Umorientierung der FK-Moleküle senkrecht zu den Elektrodenflächen statt. Darüber hinaus enthalten OCB-Anzeigen normalerweise einen oder mehrere doppelbrechende optische Retardationsfilme, um unerwünschte Lichtdurchlässigkeit der "bend"-Zelle im dunklen Zustand zu vermeiden. OCB-Anzeigen besitzen gegenüber TN-Anzeigen einen weiteren Blickwinkel und kürzere Schaltzeiten. Weiterhin sind IPS-Anzeigen (In-Plane Switching) bekannt, die eine FK-Schicht zwischen zwei Substraten enthalten, wovon nur eines eine Elektrodenschicht mit üblicherweise kammförmiger Struktur aufweist. Dadurch wird bei Anlegen einer Spannung ein elektrisches Feld erzeugt, welches eine signifikante Komponente parallel zur FK-Schicht aufweist. Dies bewirkt eine Umorientierung der FK-Moleküle in der Schichtebene. Des weiteren wurden sogenannte FFS-Anzeigen (Fringe-Field-Switching) vorgeschlagen (siehe u.a. S.H. Jung et al., Jpn. J. Appl. Phys., Band 43, No. 3, 2004, 1028), die ebenfalls zwei Elektroden auf dem gleichen Substrat beinhalten, wovon jedoch im Gegensatz zu IPS-Anzeigen nur eine als strukturierte (kammförmige) Elektrode ausgebildet ist, und die andere Elektrode unstrukturiert ist. Dadurch wird ein starkes sogenanntes "fringe field" erzeugt, also ein starkes elektrisches Feld nahe am Rand der Elektroden und in der gesamten Zelle ein elektrisches Feld, welches sowohl eine starke vertikale als auch eine starke horizontale Komponente aufweist. Sowohl IPS-Anzeigen als auch FFS-Anzeigen weisen eine geringe Blickwinkelabhängigkeit des Kontrastes auf.

In VA-Anzeigen des neueren Typs ist die einheitliche Ausrichtung der FK-Moleküle auf mehrere kleinere Domänen innerhalb der FK-Zelle beschränkt. Zwischen diesen Domänen, auch als Tilt-Domänen (engl. "tilt domains") bezeichnet, können Disklinationen existieren. VA-Anzeigen mit Tilt-Domänen weisen, verglichen mit herkömmlichen VA-Anzeigen, eine größere Blickwinkelunabhängigkeit des Kontrastes und der Graustufen auf. Außerdem sind solche Anzeigen einfacher herzustellen, da eine zusätzliche Behandlung der Elektrodenoberfläche zur einheitlichen Orientierung der Moleküle im eingeschalteten Zustand, wie z.B. durch Reiben, nicht mehr notwendig ist. Stattdessen wird die Vorzugsrichtung des Kipp- oder Tiltwinkels (engl. "pretilt") durch eine spezielle Ausgestaltung der Elektroden kontrolliert. In den sogenannten MVA-Anzeigen (multidomain vertical alignment) wird dies üblicherweise dadurch erreicht, dass die Elektroden Erhebungen oder Vorsprünge (engl. "protrusions") aufweisen, die einen lokalen pretilt verursachen. Als Folge werden die FK-Moleküle beim Anlegen einer Spannung in verschiedenen, definierten Regionen der Zelle in unterschiedliche Richtungen parallel zu den Elektrodenflächen orientiert. Dadurch wird ein "kontrolliertes" Schalten erreicht und das Entstehen störender Disklinationslinien vermieden. Diese Anordnung verbessert zwar den Blickwinkel der Anzeige, führt aber zu einer Verringerung ihrer Lichtdurchlässigkeit. Ein Weiterentwicklung von MVA verwendet Protrusions nur auf einer Elektroden-Seite, die gegenüberliegende Elektrode weist hingegen Schlitze (engl. "slits") auf, was die Lichtdurchlässigkeit verbessert. Die geschlitzten Elektroden erzeugen beim Anlegen einer Spannung ein inhomogenes elektrisches Feld in der FK-Zelle, so dass weiterhin ein kontrolliertes Schalten erreicht wird. Zur weiteren Verbesserung der Lichtdurchlässigkeit können die Abstände zwischen den slits und protrusions vergrößert werden, was jedoch wiederum zu einer Verlängerung der Schaltzeiten führt. Beim sogenannten PVA (Patterned VA) kommt man ganz ohne Protrusions aus, indem man beide Elektroden auf den gegenüberliegenden Seiten durch Schlitze strukturiert, was zu einem erhöhten Kontrast und verbesserter Lichtdurchlässigkeit führt, aber technologisch schwierig ist und das Display empfindlicher gegen mechanische Einflüsse macht (Klopfen, engl. "tapping", etc.). Für viele Anwendungen, wie beispielsweise Monitore und vor allem TV-Bildschirme, ist jedoch eine Verkürzung der Schaltzeiten sowie eine Verbesserung des Kontrastes und der Luminanz (Transmission) der Anzeige gefragt.

Eine Weiterentwicklung stellen die sogenannten PS bzw. PSA-Anzeigen (Polymer Sustained [Alignment]) dar, die auch unter dem Begriff "polymer stabilized" bekannt sind. Darin wird dem FK-Medium eine geringe Menge (zum Beispiel 0.3 Gew.%, typischerweise <1 Gew.%) einer polymerisierbaren Verbindung zugesetzt, welche nach Einfüllen in die FK-Zelle mit oder ohne angelegte elektrische Spannung zwischen den Elektroden in situ polymerisiert bzw. vernetzt wird, üblicherweise durch UV-Photopolymerisation. Als besonders geeignet hat sich der Zusatz von polymerisierbaren mesogenen oder flüssigkristallinen Verbindungen, auch als "reaktive Mesogene" (RM) bezeichnet, zur FK-Mischung erwiesen. Mittlerweile wird das PSA-Prizip in diversen klassischen FK-Anzeigen angenwendet. So sind beispielsweise PSA-VA-, PSA-OCB-, PS-IPS/FFS- und PS-TN-Anzeigen bekannt. Die in-situ-Polymerisation der polymerisierbaren Verbindung(en) erfolgt zum Beispiel bei PSA-VA-Anzeigen üblicherweise bei angelegter elektrischer Spannung, bei PSA-IPS-Anzeigen dagegen üblicherweise ohne angelegte elektrische Spannung. Wie man in Testzellen nachweisen kann, führt das PSA-Verfahren zu einem pretilt in der Zelle. Bei PSA-OCB-Anzeigen kann man daher erreichen, dass die Bend-Struktur stabilisiert wird, so dass man ohne OffsetSpannung auskommt oder diese reduzieren kann. Im Falle von PSA-VA-Anzeigen wirkt sich dieser pretilt positiv auf die Schaltzeiten aus. Für PSA-VA-Anzeigen kann ein Standard-MVA- bzw -PVA Pixel- und Elektroden-Layout verwendet werden. Darüber hinaus kann man aber beispielsweise mit nur einer strukturierten Elektrodenseite und ohne Protrusions auskommen, was die Herstellung wesentlich vereinfacht und gleichzeitig zu einem sehr guten Kontrast bei sehr guter Lichtdurchlässigkeit führt. PSA-VA-Anzeigen sind beispielsweise in JP 10-036847 A, EP 1 170 626 A2, EP 1 378 557 A1, EP 1 498 468 A1, US 2004/0191428 A1, US 2006/0066793 A1 und US 2006/0103804 A1 beschrieben. PSA-OCB-Anzeigen sind beispielsweise in T.-J- Chen et al., Jpn. J. Appl. Phys. 45, 2006, 2702-2704 und S. H. Kim, L.-C-Chien, Jpn. J. Appl. Phys. 43, 2004, 7643-7647 beschrieben. PS-IPS-Anzeigen sind zum Beispiel in US 6,177,972 und Appl. Phys. Lett. 1999, 75(21), 3264 beschrieben. PS-TN-Anzeigen sind zum Beispiel in Optics Express 2004, 12(7), 1221 beschrieben.

Insbesondere für Monitor- und vor allem TV-Anwendungen ist nach wie vor die Optimierung der Schaltzeiten, wie aber auch des Kontrastes und der Luminanz (also auch Transmission) der FK-Anzeige gefragt. Hier kann das PSA-Verfahren entscheidende Vorteile bringen. Insbesondere beim PSA-VA kann man ohne nennenswerte Einbußen sonstiger Parameter eine Verkürzung der Schaltzeiten erreichen, die mit einem in Testzellen messbaren pretilt korrelieren.

Es hat sich jedoch gezeigt, dass bei Verwendung in PSA-Anzeigen die aus dem Stand der Technik bekannten FK-Mischungen und RMs noch einige Nachteile aufweisen. So eignet sich bei weitem nicht jedes beliebige lösliche RM zur Verwendung in PSA-Anzeigen, und es ist oft schwierig, geeignetere Auswahlkriterien als eben das direkte PSA-Experiment mit pretilt-Messung zu finden. Noch kleiner wird die Auswahl, wenn eine Polymerisation mittels UV-Licht ohne den Zusatz von Photoinitiatoren gewünscht ist, was für bestimmte Anwendungen von Vorteil sein kann. Darüber hinaus sollte das gewählte "Materialsystem" FK-Mischung (nachfolgend auch als "FK-Hostmischung" bezeichnet) + polymerisierbare Komponente eine möglichst geringe Rotationsviskosität sowie möglichst gute elektrische Eigenschaften aufweisen, hierbei ist die sog. "Voltage Holding Ratio" (VHR oder HR) hervorzuheben. Im Zusammenhang mit PSA-Anzeigen ist insbesondere eine hohe VHR nach Bestrahlung mit UV-Licht von zentraler Bedeutung, da die UV-Belichtung ein notwendiger Teil des Herstellungsprozesses der Anzeige ist, aber natürlich auch als "normale" Belastung im fertigen Display auftritt.

Es ergibt sich also das Problem, dass bei weitem nicht alle Kombinationen FK-Mischung + polymerisierbare Komponente für PSA-Anzeigen geeignet sind, weil sich zum Beispiel kein oder kein ausreichender Tilt einstellt, oder weil zum Beispiel die VHR für TFT-Display-Anwendungen unzureichend ist.

Insbesondere wäre es wünschenswert, neue Materialien für PSA-Anzeigen zur Verfügung zu haben, die einen besonders kleinen pretilt-Winkel erzeugen. Besonders wünschenswert wären Materialien, die während der Polymerisation bei gleicher Belichtungszeit einen niedrigeren pretilt-Winkel erzeugen als die bisher bekannten Materialien, und/oder durch deren Verwendung der mit den bekannten Materialien erzielbare (höhere) pretilt-Winkel bereits nach kürzerer Belichtungszeit erreicht werden kann. Dadurch könnten die Produktionszeit (tact time) der Anzeige verkürzt und die Kosten des Produktionsprozesses verringert werden.

Ein weiteres Problem ist das Auftreten des sogenannten "image sticking"- oder "image bum", d.h. dass das in der FK-Anzeige durch vorübergehende Ansteuerung einzelner Bildpunkte (pixel) erzeugte Bild auch nach Abschalten des elektrischen Feldes in diesen Bildpunkten, oder nach Ansteuerung anderer Bildpunkte, noch sichtbar bleibt.

Ein weiteres Problem bei der Herstellung von PSA-Anzeigen ist das Vorhandensein bzw. die Entfernung nicht polymerisierter RMs insbesondere nach dem Polymerisationsschritt zur Erzeugung des pretilt-Winkels in der Anzeige. Beispielsweise können solche nicht abreagierten RMs die Eigenschaften der Anzeige nachteilig beeinflussen, oder unkontrolliert polymerisieren während eine Spannung in der Anzeige anliegt. Ein kontrolliertes Abreagieren dieser Restmengen wäre einfacher, wenn das RM schneller und effektiver polymerisiert als die bisher bekannten Materialien.

Es besteht somit immer noch ein großer Bedarf an PSA-Anzeigen, insbesondere vom VA- und OCB-Typ, sowie FK-Medien und polymerisierbaren Verbindungen zur Verwendung in solchen Anzeigen, welche die oben beschriebenen Nachteile nicht oder nur in geringem Maße zeigen und verbesserte Eigenschaften besitzen. Insbesondere besteht ein großer Bedarf nach PSA-Anzeigen, sowie Materialien zur Verwendung in PSA-Anzeigen, die einen hohen spezifischen Widerstand bei gleichzeitig großem Arbeitstemperaturbereich, kurze Schaltzeiten auch bei tiefen Temperaturen und niedriger Schwellenspannung, einen niedrigen pretilt-Winkel, eine Vielzahl von Graustufen, einen hohen Kontrast und einen weiten Blickwinkel ermöglichen, sowie hohe Werte der "voltage holding ratio" (VHR) nach UV-Belastung aufweisen.

Der Erfindung liegt die Aufgabe zugrunde, neue geeignete Materialien, insbesondere RMs und diese enthaltende FK-Medien, für die Verwendung in PSA-Anzeigen bereitzustellen, die die oben angegebenen Nachteile nicht oder in geringerem Maße aufweisen, möglichst schnell und vollständig polymerisieren, eine möglichst schnelle Einstellung eines niedrigen pretilt-Winkels ermöglichen, das Auftreten von "image sticking" in der Anzeige verringern oder vermeiden, und vorzugsweise gleichzeitig sehr hohe spezifische Widerstände, niedrige Schwellenspannungen und niedrige Schaltzeiten ermöglichen.

Weitere Aufgabe der Erfindung ist die Bereitstellung von neuen RMs, insbesondere für optische, elektrooptische und elektronische Anwendungen, sowie von geeigneten Verfahren und Zwischenprodukten zu ihrer Herstellung.

Diese Aufgabe wurde erfindungsgemäß gelöst durch Materialien und Verfahren wie in der vorliegenden Anmeldung beschrieben. Insbesondere wurde überraschend gefunden, dass die Verwendung erfindungsgemäßer polymerisierbarer Verbindungen, die auf Cumarin- oder Flavon-Derivaten basieren, in PSA-Anzeigen besonders niedrige pretilt-Winkel und die schnelle Einstellung der gewünschten Tiltwinkel ermöglichen. Dies konnte in Verbindung mit einem FK-Medium mittels pretilt-Messungen nachgewiesen werden. Insbesondere konnte ein pretilt ohne den Zusatz von Photoinitiator erreicht werden. Darüber hinaus zeigen die erfindungsgemäßen Verbindungen eine deutlich schnellere Generierung des pretilt-Winkels im Vergleich zu den aus dem Stand der Technik bekannten Materialien, wie durch belichtungszeitabhängige Messungen des pretilt-Winkels nachgewiesen werden konnte. Zudem zeigen die erfindungsgemäßen polymerisierbaren Verbindungen eine deutlich höhere Polymerisationsgeschwindigkeit, wodurch weniger unreagierte Restmengen in der Zelle verbleiben. Dadurch werden die elektrooptischen Eigenschaften der Zelle verbessert, ausserdem wird das kontrollierte Abreagieren dieser Restmengen einfacher.

Polymerisierbare Cumarinderivate wurden im Stand der Technik bereits für andere Zwecke beschrieben. So offenbaren die US 2003-021913 A1 und WO 96/10049 A1 Seitenkettenpolymere mit Cumarin-Gruppen zur Verwendung in Orientierungsschichten, welche durch Photoorientierung bei Bestrahlung der Polymere mit linear polarisiertem Licht erhalten werden. Dabei wird die Cumaringruppe photochemisch dimerisiert. Die US 2007/0179266 A1 offenbart eine Zusammensetzung zur Herstellung von Orientierungsschichten durch Photoorientierung, enthaltend ein Monomer mit einer kovalent gebundenen photoisomerisierbaren Gruppe und ein Monomer mit einem kovalent gebundenen Sensibilisator, wobei der Sensibilisator ein Cumarin oder Ketocumarin sein kann. Die WO 2005/060471 A2 beschreibt eine lumineszierende polymerisierbare Verbindung mit einer Fluorengruppe und zwei Cumaringruppen zur Verwendung in lichtemittierenden Schichten. Die EP 0 661 366 A1 und WO 2004/003103 A1 beschreiben lumineszierende polymerisierbare Verbindungen, welche u.a. auch eine Cumaringruppe aufweisen können, zur Verwendung in organischen Leuchtdioden. In all diesen Dokumenten wird entweder die Lumineszenz oder die Photoisomerisierung bzw.-dimerisierung der Cumaringruppe ausgenutzt. US 2005/0233094 A1 und US 2003/0099785 A1 offenbaren FK-Orientierungsschichten enthaltend FK-Seitenkettenpolymere, welche auch eine Cumaringruppe enthalten können. Dave et al., Liquid Crystals 2002, 29(4), 543-549 offenbart die Synthese und mesomorphe Charakterisierung von Azoestern mit einem Cumarinring. Chugdar et al., Liquid Crystals 1995, 19(6), 807-810 offenbart fluoreszierende Mesogene mit Benzopyran-4[H]-on-gruppen. Die Verwendung von polymerisierbaren Cumarinderivaten in niedermolekularen FK-Medien zur schnellen Einstellung eines Tiltwinkels durch in situ-Polymerisation im elektrischen Feld wurde im Stand der Technk jedoch bisher weder beschrieben noch vorgeschlagen.

Gegenstand der Erfindung ist somit ein FK-Medium enthaltend
- eine polymerisierbare Komponente A), enthaltend eine oder mehrere polymerisierbare Verbindungen der Formel I, sowie
- eine flüssigkristalline Komponente B), im Folgenden auch als "FK-Hostmischung" bezeichnet, enthaltend eine oder mehrere, vorzugsweise zwei oder mehr niedermolekulare (monomere und unpolymerisierbare) Verbindungen wie vor- und nachstehend beschrieben. 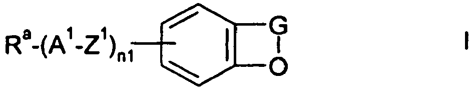
worin die einzelnen Reste folgende Bedeutung besitzen
- G: -CM=CR^{c}-CO- oder -CO-CM=CR^{c}-,
- M: -(Z²-A²)ₙ₂-R^{b},
- A¹ und A²: jeweils unabhängig voneinander eine aromatische, heteroaromatische, alicyclische oder heterocyclische Gruppe, vorzugsweise mit 4 bis 25 C-Atomen, welche auch anellierte Ringe enthalten kann, und welche optional durch L ein- oder mehrfach substituiert ist,
- Z¹: bei jedem Auftreten gleich oder verschieden -O-, -S-, -CO-, - CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₃-, -CF₂CH₂-, - CH₂CF₂-, -(CF₂)ₙ₃-, -CH=CH-, -CF=CF-, -CH=CF-, -CF=CH-, -C≡C-, -CH=CH-COO-, -OCO-CH=CH-, -CH₂-CH₂-COO-, - OCO-CH₂-CH₂-, -CR⁰R⁰⁰- oder eine Einfachbindung,
- R^{a-c}: P, P-Sp-, H, F, Cl, Br, I, -CN, -NO₂, -NCO, -NCS, -OCN, - SCN, SF₅ oder geradkettiges oder verzweigtes Alkyl mit 1 bis 25 C-Atomen, worin auch eine oder mehrere nicht benachbarte CH₂-Gruppen jeweils unabhängig voneinander durch -C(R⁰⁰)=C(R⁰⁰⁰)-, -C≡C-, -N(R⁰⁰)-, -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, Br, I, CN oder P-Sp- ersetzt sein können, wobei mindestens einer der Reste R^{a} und R^{b} eine Gruppe P oder P-Sp- bedeutet oder enthält,
- P: bei jedem Auftreten gleich oder verschieden eine polymerisierbare Gruppe,
- Sp: bei jedem Auftreten gleich oder verschieden eine Abstandsgruppe oder eine Einfachbindung,
- R⁰⁰ und R⁰⁰⁰: jeweils unabhängig voneinander H oder Alkyl mit 1 bis 12 C-Atomen,
- L: bei jedem Auftreten gleich oder verschieden P-Sp-, H, OH, CH₂OH, Halogen, SF₅, NO₂, eine Kohlenstoffgruppe oder Kohlenwasserstoffgruppe,
- n1 und n2: jeweils unabhängig voneinander 0, 1, 2 oder 3,
- n3: 1, 2, 3 oder 4,

Ein weiter Gegenstand der Erfindung ist die Verwendung von Verbindungen der Formel I oder von erfindungsgemäßen FK-Medium in FK-Anzeigen des PS-(polymer stabilized) oder PSA-(polymer sustained alignment) Typs.

Ein weiterer Gegenstand der Erfindung ist ein FK-Medium enthaltend eine oder mehrere polymerisierbare Verbindungen der Formel I und eine oder mehrere zusätzliche Verbindungen, welche auch mesogen, flüssigkristallin und/oder polymerisierbar sein können.

Ein weiterer Gegenstand der Erfindung ist ein FK-Medium enthaltend ein Polymer erhältlich durch Polymerisation einer oder mehrerer Verbindungen der Formel I und eine oder mehrere zusätzliche Verbindungen, welche auch mesogen, flüssigkristallin und/oder polymerisierbar sein können.

Ein weiterer Gegenstand der Erfindung ist die Verwendung von Verbindungen der Formel I und erfindungsgemäßen FK-Medien in PS- und PSA-Anzeigen, insbesondere die Verwendung in PS- und PSA-Anzeigen enthaltend ein FK-Medium, zur Erzeugung eines Tiltwinkels im FK-Medium durch in situ-Polymerisation der Verbindung(en) der Formel I in der PSA-Anzeige, vorzugsweise unter Anlegen eines elektrischen oder magnetischen Feldes.

Ein weiterer Gegenstand der Erfindung ist eine FK-Anzeige enthaltend eine oder mehrere Verbindungen der Formel I oder ein erfindungsgemäßes FK-Medium, insbesondere eine PS- oder PSA-Anzeige, besonders bevorzugt eine PSA-VA-, PSA-OCB-, PS-IPS-, PS-FFS- oder PS-TN-Anzeige.

Ein weiterer Gegenstand der Erfindung ist eine FK-Anzeige des PS- oder PSA-Typs, enthaltend eine FK-Zelle mit zwei Substraten und zwei Elektroden, wobei mindestens ein Substrat lichtdurchlässig ist und mindestens ein Substrat eine oder zwei Elektroden aufweist, sowie einer zwischen den Substraten befindlichen Schicht eines FK-Mediums enthaltend eine polymerisierte Komponente und eine niedermolekulare Komponente, wobei die polymerisierte Komponente erhältlich ist durch Polymerisation einer oder mehrerer polymerisierbarer Verbindungen zwischen den Substraten der FK-Zelle im FK-Medium, vorzugsweise unter Anlegen einer elektrischen Spannung an die Elektroden, wobei mindestens eine der polymerisierbaren Verbindungen aus Formel I ausgewählt ist.

Ein weiterer Gegenstand der Erfindung ist ein Verfahren zur Herstellung eines FK-Mediums wie vor- und nachstehend beschrieben, indem man eine oder mehrere niedermolekulare flüssigkristalline Verbindungen, oder eine FK-Hostmischung wie vor- und nachstehend beschrieben, mit einer oder mehreren polymerisierbaren Verbindungen der Formel I oder deren Unterformeln, und gegebenenfalls mit weiteren flüssigkristallinen Verbindungen und/oder Additiven, mischt.

Ein weiterer Gegenstand der Erfindung ist ein Verfahren zur Herstellung einer FK-Anzeige wie vor- und nachstehend beschrieben, indem man eine oder mehrere niedermolekulare flüssigkristalline Verbindungen, oder eine FK-Hostmischung wie vor- und nachstehend beschrieben, mit einer oder mehreren polymerisierbaren Verbindungen der Formel I oder deren Unterformeln, und gegebenenfalls mit weiteren flüssigkristallinen Verbindungen und/oder Additiven, mischt, die Mischung in eine FK-Zelle mit zwei Substraten und zwei Elektroden wie vor- und nachstehend beschrieben füllt, und die polymerisierbaren Verbindungen, vorzugsweise unter Anlegen einer elektrischen Spannung an die Elektroden, polymerisiert.

Die erfindungsgemäßen PS- und PSA-Anzeigen weisen zwei Elektroden, vorzugsweise in Form von transparenten Schichten, auf, wobei diese auf einem oder beiden der Substrate aufgebracht sind, die die FK-Zelle bilden. Dabei ist entweder jeweils eine Elektrode auf je einem der beiden Substrate aufgebracht, wie zum Beispiel in erfindungsgemäßen PSA-VA-, PSA-OCB- oder PSA-TN-Anzeigen, oder beide Elektroden sind auf nur einem der beiden Substrate aufgebracht, während das andere Substrat keine Elektrode aufweist, wie zum Beispiel in erfindungsgemäßen PSA-IPS- oder PSA-FFS-Anzeigen.

Weiterer Gegenstand der Erfindung sind neue Verfahren zur Herstellung von Verbindungen der Formel I sowie in diesen Verfahren verwendete oder daraus erhaltene neue Zwischenprodukte.

Weiterer Gegenstand der Erfindung sind neue Verbindungen der Formel I.

Vor- und nachstehend gelten folgende Bedeutungen:

Der Begriff "PSA" wird, falls nicht anders angegeben, stellvertretend für PS-Anzeigen und PSA-Anzeigen verwendet.

Die Begriffe "Tilt" und "Tiltwinkel" beziehen sich auf eine gekippte oder geneigte Orientierung der FK-Moleküle eines FK-Mediums relativ zu den Oberflächen der Zelle in einer FK-Anzeige (hier vorzugsweise einer PS- oder PSA-Anzeige). Der Tiltwinkel bezeichnet dabei den durchschnittlichen Winkel (<90°) zwischen den Moleküllängsachsen der FK-Moleküle (FK-Direktor) und der Oberfläche der planparallelen Trägerplatten, welche die FK-Zelle bilden. Ein niedriger Wert des Tiltwinkels (d.h. eine große Abweichung vom 90°-Winkel) entspricht dabei einem großen Tilt. Eine geeignete Methode zur Messung des Tiltwinkels findet sich in den Beispielen. Soweit nicht anders angegeben, beziehen sich vor- und nachstehend offenbarte Werte des Tiltwinkels auf diese Messmethode.

Der Begriff "mesogene Gruppe" ist dem Fachmann bekannt und in der Literatur beschrieben, und bedeutet eine Gruppe, die durch die Anisotropie ihrer anziehenden und abstoßenden Wechselwirkungen wesentlich dazu beiträgt, in niedermolekularen oder polymeren Substanzen eine Flüssigkristall(FK-)Phase hervorzurufen. Verbindungen enthaltend mesogene Gruppen (mesogene Verbindungen) müssen nicht unbedingt selbst eine FK-Phase aufweisen. Es ist auch möglich, dass mesogene Verbindungen FK-Phasenverhalten nur nach Vermischung mit anderen Verbindungen und/oder nach Polymerisation zeigen. Typische mesogene Gruppen sind beispielsweise starre stäbchen- oder scheibchenförmige Einheiten. Ein Überblick über die im Zusammenhang mit mesogenen bzw. FK-Verbindungen verwendeten Begriffe und Definitionen findet sich in Pure Appl. Chem. 73(5), 888 (2001) und C. Tschierske, G. Pelzl, S. Diele, Angew. Chem. 2004, 116, 6340-6368.

Der Begriff "Abstandsgruppe" (engl. "spacer" oder "spacer group"), vor- und nachstehend auch als "Sp" bezeichnet, ist dem Fachmann bekannt und in der Literatur beschrieben, siehe beispielsweise Pure Appl. Chem. 73(5), 888 (2001) und C. Tschierske, G. Pelzl, S. Diele, Angew. Chem. 2004, 116, 6340-6368. Falls nicht anders angegeben, bezeichnet der Begriff "Abstandsgruppe" bzw. "Spacer" vor- und nachstehend eine flexible Gruppe, die in einer polymerisierbaren mesogenen Verbindung die mesogene Gruppe und die polymerisierbare(n) Gruppe(n) miteinander verbindet.

Der Begriff "reaktives Mesogen" oder "RM" bezeichnet eine Verbindung enthaltend eine mesogene Gruppe und eine oder mehrere funktionelle Gruppen, die zur Polymerisation geeignet sind (auch als polymerisierbare Gruppe oder Gruppe P bezeichnet).

Die Begriffe "niedermolekulare Verbindung" und "unpolymerisierbare Verbindung" bezeichnen, üblicherweise monomere, Verbindungen, die keine funktionelle Gruppe aufweisen, welche zur Polymerisation unter den üblichen dem Fachmann bekannten Bedingungen, insbesondere unter den zur Polymerisation der RMs verwendeten Bedingungen, geeignet ist.

Der Begriff "organische Gruppe" bedeutet eine Kohlenstoff- oder Kohlenwasserstoffgruppe.

Der Begriff "Kohlenstoffgruppe" bedeutet eine ein- oder mehrbindige organische Gruppe enthaltend mindestens ein Kohlenstoffatom, wobei diese entweder keine weiteren Atome enthält (wie z.B. -C≡C-), oder gegebenenfalls ein oder mehrere weitere Atome wie beispielsweise N, O, S, P, Si, Se, As, Te oder Ge enthält (z.B. Carbonyl etc.). Der Begriff "Kohlenwasserstoffgruppe" bedeutet eine Kohlenstoffgruppe, die zusätzlich ein oder mehrere H-Atome und gegebenenfalls ein oder mehrere Heteroatome wie beispielsweise N, O, S, P, Si, Se, As, Te oder Ge enthält.

"Halogen" bedeutet F, Cl, Br oder I.

Eine Kohlenstoff- oder Kohlenwasserstoffgruppe kann eine gesättigte oder ungesättigte Gruppe sein. Ungesättigte Gruppen sind beispielsweise Aryl-, Alkenyl- oder Alkinylgruppen. Ein Kohlenstoff- oder Kohlenwasserstoffrest mit mehr als 3 C-Atomen kann geradkettig, verzweigt und/oder cyclisch sein, und kann auch Spiroverküpfungen oder kondensierte Ringe aufweisen.

Die Begriffe "Alkyl", "Aryl", "Heteroaryl" etc. umfassen auch mehrbindige Gruppen, beispielsweise Alkylen, Arylen, Heteroarylen etc.

Der Begriff "Aryl" bedeutet eine aromatische Kohlenstoffgruppe oder eine davon abgeleitete Gruppe. Der Begriff "Heteroaryl" bedeutet "Aryl" gemäß vorstehender Definition, enthaltend ein oder mehrere Heteroatome.

Bevorzugte Kohlenstoff- und Kohlenwasserstoffgruppen sind gegebenenfalls substituiertes Alkyl, Alkenyl, Alkinyl, Alkoxy, Alkylcarbonyl, Alkoxycarbonyl, Alkylcarbonyloxy und Alkoxycarbonyloxy mit 1 bis 40, vorzugsweise 1 bis 25, besonders bevorzugt 1 bis 18 C-Atomen, gegebenenfalls substituiertes Aryl oder Aryloxy mit 6 bis 40, vorzugsweise 6 bis 25 C-Atomen, oder gegebenenfalls substituiertes Alkylaryl, Arylalkyl, Alkylaryloxy, Arylalkyloxy, Arylcarbonyl, Aryloxycarbonyl, Arylcarbonyloxy und Aryloxycarbonyloxy mit 6 bis 40, vorzugsweise 6 bis 25 C-Atomen.

Weitere bevorzugte Kohlenstoff- und Kohlenwasserstoffgruppen sind C₁-C₄₀ Alkyl, C₂-C₄₀ Alkenyl, C₂-C₄₀ Alkinyl, C₃-C₄₀ Allyl, C₄-C₄₀ Alkyldienyl, C₄-C₄₀ Polyenyl, C₆-C₄₀ Aryl, C₆-C₄₀ Alkylaryl, C₆-C₄₀ Arylalkyl, C₆-C₄₀ Alkylaryloxy, C₆-C₄₀ Arylalkyloxy, C₂-C₄₀ Heteroaryl, C₄-C₄₀ Cycloalkyl, C₄-C₄₀ Cycloalkenyl, etc. Besonders bevorzugt sind C₁-C₂₂ Alkyl, C₂-C₂₂ Alkenyl, C₂-C₂₂ Alkinyl, C₃-C₂₂ Allyl, C₄-C₂₂ Alkyldienyl, C₆-C₁₂ Aryl, C₆-C₂₀ Arylalkyl und C₂-C₂₀ Heteroaryl.

Weitere bevorzugte Kohlenstoff- und Kohlenwasserstoffgruppen sind geradkettige, verzweigte oder cyclische Alkylreste mit 1 bis 40, vorzugsweise 1 bis 25 C-Atomen, welche unsubstituiert oder durch F, Cl, Br, I oder CN ein- oder mehrfach substituiert sind, und worin ein mehrere nicht benachbarte CH₂-Gruppen jeweils unabhängig voneinander durch - C(R^{x})=C(R^{x})-, -C≡C-, -N(R^{x})-, -O-, -S-, -CO-, -CO-O-, -O-CO-, -O-CO-O-so ersetzt sein können, dass O- und/oder S-Atome nicht direkt miteinander verknüpft sind.

R^{x} bedeutet vorzugsweise H, Halogen, eine geradkettige, verzweigte oder cyclische Alkylkette mit 1 bis 25 C-Atomen, in der auch ein oder mehrere nicht benachbarte C-Atome durch -O-, -S-, -CO-, -CO-O-, -O-CO-, -O-CO-O- ersetzt sein können, wobei auch ein oder mehrere H-Atome durch Fluor ersetzt sein können, eine optional substituierte Aryl- oder Aryloxygruppe mit 6 bis 40 C-Atomen, oder eine optional substituierte Heteroaryl- oder Heteroaryloxygruppe mit 2 bis 40 C-Atomen.

Bevorzugte Alkoxygruppen sind beispielsweise Methoxy, Ethoxy, 2-Methoxyethoxy, n-Propoxy, i-Propoxy, n-Butoxy, i-Butoxy, s-Butoxy, t-Butoxy, 2-Methylbutoxy, n-Pentoxy, n-Hexoxy, n-Heptoxy, n-Octoxy, n-Nonoxy, n-Decoxy, n-Undecoxy, n-Dodecoxy, etc.

Bevorzugte Alkylgruppen sind beispielsweise Methyl, Ethyl, n-Propyl, Isopropyl, n-Butyl, Isobutyl, s-Butyl, t-Butyl, 2-Methylbutyl, n-Pentyl, s-Pentyl, Cyclopentyl, n-Hexyl, Cyclohexyl, 2-Ethylhexyl, n-Heptyl, Cycloheptyl, n-Octyl, Cyclooctyl, n-Nonyl, n-Decyl, n-Undecyl, n-Dodecyl, Dodecanyl, Trifluoromethyl, Perfluoro-n-butyl, 2,2,2-Trifluoroethyl, Perfluorooctyl, Perfluorohexyl etc.

Bevorzugte Alkenylgruppen sind beispielsweise Ethenyl, Propenyl, Butenyl, Pentenyl, Cyclopentenyl, Hexenyl, Cyclohexenyl, Heptenyl, Cycloheptenyl, Octenyl, Cyclooctenyl etc.

Bevorzugte Alkinylgruppen sind beispielsweise Ethinyl, Propinyl, Butinyl, Pentinyl, Hexinyl, Octinyl etc.

Bevorzugte Alkoxygruppen sind beispielsweise Methoxy, Ethoxy, 2-Methoxyethoxy, n-Propoxy, i-Propoxy, n-Butoxy, i-Butoxy, s-Butoxy, t-Butoxy, 2-Methylbutoxy, n-Pentoxy, n-Hexoxy, n-Heptoxy, n-Octoxy, n-Nonoxy, n-Decoxy, n-Undecoxy, n-Dodecoxy, etc.

Bevorzugte Aminogruppen sind beispielsweise Dimethylamino, Methylamino, Methylphenylamino, Phenylamino, etc.

Aryl- und Heteroarylgruppen können einkernig oder mehrkernig sein, d.h. sie können einen Ring (wie z.B. Phenyl) oder zwei oder mehr Ringe aufweisen, welche auch anelliert (wie z.B. Naphthyl) oder kovalent verknüpft sein können (wie z.B. Biphenyl), oder eine Kombination von anellierten und verknüpften Ringen beinhalten. Heteroarylgruppen enthalten ein oder mehrere Heteroatome, vorzugsweise ausgewählt aus O, N, S und Se.

Besonders bevorzugt sind ein-, zwei- oder dreikernige Arylgruppen mit 6 bis 25 C-Atomen sowie ein-, zwei- oder dreikernige Heteroarylgruppen mit 2 bis 25 C-Atomen, welche optional anellierte Ringe enthalten und optional substituiert sind. Ferner bevorzugt sind 5-, 6- oder 7-gliedrige Aryl- und Heteroarylgruppen, worin auch eine oder mehrere CH-Gruppen durch N, S oder O so ersetzt sein können, dass O-Atome und/oder S-Atome nicht direkt miteinander verknüpft sind.

Bevorzugte Arylgruppen sind beispielsweise Phenyl, Biphenyl, Terphenyl, [1,1':3',1"]Terphenyl-2'-yl, Naphthyl, Anthracen, Binaphthyl, Phenanthren, Pyren, Dihydropyren, Chrysen, Perylen, Tetracen, Pentacen, Benzpyren, Fluoren, Inden, Indenofluoren, Spirobifluoren, etc.

Bevorzugte Heteroarylgruppen sind beispielsweise 5-gliedrige Ringe wie Pyrrol, Pyrazol, Imidazol, 1,2,3-Triazol, 1,2,4-Triazol, Tetrazol, Furan, Thiophen, Selenophen, Oxazol, Isoxazol, 1,2-Thiazol, 1,3-Thiazol, 1,2,3-Oxadiazol, 1,2,4-Oxadiazol, 1,2,5-Oxadiazol, 1,3,4-Oxadiazol, 1,2,3-Thiadiazol, 1,2,4-Thiadiazol, 1,2,5-Thiadiazol, 1,3,4-Thiadiazol, 6-gliedrige Ringe wie Pyridin, Pyridazin, Pyrimidin, Pyrazin, 1,3,5-Triazin, 1,2,4-Triazin, 1,2,3-Triazin, 1,2,4,5-Tetrazin, 1,2,3,4-Tetrazin, 1,2,3,5-Tetrazin, oder kondensierte Gruppen wie Indol, Isoindol, Indolizin, Indazol, Benzimidazol, Benzotriazol, Purin, Naphthimidazol, Phenanthrimidazol, Pyridimidazol, Pyrazinimidazol, Chinoxalinimidazol, Benzoxazol, Naphthoxazol, Anthroxazol, Phenanthroxazol, Isoxazol, Benzothiazol, Benzofuran, Isobenzofuran, Dibenzofuran, Chinolin, Isochinolin, Pteridin, Benzo-5,6-chinolin, Benzo-6,7-chinolin, Benzo-7,8-chinolin, Benzoisochinolin, Acridin, Phenothiazin, Phenoxazin, Benzopyridazin, Benzopyrimidin, Chinoxalin, Phenazin, Naphthyridin, Azacarbazol, Benzocarbolin, Phenanthridin, Phenanthrolin, Thieno[2,3b]thiophen, Thieno[3,2b]thiophen, Dithienothiophen, Isobenzothiophen, Dibenzothiophen, Benzothiadiazothiophen, oder Kombinationen dieser Gruppen. Die Heteroarylgruppen können auch mit Alkyl, Alkoxy, Thioalkyl, Fluor, Fluoralkyl oder weiteren Aryl- oder Heteroarylgruppen substituiert sein.

Die (nicht-aromatischen) alicyclischen und heterocyclischen Gruppen umfassen sowohl gesättigte Ringe, d.h. solche die ausschließlich Einfachbindungen enthalten, als auch teilweise ungesättigte Ringe, d.h. solche die auch Mehrfachbindungen enthalten können. Heterocyclische Ringe enthalten ein oder mehrere Heteroatome, vorzugsweise ausgewählt aus Si, O, N, S und Se.

Die (nicht-aromatischen) alicyclischen und heterocyclischen Gruppen können einkernig sein, d.h. nur einen Ring enthalten (wie z.B. Cyclohexan), oder mehrkernig sein, d.h. mehrere Ringe enthalten (wie z.B. Decahydronaphthalin oder Bicyclooctan). Besonders bevorzugt sind gesättigte Gruppen. Ferner bevorzugt sind ein-, zwei- oder dreikernige Gruppen mit 3 bis 25 C-Atomen, welche optional anellierte Ringe enthalten und optional substituiert sind. Ferner bevorzugt sind 5-, 6-, 7- oder 8-gliedrige carbocyclische Gruppen worin auch ein oder mehrere C-Atome durch Si ersetzt sein können und/oder eine oder mehrere CH-Gruppen durch N ersetzt sein können und/oder eine oder mehrere nicht-benachbarte CH₂-Gruppen durch -O- und/oder -S- ersetzt sein können.

Bevorzugte alicyclische und heterocyclische Gruppen sind beispielsweise 5-gliedrige Gruppen wie Cyclopentan, Tetrahydrofuran, Tetrahydrothiofuran, Pyrrolidin, 6-gliedrige Gruppen wie Cyclohexan, Silinan, Cyclohexen, Tetrahydropyran, Tetrahydrothiopyran, 1,3-Dioxan, 1,3-Dithian, Piperidin, 7- gliedrige Gruppen wie Cycloheptan, und anellierte Gruppen wie Tetrahydronaphthalin, Decahydronaphthalin, Indan, Bicyclo[1.1.1]pentan-1,3-diyl, Bicyclo[2.2.2]octan-1,4-diyl, Spiro[3.3]heptan-2,6-diyl, Octahydro-4,7-methano-indan-2,5-diyl.

Bevorzugte Substituenten sind beispielsweise löslichkeitsfördernde Gruppen wie Alkyl oder Alkoxy, elektronenziehende Gruppen wie Fluor, Nitro oder Nitril, oder Substituenten zur Erhöhung der Glastemperatur (Tg) im Polymer, insbesondere voluminöse Gruppen wie z.B. t-Butyl oder gegebenenfalls substituierte Arylgruppen.

Bevorzugte Substituenten, vor- und nachstehend auch als "L" bezeichnet, sind beispielsweise F, Cl, Br, I, -CN, -NO₂ , -NCO, -NCS, -OCN, -SCN, - C(=O)N(R^{x})₂, -C(=O)Y¹, -C(=O)R^{x}, -N(R^{x})₂, worin R^{x} die oben angegebene Bedeutung hat und Y¹ Halogen bedeutet, optional substituiertes Silyl oder Aryl mit 6 bis 40, vorzugsweise 6 bis 20 C Atomen, und geradkettiges oder verzweigtes Alkyl, Alkoxy, Alkylcarbonyl, Alkoxycarbonyl, Alkylcarbonyloxy oder Alkoxycarbonyloxy mit 1 bis 25 C-Atomen, worin ein oder mehrere H-Atome gegebenenfalls durch F oder Cl ersetzt sein können.

"Substituiertes Silyl oder Aryl" bedeutet vorzugsweise durch Halogen, - CN, R⁰, -OR⁰, -CO-R⁰, -CO-O-R⁰, -O-CO-R⁰ oder -O-CO-O-R⁰ substituiert, worin R⁰ die oben angegebene Bedeutung hat.

Besonders bevorzugte Substituenten L sind beispielsweise F, Cl, CN, NO₂, CH₃, C₂H₅, OCH₃, OC₂H₅, COCH₃, COC₂H₅, COOCH₃, COOC₂H₅, CF₃, OCF₃, OCHF₂, OC₂F₅, ferner Phenyl. 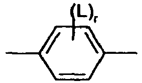 ist vorzugsweise 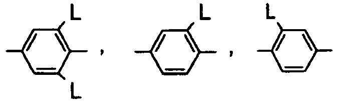 oder 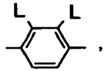 worin L eine der oben angegebenen Bedeutungen hat.

Die polymerisierbare Gruppe P ist eine Gruppe, die für eine Polymerisationsreaktion, wie beispielsweise die radikalische oder ionische Kettenpolymerisation, Polyaddition oder Polykondensation, oder für eine polymeranaloge Umsetzung, beispielsweise die Addition oder Kondensation an eine Polymerhauptkette, geeignet ist. Besonders bevorzugt sind Gruppen für die Kettenpolymerisation, insbesondere solche enthaltend eine C=C-Doppelbindung oder -C≡C-Dreifachbindung, sowie zur Polymerisation unter Ringöffnung geeignete Gruppen wie beispielsweise Oxetan- oder Epoxygruppen

Bevorzugte Gruppen P sind ausgewählt aus CH₂=CW¹-COO-, CH₂=CW¹-CO-, 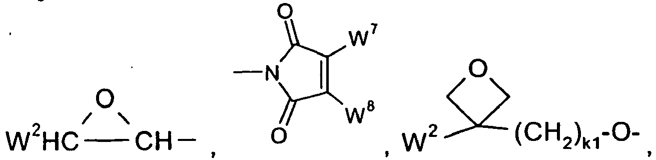 CH₂=CW²-(O)ₖ₃-, CW¹=CH-CO-(O)ₖ₃-, CW¹=CH-CO-NH-, CH₂=CW¹-CO-NH-, CH₃-CH=CH-O-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, HO-CW²W³-, HS-CW2W³-, HW²N-, HO-CW²W³-NH-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH-, HOOC-, OCN-, und W⁴W⁵W⁶Si-, worin W¹ H, F, Cl, CN, CF₃, Phenyl oder Alkyl mit 1 bis 5 C-Atomen, insbesondere H, F, Cl oder CH₃ bedeutet, W² und W³ jeweils unabhängig voneinander H oder Alkyl mit 1 bis 5 C-Atomen, insbesondere H, Methyl, Ethyl oder n-Propyl bedeuten, W⁴, W⁵ und W⁶ jeweils unabhängig voneinander Cl, Oxaalkyl oder Oxacarbonylalkyl mit 1 bis 5 C-Atomen bedeuten, W⁷ und W⁸ jeweils unabhängig voneinander H, Cl oder Alkyl mit 1 bis 5 C-Atomen bedeuten, Phe 1,4-Phenylen bedeutet, welches optional mit einem oder mehreren, von P-Sp- verschiedenen Resten L wie oben definiert substiuiert ist, k₁, k₂ und k₃ jeweils unabhängig voneinander 0 oder 1 bedeuten, k₃ vorzugsweise 1 bedeutet.

Besonders bevorzugte Gruppen P sind CH₂=CW¹-COO-, insbesondere CH₂=CH-COO-, CH₂=C(CH₃)-COO- und CH₂=CF-COO-, ferner CH₂=CH-O-, (CH₂=CH)₂CH-OCO-, (CH₂=CH)₂CH-O-, 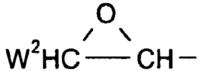 und

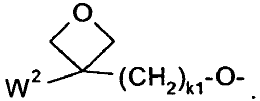

Ganz besonders bevorzugte Gruppen P sind Vinyloxy, Acrylat, Methacrylat, Fluoracrylat, Chloracrylat, Oxetan und Epoxy, insbesondere Acrylat und Methacrylat.

Bevorzugte Abstandsgruppen Sp sind ausgewählt aus der Formel Sp'-X', so dass der Rest P-Sp- der Formel P-Sp'-X'- entspricht, wobei
- Sp': Alkylen mit 1 bis 20, vorzugsweise 1 bis 12 C-Atomen bedeutet, welches optional durch F, Cl, Br, I oder CN ein- oder mehrfach substituiert ist, und worin auch eine oder mehrere nicht benachbarte CH₂-Gruppen jeweils unabhängig voneinander so durch -O-, -S-, - NH-, -NR⁰-, -SiR⁰⁰R⁰⁰⁰-, -CO-, -COO-, -OCO-, -OCO-O-, -S-CO-, - CO-S-, -NR⁰⁰-CO-O-, -O-CO-NR⁰⁰-, -NR⁰⁰-CO-NR⁰⁰-, -CH=CH- oder -C≡C- ersetzt sein können, dass O- und/oder S-Atome nicht direkt miteinander verknüpft sind,
- X': -O-, -S-, -CO-, -COO-, -OCO-, -O-COO-, -CO-NR⁰⁰-, -NR⁰⁰-CO-, - NR⁰⁰-CO-NR⁰⁰-, -OCH₂-, -CH₂O-, -SCH₂-, -CH₂S-, -CF₂O-, -OCF₂-, - CF₂S-, -SCF₂-, -CF₂CH₂-, -CH₂CF₂-, -CF₂CF₂-, -CH=N-, -N=CH-, - N=N-, -CH=CR⁰-, -CY²=CY³-, -C≡C-, -CH=CH-COO-, -OCO-CH=CH- oder eine Einfachbindung bedeutet,
- R⁰⁰ und R⁰⁰⁰: jeweils unabhängig voneinander H oder Alkyl mit 1 bis 12 C-Atomen bedeuten, und
- Y² und Y³: jeweils unabhängig voneinander H, F, Cl oder CN bedeuten.

X' ist vorzugsweise -O-, -S -CO-, -COO-, -OCO-, -O-COO-, -CO-NR⁰-, - NR⁰-CO-, -NR⁰-CO-NR⁰- oder eine Einfachbindung.

Typische Abstandsgruppen Sp' sind beispielsweise -(CH₂)ₚ₁-, -(CH₂CH₂O)_{q1} - CH₂CH₂-, -CH₂CH₂-S-CH₂CH₂-, -CH₂CH₂-NH-CH₂CH₂- oder -(SiR⁰⁰R⁰⁰⁰-O)ₚ₁-, worin p1 eine ganze Zahl von 1 bis 12 ist, q1 eine ganze Zahl von 1 bis 3 ist, und R⁰⁰ und R⁰⁰⁰ die oben angegebenen Bedeutungen besitzen.

Besonders bevorzugte Gruppen -Sp'-X'- sind -(CH₂)ₚ₁-, -(CH₂)ₚ₁-O-, -(CH₂)ₚ₁-OCO-, -(CH₂)ₚ₁-OCOO-, worin p1 und q1 die oben angebene Bedeutung haben.

Besonders bevorzugte Gruppen Sp' sind beispielsweise jeweils geradkettiges Ethylen, Propylen, Butylen, Pentylen, Hexylen, Heptylen, Octylen, Nonylen, Decylen, Undecylen, Dodecylen, Octadecylen, Ethylenoxyethylen, Methylenoxybutylen, Ethylenthioethylen, Ethylen-N-methyl-iminoethylen, 1-Methylalkylen, Ethenylen, Propenylen und Butenylen.

In einer weiteren bevorzugten Ausführungsform der Erfindung bedeuten R^{a} und/oder R^{b} in Formel I einen Rest mit zwei oder mehreren polymerisierbaren Gruppen (multifunktionelle polymerisierbare Reste). Geeignete Reste dieses Typs, sowie diese enthaltende polymerisierbare Verbindungen und ihre Herstellung sind beispielsweise in US 7,060,200 B1 oder US 2006/0172090 A1 beschrieben. Besonders bevorzugt sind multifunktionelle polymerisierbare Reste ausgewählt aus folgenden Formeln
- X-alkyl-CHP¹-CH₂-CH₂P² I*a
- X-alkyl-C(CH₂P¹)(CH₂P²)-CH₂P³ I*b
- X-alkyl-CHP¹CHP²-CH₂P³ I*c
- X-alkyl-C(CH₂P¹)(CH₂P²)-CₐₐH₂ₐₐ₊₁ I*d
- X-alkyl-CHP¹-CH₂P² I*e
- X-alkyl-CHP¹P² I*f
- X-alkyl-CP¹P²-CₐₐH₂ₐₐ₊₁ I*9
- X-alkyl-C(CH₂P¹)(CH₂P²)-CH₂OCH₂-C(CH₂P³)(CH₂P⁴)CH₂P⁵ I*h
- X-alky)-CH((CH₂)ₐₐP¹)((CH₂)_{bb}P²) I*i
- X-alkyl-CHP¹CHP²-CₐₐH₂ₐₐ₊₁ I*k
- X'-alkyl-C(CH₃)(CH₂P¹)(CH₂P²) I*m
worin
- alkyl: eine Einfachbindung oder geradkettiges oder verzweigtes Alkylen mit 1 bis 12 C-Atomen bedeutet, worin eine oder mehrere nicht benachbarte CH₂-Gruppen jeweils unabhängig voneinander durch -C(R⁰⁰)=C(R⁰⁰⁰)-, -C≡C-, -N(R⁰⁰)-, -O-, -S-, - CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl oder CN ersetzt sein können, wobei R⁰⁰ und R⁰⁰⁰ die oben angegebene Bedeutung haben,
- aa und bb: jeweils unabhängig voneinander 0, 1, 2, 3, 4, 5 oder 6 bedeuten,
- X: eine der für X' angegebenen Bedeutungen besitzt, und
- P¹⁻⁵: jeweils unabhängig voneinander eine der für P angegebenen Bedeutungen besitzen.

Besonders bevorzugte Verbindungen der Formel I sowie deren vor- und nachstehend angegebenen Unterformeln sind solche, worin
- A¹ und A²: jeweils unabhängig voneinander 1,4-Phenylen, Naphthalin-1,4-diyl oder Naphthalin-2,6-diyl, wobei in diesen Gruppen auch eine oder mehrere CH-Gruppen durch N ersetzt sein können, Cyclohexan-1,4-diyl, worin auch eine oder mehrere nicht-benachbarte CH₂-Gruppen durch O und/oder S ersetzt sein können, 1,4-Cyclohexenylen, Bicyclo[1.1.1]pentan-1,3-diyl, Bicyclo[2.2.2]octan-1,4-diyl, Spiro[3.3]heptan-2,6-diyl, Piperidin-1,4-diyl, Decahydronaphthalin-2,6-diyl, 1,2,3,4-Tetrahydronaphthalin-2,6-diyl, Indan-2,5-diyl oder Octahydro-4,7-methano-indan-2,5-diyl, wobei alle diese Gruppen unsubstituiert oder durch L ein- oder mehrfach substituiert sein können,
- L: P, P-Sp-, OH, CH₂OH, F, Cl, Br, I, -CN, -NO₂ , -NCO, -NCS, - OCN, -SCN, -C(=O)N(R^{x})₂, -C(=O)Y¹, -C(=O)R^{x}, -N(R^{x})₂, optional substituiertes Silyl, optional substituiertes Aryl mit 6 bis 20 C Atomen, geradkettiges oder verzweigtes Alkyl oder Alkoxy 1 bis 25 C-Atomen, oder geradkettiges oder verzweigtes Alkenyl, Alkinyl, Alkylcarbonyl, Alkoxycarbonyl, Alkylcarbonyloxy oder Alkoxycarbonyloxy mit 2 bis 25 C-Atomen, worin in allen diesen Gruppen auch ein oder mehrere H-Atome durch F, Cl, P oder P-Sp- ersetzt sein können,
- Y¹: Halogen, und
- R^{x}: P, P-Sp-, H, Halogen, geradkettiges, verzweigtes oder cyclisches Alkyl mit 1 bis 25 C-Atomen, worin auch eine oder mehrere nicht benachbarte CH₂-Gruppen durch -O-, -S-, - CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl oder P-Sp- ersetzt sein können,
bedeuten.

Weitere bevorzugte Verbindungen der Formel I sowie deren vor- und nachstehend angegebenen Unterformeln sind solche worin
- R^{a} und R^{b} gleiche oder verschiedene Reste P-Sp- bedeuten,
- R^{a} und R^{b} gleiche oder verschiedene Reste P-Sp- bedeuten, worin einer oder beide Reste Sp eine Einfachbindung bedeuten,
- einer der Reste R^{a} und R^{b} eine Gruppe P-Sp- bedeutet oder enthält, und der andere eine unpolymerisierbare Gruppe bedeutet, vorzugsweise ausgewählt aus geradkettigem oder verzweigtem Alkyl mit 1 bis 25 C-Atomen, worin auch eine oder mehrere nicht benachbarte CH₂-Gruppen jeweils unabhängig voneinander durch - C(R⁰⁰)=C(R⁰⁰⁰)-, -C≡C-, -N(R⁰⁰)-, -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, Br, I oder CN ersetzt sein können,
- R^{a} P-Sp- bedeutet,
- R^{b} P-Sp- bedeutet,
- R^{c} H, C₁₋₈-Alkyl oder C₁₋₈-Alkoxy bedeutet,
- Sp eine Einfachbindung bedeutet,
- Sp -(CH₂)ₚ₁-, -(CH₂)ₚ₁-O-, -(CH₂)ₚ₁-OCO-, oder -(CH₂)ₚ₁-OCOO-bedeutet, worin p1 eine ganze Zahl von 1 bis 12 und r1 eine ganze Zahl von 1 bis 8 bedeutet,
- L keine polymerisierbare Gruppe bedeutet oder enthält,
- A¹ und A² ausgewählt sind aus der Gruppe bestehend aus 1,4-Phenylen und Naphthalin-2,6-diyl, wobei in diesen Ringen auch eine oder zwei CH-Gruppen durch N ersetzt sein können, wobei diese Ringe ein- oder mehrfach durch L wie vor- und nachstehend beschrieben substituiert sein können,
- Z¹ und Z² ausgewählt sind aus der Gruppe bestehend aus -O-, -CO-O-, -OCO-, -OCH₂-, -CH₂O-, -CF₂O-, -OCF₂-, -CH₂CH₂-, -CH=CH-, - CF=CF-, -CH=CF-, -CF=CH-, -C≡C-, Einfachbindung,
- n1 0 oder 1, vorzugsweise 0 bedeutet,
- n2 0 bedeutet,
- n2 von 0 verschieden ist und vorzugsweise 1 oder 2, besonders bevorzugt 1 bedeutet,
- -(Z²-A²)ₙ₂- nicht -CO-C₆H₄- bedeutet (wobei C₆H₄ für 1,4-Phenylen steht),
- -(Z²-A²)ₙ₂-R^{b} nicht -CO-C₆H₅ bedeutet,
- L eine unpolymerisierbare Gruppe ist, vorzugsweise ausgewählt aus F, Cl, -CN und geradkettigem oder verzweigtem Alkyl mit 1 bis 25, besonders bevorzugt 1 bis 10 C-Atomen, worin auch eine oder mehrere nicht benachbarte CH₂-Gruppen jeweils unabhängig voneinander durch -C(R⁰⁰)=C(R⁰⁰⁰)-, -C≡C-, -N(R⁰⁰)-, -O-, -S-, -CO-, - CO-O-, -O-CO-, -O-CO-O- so ersetzt sein können, dass O- und/oder S-Atome nicht direkt miteinander verknüpft sind, und worin auch ein oder mehrere H-Atome durch F, Cl, Br, I oder CN ersetzt sein können.

Besonders bevorzugte Verbindungen der Formel I sind ausgewählt aus der Gruppe bestehend aus den folgenden Unterformeln 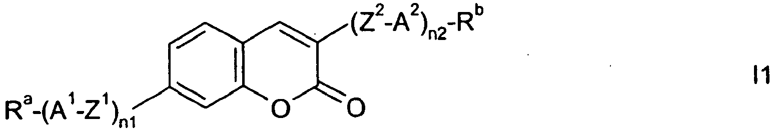 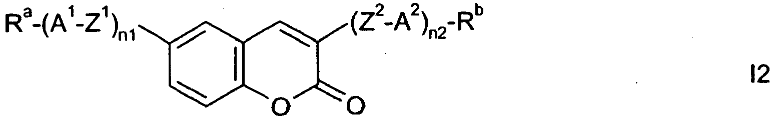 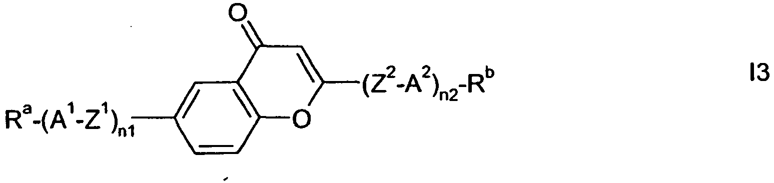 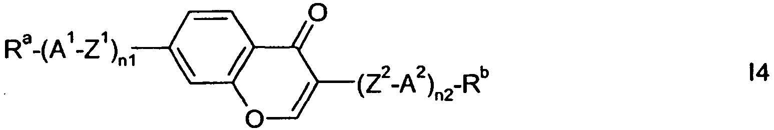 worin R^{a,b}, A^{1,2}, Z^{1,2}, n1 und n2 jeweils unabhängig voneinander eine der in Formel I oder vor- und nachstehend angegebenen Bedeutungen besitzen.

Die Gruppen -(A¹-Z¹)ₙ₁- und -(Z²-A²)ₙ₂- in den Verbindungen der Formeln I, I1, I2, I3 und I4 bedeuten vorzugsweise 1,4-Phenylen oder Naphthalin-2,6-diyl, wobei in diesen Ringen auch eine oder zwei CH-Gruppen durch N ersetzt sein können, und wobei diese auch Ringe ein- oder mehrfach durch L wie vor- und nachstehend beschrieben substituiert sein können.

Besonders bevorzugt sind solche Verbindungen der Formeln 11 bis 14, worin n1 und n2 0 bedeuten, sowie solche, worin einer der Indices n1 und n2, vorzugsweise n1, 0 und der andere 1 bedeutet.

Weiterhin besonders bevorzugt sind solche Verbindungen der Formeln I1 bis 14, worin die Reste R^{a} und R^{b} P-Sp- bedeuten, sowie solche, worin einer der Reste R^{a} und R^{b}, vorzugsweise R^{a}, P-Sp- bedeutet und der andere eine unpolymerisierbare Gruppe bedeutet, vorzugsweise ausgewählt aus geradkettigem oder verzweigtem Alkyl mit 1 bis 25 C-Atomen, worin auch eine oder mehrere nicht benachbarte CH₂-Gruppen jeweils unabhängig voneinander durch -C(R⁰⁰)=C(R⁰⁰⁰)-, -C≡C-, -N(R⁰⁰)-, - O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, Br, I oder CN ersetzt sein können.

Weiterhin besonders bevorzugt sind solche Verbindungen der Formeln I1 bis I4, worin beide Reste R^{a} und R^{b} P-Sp- bedeuten, wobei eine Gruppe Sp eine Einfachbindung bedeutet und die andere Gruppe Sp von einer Einfachbindung verschieden ist.

Ganz besonders bevorzugte Verbindungen der Formeln I1 bis I4 sind ausgewählt aus der Gruppe bestehend aus den folgenden Unterformeln 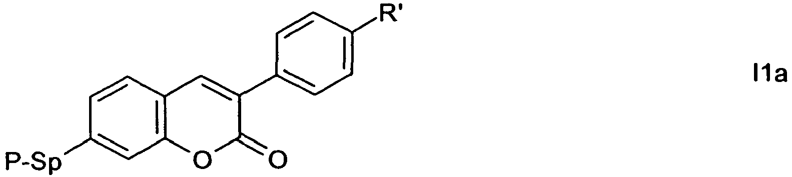 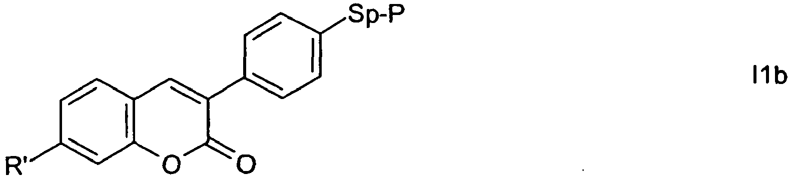 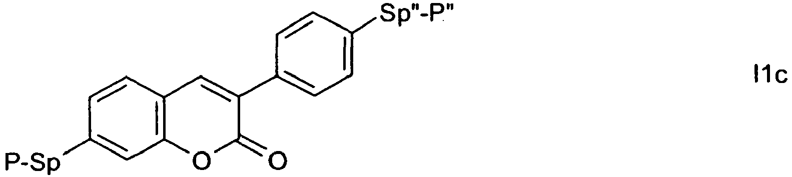 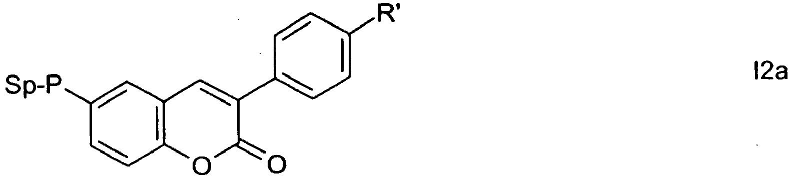 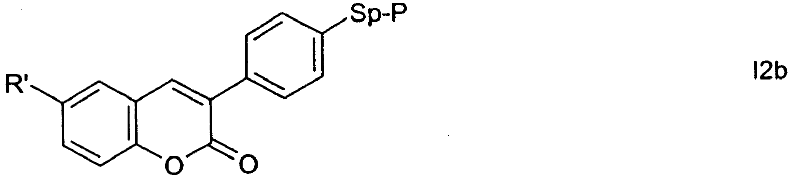 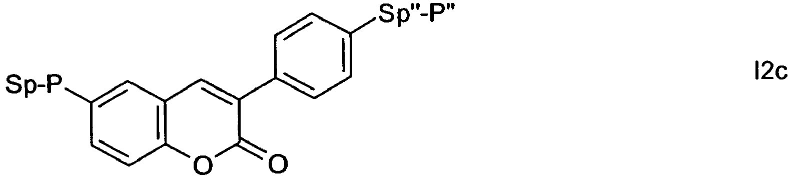 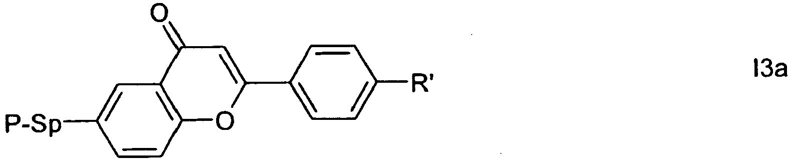 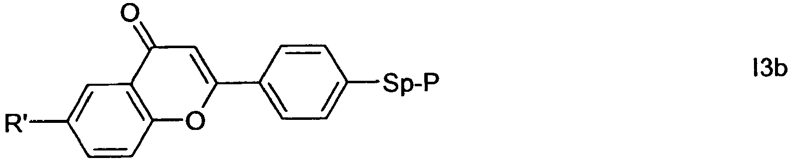 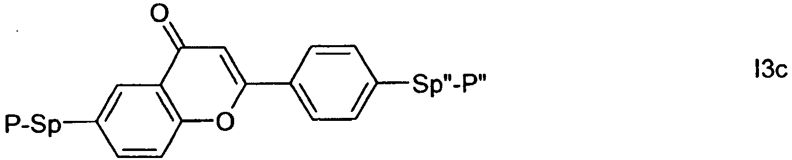 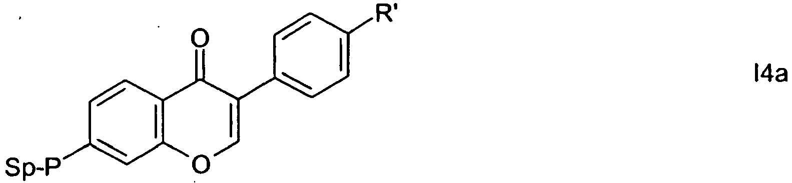 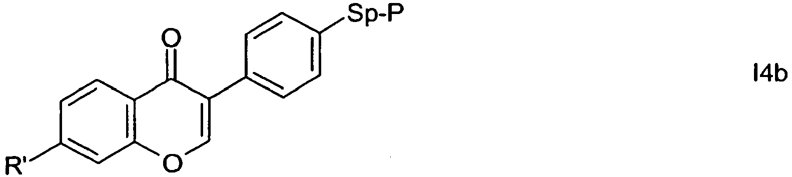 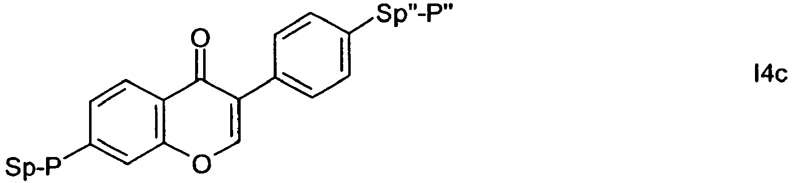 worin P und Sp eine der in Formel I oder vor- und nachstehend angegebenen Bedeutungen besitzen, P" eine der in Formel I oder vor- und nachstehend für P angegebenen Bedeutungen besitzt, Sp" eine der in Formel I oder vor- und nachstehend für Sp angegebenen Bedeutungen besitzt, und R eine der in Formel I oder vor- und nachstehend für R^{a} angegebenen Bedeutungen besitzt, wobei R' von H verschieden ist und keine Gruppe P-Sp- bedeutet oder enthält.

P und P" bedeuten in den Verbindungen der Formeln I, I1 bis 14 sowie deren Unterformeln vorzugsweise eine Acrylat-, Fluoracrylat- oder Methacrylatgruppe.

Sp und Sp" bedeuten Verbindungen der Formeln I, I1 bis 14 sowie deren Unterformeln vorzugsweise -(CH₂)ₚ₁-, -O-(CH₂)ₚ₁-, -(CH₂)ₚ₁-O-, -OCO-(CH₂)ₚ₁-, -(CH₂)ₚ₁-OCO-, -OCOO-(CH₂)ₚ₁- oder -(CH₂)ₚ₁-OCOO-, worin p1 eine ganze Zahl von 1 bis 12, vorzugsweiswe von 1 bis 6, und r1 eine ganze Zahl von 1 bis 8, vorzugsweise 1, 2 oder 3 bedeuten, wobei diese Gruppen so mit P oder P" verknüpft sind, dass O-Atome nicht direkt miteinander verknüpft sind.

Ferner bevorzugt sind Verbindungen der Unterformeln Ia-I4c, worin einer der Reste Sp und Sp" eine Einfachbindung bedeutet und der andere von einer Einfachbindung verschieden ist.

Ein weiterer Gegenstand der Erfindung sind neue Verbindungen der Formel I sowie deren Unterformeln I1 bis I4, worin die einzelnen Reste die in Formel I oder vor- und nachstehend angegebene Bedeutung haben, mit der Massgabe, dass
a) beide Reste R^{a} und R^{b} jeweils unabhängig voneinander P-Spbedeuten,
   und/oder
b) n1 und n2 von 0 verschieden sind,
   und/oder
c) n2 von 0 verschieden ist, und -(Z²-A²)ₙ₂- nicht -CO-C₆H₄- bedeutet,
ausgenommen Verbindungen der folgenden Formel 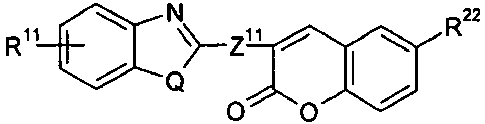 worin die einzelnen Reste folgende Bedeutung besitzen
- R¹¹ und R²²: jeweils unabhängig voneinander H, Halogen, -NO₂, -CN, -NCS, oder geradkettiges, verzweigtes oder cyclisches Alkyl mit 1 bis 25 C-Atomen, worin eine oder mehrere CH₂-Gruppen auch durch -CO-, -O-, -S-, -NR°-, -CH=CH-, -C≡C-, so ersetzt sein können, dass O- und/oder S-Atome nicht direkt miteinander verknüpft sind, und worin ein oder mehrere H-Atome durch F oder Cl ersetzt sein können, oder P-(Sp-X)ₙ-,
- X: -O-, -S-, -CO-, -COO-, -OCO-, -CO-NR°-, -NR°-CO-, -NR°- oder eine Einfachbindung,
- n: 0 oder 1,
- R°: H oder Alkyl mit 1 bis 5 C-Atomen,
- Z¹¹: -CH=CH-, -CF=CH-, -CH=CF-, -CF=CF- oder eine Einfachbindung,
- Q: -O-, -S-, -NR°- oder

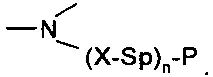

Besonders bevorzugt sind neue Verbindungen der Formel I sowie deren Unterformeln I1 bis I4, worin n2 von 0 verschieden ist und vorzugsweise 1 oder 2 bedeutet. Dabei bedeutet -(Z²-A²)ₙ₂- vorzugsweise nicht -CO-C₆H₄-(wobei C₆H₄ für 1,4-Phenylen steht), und -(Z²-A²)ₙ₂-R^{b} bedeutet vorzugsweise nicht -CO-C₆H₅.

Ferner bevorzugt sind Verbindungen mit einer oder mehreren der Massgaben a)-d), ausgewählt aus den Unterformeln I1 a bis I4c wie oben definiert.

Ein weiterer Gegenstand der Erfindung sind neue Zwischenprodukte zur Herstellung von Verbindungen der Formel I, ausgewählt aus folgender Formel 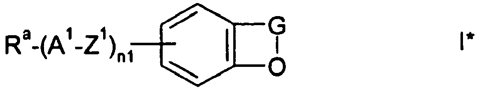 worin G, A¹, Z¹ und n1 die in Formel I oder vor- und nachstehend angegebene Bedeutung besitzen, und die Reste R^{a} und R^{b} jeweils unabhängig voneinander -Sp-O-Sg bedeuten, wobei Sp die in Formel I oder vor- und nachstehend angegebene Bedeutung besitzt, und Sg ein H-Atom oder eine Schutzgruppe bedeutet.

Vorzugsweise gelten für die Verbindungen der Formel I* die Massgaben a) und/oder b) und/oder c) und/oder d) wie oben angegeben, wobei, falls n2 von 0 verschieden ist, -(Z²-A²)ₙ₂- vorzugsweise nicht -CO-C₆H₄- (wobei C₆H₄ für 1,4-Phenylen steht) und -(Z²-A²)ₙ₂-R^{b} vorzugsweise nicht -CO-C₆H₅ bedeutet.

Geeignete Schutzgruppen Sg sind dem Fachmann bekannt Bevorzugte Schutzguppen sind Alkyl, Acyl und Alkyl- oder Arylsilylgruppen, 2-Tetrahydropyranyl oder Methoxymethyl.

Besonders bevorzugte Zwischenprodukte sind ausgewählt den Unterformeln I1 bis I4 wie oben angegeben, wobei R^{a} und R^{b} wie in Formel I* definiert sind.

Ganz besonders bevorzugte Zwischenprodukte sind ausgewählt aus der Gruppe bestehend aus folgenden Unterformeln 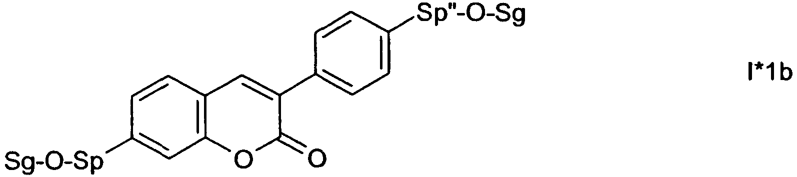 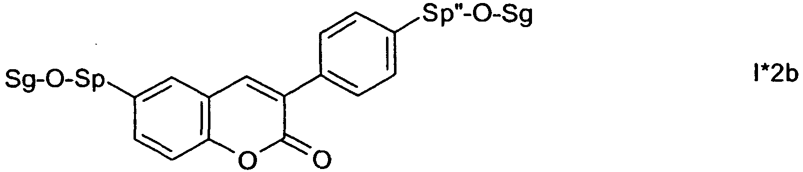 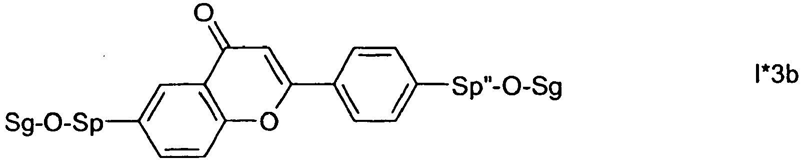 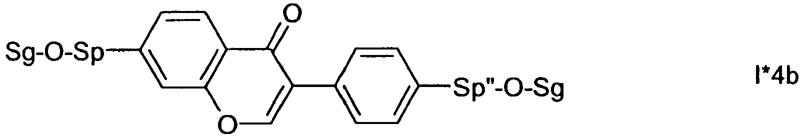 worin Sp, Sp" und Sg die oben angegebenen Bedeutungen besitzen, und Sg besonders bevorzugt H bedeutet. Besonders bevorzugt sind Verbindungen der oben gezeigten Formeln, worin einer der Reste Sp und Sp" -(CH₂)ₚ₁- oder eine Einfachbindung und der andere eine Einfachbindung bedeuten, wobei p1 wie oben definiert ist.

Die Verbindungen und Zwischenprodukte der Formel I und I* sowie deren Unterformeln können in Analogie zu dem Fachmann bekannten und in Standardwerken der organischen Chemie beschriebenen Verfahren, wie beispielsweise in Houben-Weyl, Methoden der organischen Chemie, Thieme-Verlag, Stuttgart, hergestellt werden. Beispielsweise erfolgt die Synthese von Verbindungen der Formel I durch Veresterung oder Veretherung der Zwischenprodukte der Formel I mit entsprechenden Säuren, Säurederivaten, oder halogenierten Verbindungen enthaltend eine Gruppe P, wie zum Beispiel (Meth)acrylsäurechlorid oder Methacrylsäureanhydrid in Gegenwart einer Base, oder (Meth)acrylsäure in Gegenwart eines wasserentziehenden Reagens wie zum Beispiel DCC (Dicyclohexylcarbodiimid).

Besonders geeignete und bevorzugte Verfahren zur Herstellung von Verbindungen und Zwischenprodukten der Formeln I und I* sind in folgenden Schemata beispielhaft dargestellt und enthalten vorzugsweise einen oder mehrere der nachfolgend beschriebenen Schritte.

Ein allgemeiner Zugang zu Cumarinen ist z.B. durch Kondensation von Salicylaldehyden mit Phenylessigsäurederivaten im Sinne einer Perkin-Reaktion gemäß Schema 1 gegeben, wie sie beispielsweise für Hydroxyphenylcumarine in S. Kirkiacharian et al., Annales Pharmaceutiques Francaises (2003), 61(1), 51-56 beschrieben ist.

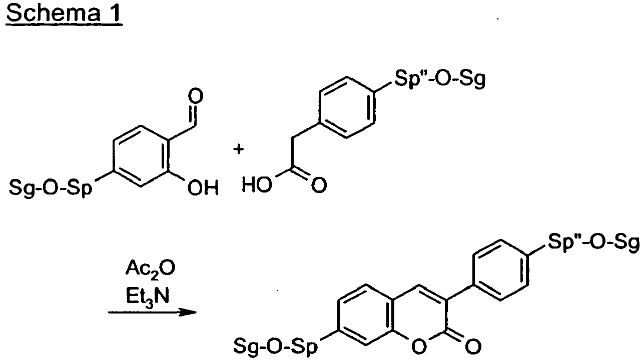

Isoflavone sind nach R. J. Bass, Chem. Comm. 1976, 78, durch Behandeln von Benzylarylketonen mit Bortrifluoridetherat in Gegenwart von Mesylchlorid in Dimethylformamid zugänglich. Die Ketone selbst können in einfacher Weise durch carbonylierende Suzuki-Reaktion nach A. Suzuki et al. J. Org. Chem. 1998, 63, 4762 hergestellt werden wie in Schema 2 beispielhaft gezeigt:

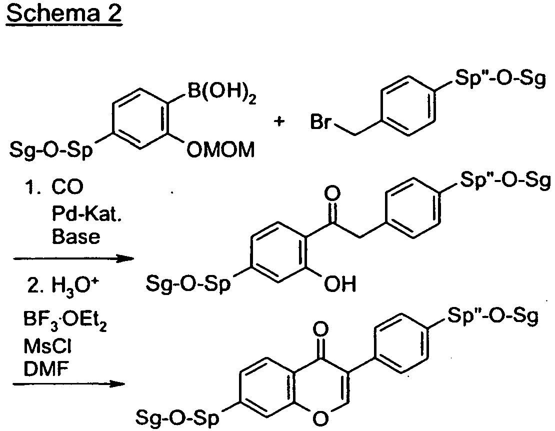

Alternativ können Isoflavone auch nach K.M.Dawood, Tetrahedron 2007, 63, 9642 aus Chromanonen über die entsprechenden Bromisoflavone durch Suzuki-Reaktion erhalten werden wie in Schema 3 beispielhaft gezeigt:

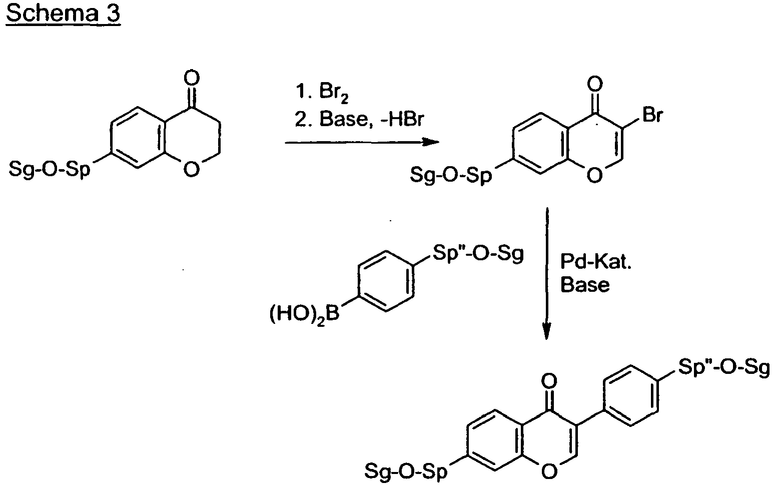

Die erfindungsgemäßen Flavone werden z.B. durch Baker-Venkataraman-Umlagerung hergestellt (W. Baker, Nature 1952, 169,706) oder sie lassen sich aus gemäß E.U.Mughal et al., Bioorg. Med. Chem. 2006, 14, 4704 aus o-Acylphenolen durch Aldolkondensation mit aromatischen Aldehyden und nachfolgende oxidative Zyklisierung darstelllen, wie in Schema 4 beispielhaft gezeigt:

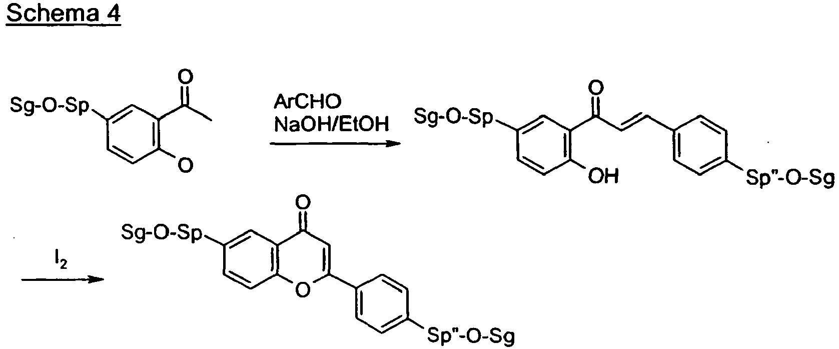

Zur Herstellung von PSA-Anzeigen werden die polymerisierbaren Verbindungen im FK-Medium zwischen den Substraten der FK-Anzeige unter Anlegen einer Spannung durch in-situ-Polymerisation polymerisiert oder vernetzt (falls eine Verbindung zwei oder mehr polymerisierbare Gruppen enthält). Die Polymerisation kann in einem Schritt durchgeführt werden. Es ist auch möglich, zunächst in einem ersten Schritt die Polymerisation unter Anlegen einer Spannung durchzuführen, um einen pretilt-Winkel zu erzeugen, und anschließend in einem zweiten Polymerisationsschritt ohne anliegende Spannung die im ersten Schritt nicht abreagierten Verbindungen zu polymerisieren bzw. zu vernetzen ("end curing").

Geeignete und bevorzugte Polymerisationsmethoden sind beispielsweise die thermische oder Photopolymerisation, vorzugsweise Photopolymerisation, insbesondere UV-Photopolymerisation. Dabei können gegebenfalls auch ein oder mehrere Initiatoren zugesetzt werden. Geeignete Bedingungen für die Polymerisation, sowie geeignete Arten und Mengen der Initiatoren, sind dem Fachmann bekannt und in der Literatur beschrieben. Für die radikalische Polymerisation eignen sich zum Beispiel die kommerziell erhältlichen Photoinitiatoren Irgacure651®, Irgacure184®, Irgacure907®, Irgacure369®, oder Darocure1173® (Ciba AG). Falls ein Initiator eingesetzt wird, beträgt dessen Anteil vorzugsweise 0,001 bis 5 Gew.-%, besonders bevorzugt 0,001 bis 1 Gew.%. Die Polymerisation kann aber auch ohne Zusatz eines Initiators erfolgen. In einer weiteren bevorzugten Ausführungsform enthält das FK-Medium keinen Polymerisationsinitiator.

Die polymerisierbare Komponente A) oder das FK-Medium können auch einen oder mehrere Stabilisatoren enthalten, um eine unerwünschte spontane Polymerisation der RMs, beispielsweise während der Lagerung oder des Transports, zu verhindern. Geeignete Arten und Mengen der Stabilisatoren sind dem Fachmann bekannt und in der Literatur beschrieben. Besonders geeignet sind zum Beispiel die kommerziell erhältlichen Stabilisatoren der Serie Irganox® (Ciba AG), wie beispielsweise Irganox® 1076. Falls Stabilisatoren eingesetzt werden, beträgt deren Anteil, bezogen auf die Gesamtmenge der RMs beziehungsweise der polymerisierbaren Komponente A), vorzugsweise 10 -10,000 ppm, besonders bevorzugt 50 - 500 ppm.

Die erfindungsgemäßen polymerisierbaren Verbindungen eignen sich auch für die Polymerisation ohne Initiator, was erhebliche Vorteile mit sich bringt, wie beispielsweise geringere Materialkosten und insbesondere eine geringere Verunreinigung des FK-Mediums durch mögliche Restmengen des Initiators oder dessen Abbauprodukte.

Die erfindungsgemäßen FK-Medien zur Verwendung in PSA-Anzeigen enthalten vorzugsweise < 5 Gew.-%, besonders bevorzugt < 1 Gew.-%, ganz besonders bevorzugt < 0.5 Gew.-% an polymerisierbaren Verbindungen, insbesondere polymerisierbaren Verbindungen der oben genannten Formeln.

Besonders bevorzugt sind FK-Medien enthaltend eine, zwei oder drei polymerisierbare Verbindungen der Formel I.

Ferner bevorzugt sind FK-Medien, worin die polymerisierbare Komponente (Komponente A) ausschließlich polymerisierbare Verbindungen der Formel I enthält.

Ferner bevorzugt sind FK-Medien, worin Komponente B) eine FK-Verbindung oder eine FK-Mischung ist, die eine nematische Flüssigkristallphase aufweist.

Ferner bevorzugt sind achirale polymerisierbare Verbindungen der Formel I, sowie FK-Medien worin die Verbindungen der Komponente A) und/oder B) ausschließlich aus der Gruppe bestehend aus achiralen Verbindungen ausgewählt sind.

Ferner bevorzugt sind FK-Medien, worin die polymerisierbare Komponente bzw. Komponente A) eine oder mehrere polymerisierbare Verbindungen der Formel I mit einer polymerisierbaren Gruppe (monoreaktiv) und eine oder mehrere polymerisierbare Verbindungen der Formel I mit zwei oder mehr, vorzugsweise zwei polymerisierbaren Gruppen (di- oder multireaktiv) enthält.

Ferner bevorzugt sind PSA-Anzeigen und FK-Medien, worin die polymerisierbare Komponente bzw. Komponente A) ausschließlich polymerisierbare Verbindungen der Formel I mit zwei polymerisierbaren Gruppen (direaktiv) enthält.

Der Anteil der polymerisierbaren Komponente bzw. Komponente A) in den erfindungsgemäßen FK-Medien ist vorzugsweise < 5%, besonders bevorzugt < 1%, ganz besonders bevorzugt < 0.5 %.

Der Anteil der flüssigkristallinen Komponente bzw. Komponente B) in den erfindungsgemäßen FK-Medien ist vorzugsweise > 95%, besonders bevorzugt > 99%.

Die polymerisierbaren Verbindungen der Formel I können einzeln polymerisiert werden, es können aber auch Mischungen polymerisiert werden, welche zwei oder mehr Verbindungen der Formel I enthalten, oder Mischungen enthaltend eine oder mehrere Verbindungen der Formel I und eine oder mehrere weitere polymerisierbare Verbindungen (Comonomere), welche vorzugsweise mesogen oder flüssigkristallin sind. Bei Polymerisation solcher Mischungen entstehen Copolymere. Die vor- und nachstehend genannten polymerisierbaren Mischungen sind ein weiterer Gegenstand der Erfindung. Die polymerisierbaren Verbindungen und Comonomere sind mesogen oder nicht-mesogen, vorzugsweise mesogen oder flüssigkristallin.

Geeignete und bevorzugte mesogene Comonomere, besonders für die Verwendung in PSA-Anzeigen, sind beispielsweise ausgewählt aus den folgenden Formeln: 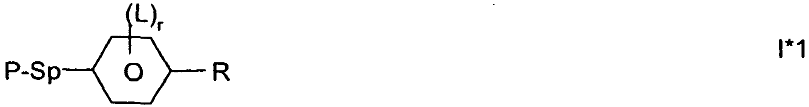 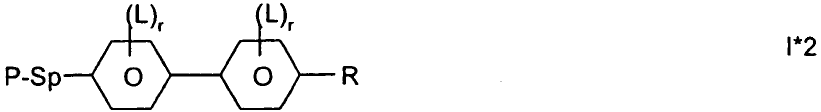 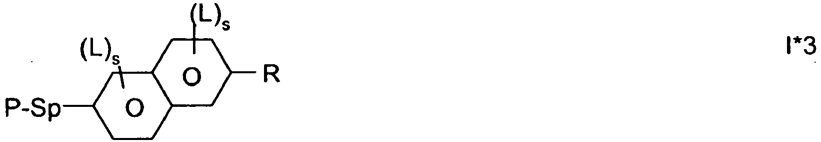 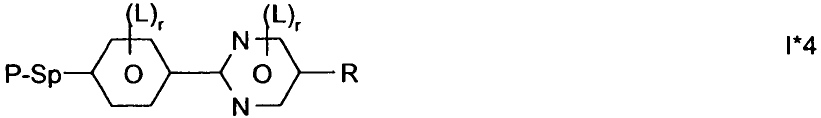 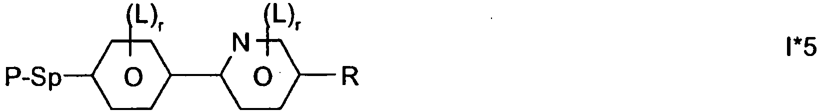 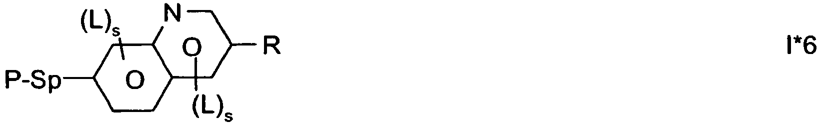 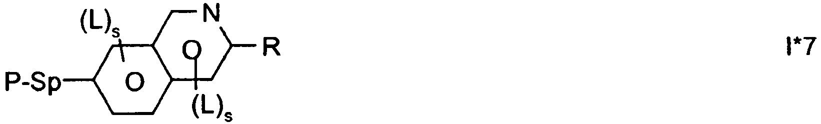 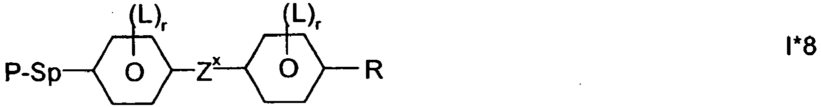 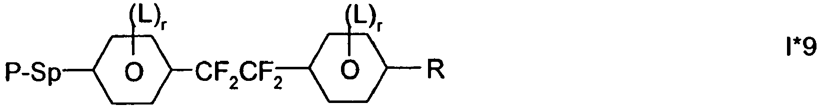 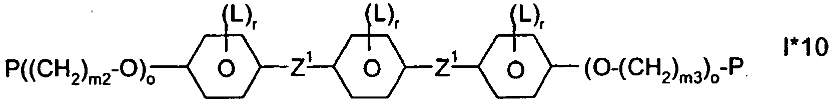 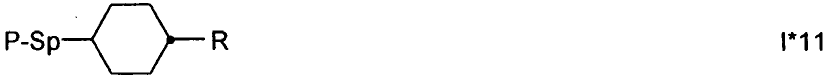 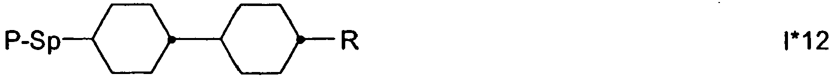 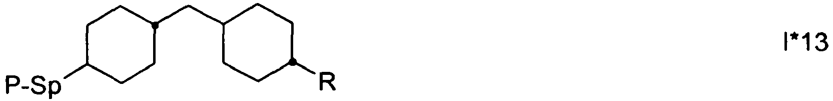 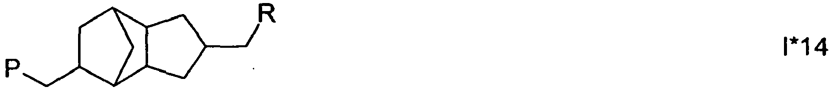 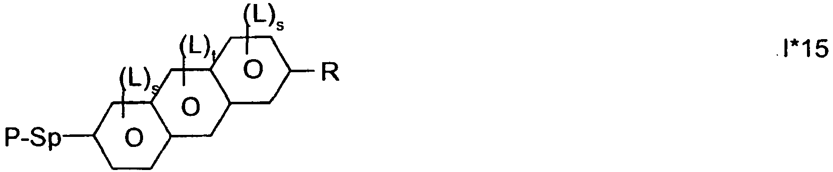 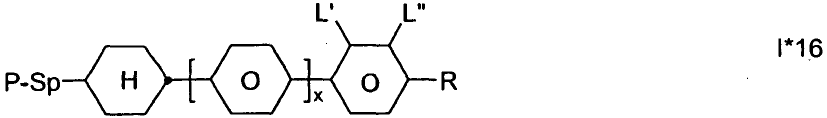 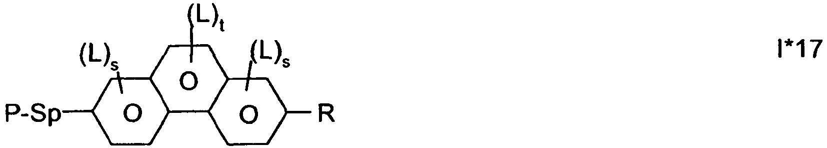 worin
- R: eine der oben für R^{x} angegebenen Bedeutungen besitzt und vorzugsweise P, P-Sp-, oder geradkettiges oder verzweigtes Alkyl oder Alkoxy mit 1 bis 12 C-Atomen bedeutet,
- P: eine der oben angegebenen Bedeutungen besitzt und vorzugsweise Acrylat oder Methacrylat bedeuten,
- Sp: eine der oben angegebenen Bedeutungen besitzt oder eine Einfachbindung bedeutet,
- Z² und Z³: jeweils unabhängig voneinander -COO- oder -OCO bedeuten,
- L: die oben in Formel I angegebene Bedeutung besitzt,
- L' und L": jeweils unabhängig voneinander H, F oder Cl bedeuten,
- r: 0, 1, 2, 3 oder 4 bedeutet,
- s: 0, 1, 2 oder 3 bedeutet,
- t: 0, 1 oder 2 bedeutet,
- x: 0 oder 1, und
- R^{y} und R^{z}: jeweils unabhängig voneinander H oder CH₃ bedeuten.

Die FK-Medien zur Verwendung in den erfindungsgemäßen FK-Anzeigen enthalten, neben den oben beschriebenen polymerisierbaren Verbindungen, eine FK-Mischung ("Host-Mischung") enthaltend eine oder mehr, vorzugsweise zwei oder mehr niedermolekulare (d.h. monomere bzw. unpolymerisierte) Verbindungen. Letztere sind stabil bzw. unreaktiv gegenüber einer Polymerisationsreaktion unter den zur Polymerisation der polymerisierbaren Verbindungen verwendeten Bedingungen. Prinzipiell eignet sich als Host-Mischung jede zur Verwendung in herkömmlichen VA- und OCB-Anzeigen geeignete FK-Mischung. Geeignete FK-Mischungen sind dem Fachmann bekannt und in der Literatur beschrieben, beispielsweise Mischungen in VA-Anzeigen in EP 1 378 557 A1, und Mischungen für OCB-Anzeigen in EP 1 306 418 A1 und DE 102 24 046 A1.

Besonders bevorzugte FK-Anzeigen, FK-Host-Mischungen und FK-Medien werden im Folgenden genannt:
a) FK-Medium, welches eine oder mehrere Verbindungen der Formel CY und/oder PY enthält: 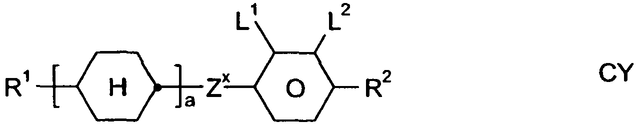 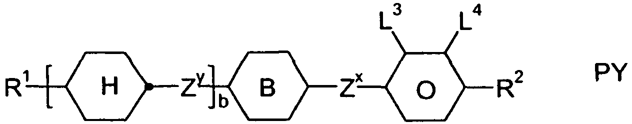 worin die einzelnen Reste folgende Bedeutung besitzen
   - a: 1 oder 2,
   - b: 0 oder 1, 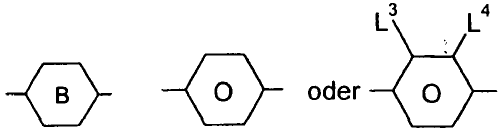
   - R¹ und R²: jeweils unabhängig voneinander Alkyl mit 1 bis 12 C-Atomen, wobei auch eine oder zwei nicht benachbarte CH₂-Gruppen durch -O-, -CH=CH-, -CO-, -OCO- oder - COO- so ersetzt sein können, dass O-Atome nicht direkt miteinander verknüpft sind, vorzugsweise Alkyl oder Alkoxy mit 1 bis 6 C-Atomen,
   - Z^{x} und Z^{y}: jeweils unabhängig voneinander -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-, oder eine Einfachbindung, vorzugsweise eine Einfachbindung,
   - L¹⁻⁴: jeweils unabhängig voneinander F, Cl, OCF₃, CF₃, CH₃, CH₂F, CHF₂.

   Vorzugsweise bedeuten beide Reste L¹ und L² F, oder einer der Reste L¹ und L² F und der andere Cl, bzw. beide Reste L³ und L⁴ F, oder einer der Reste L³ und L⁴ F und der andere Cl.
   Die Verbindungen der Formel CY sind vorzugsweise ausgewählt aus der Gruppe bestehend aus folgenden Unterformeln 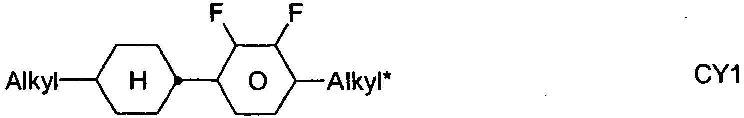 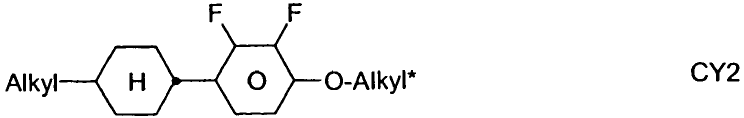 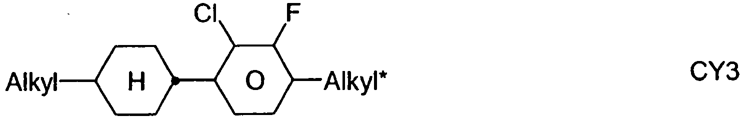 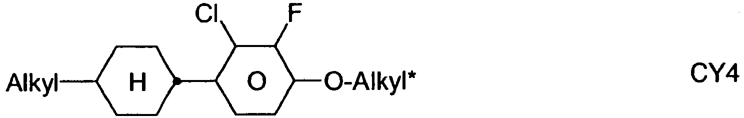 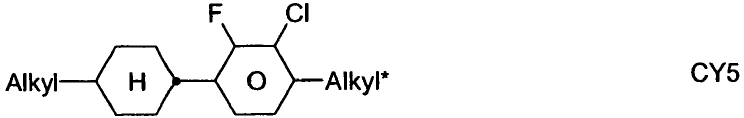 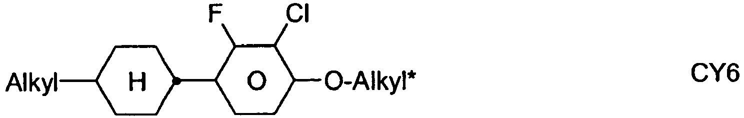 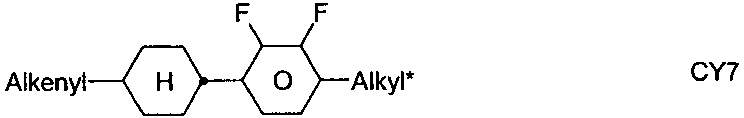 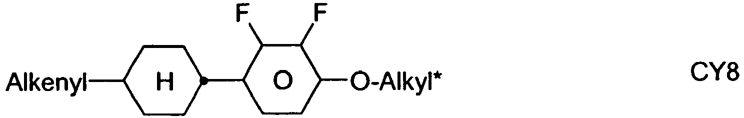 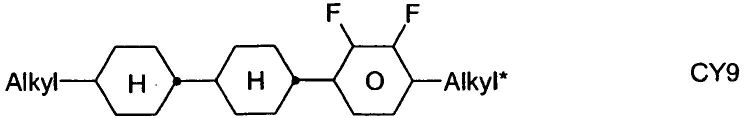 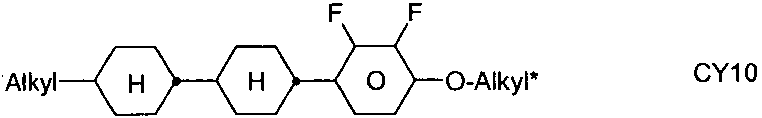 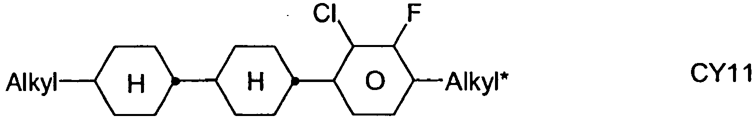 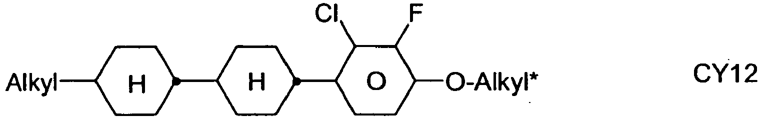 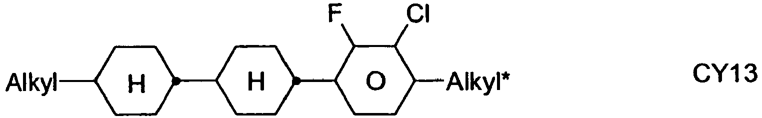 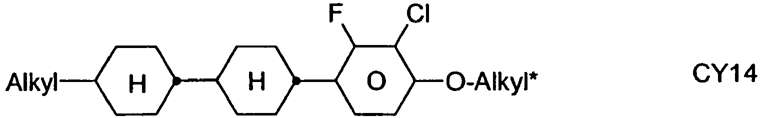 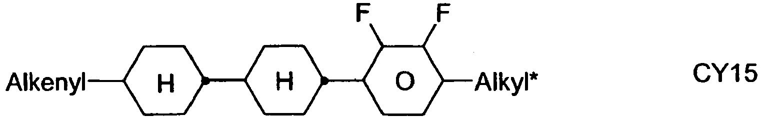 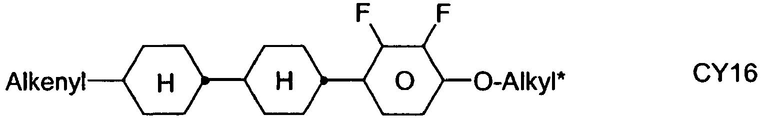 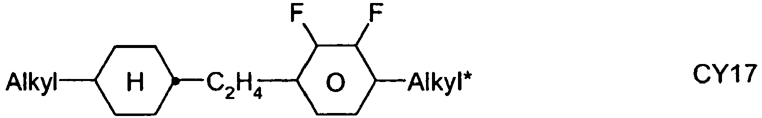 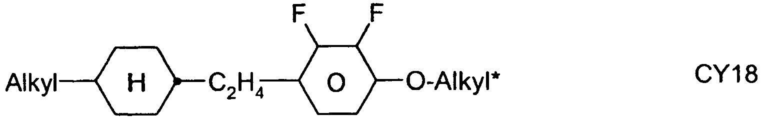 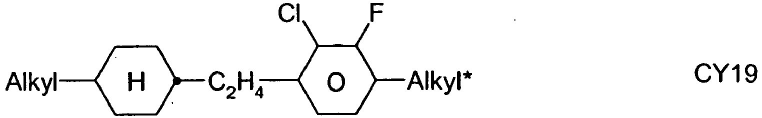 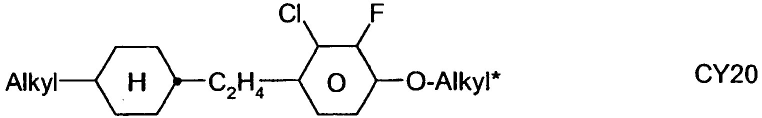 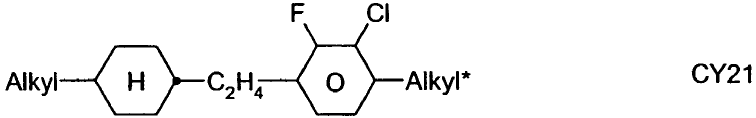 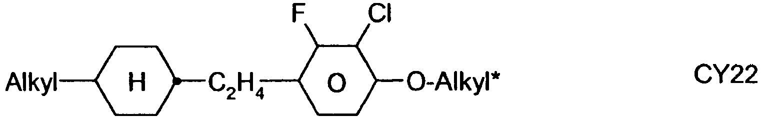 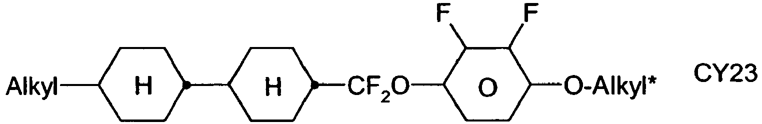 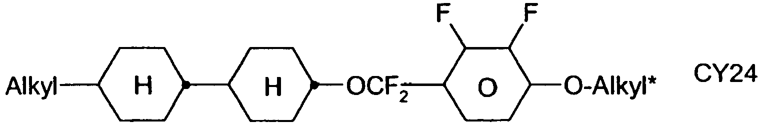 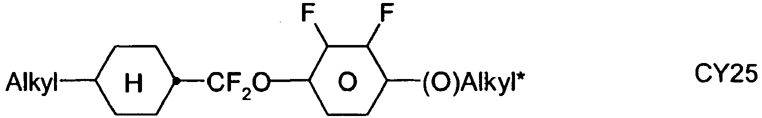 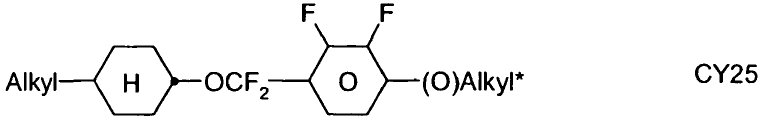 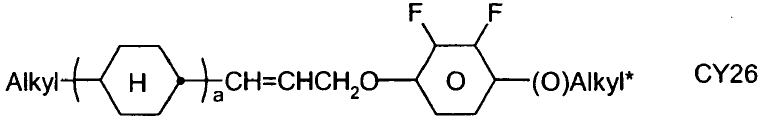 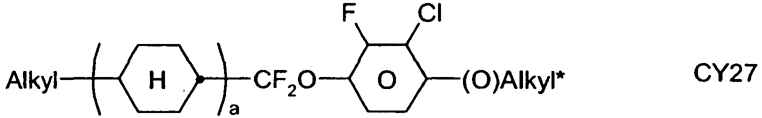 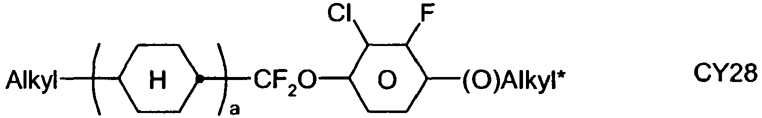 worin a 1 oder 2, Alkyl und Alkyl* jeweils unabhängig voneinander einen geradkettigen Alkylrest mit 1-6 C-Atomen, und Alkenyl einen geradkettigen Alkenylrest mit 2-6 C-Atomen, und (O) ein Sauerstoffatom oder eine Einfachbindung bedeuten. Alkenyl bedeutet vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
   Die Verbindungen der Formel PY sind vorzugsweise ausgewählt aus der Gruppe bestehend aus folgenden Unterformeln: 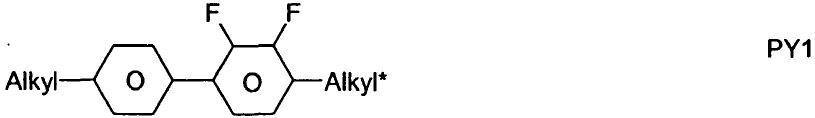 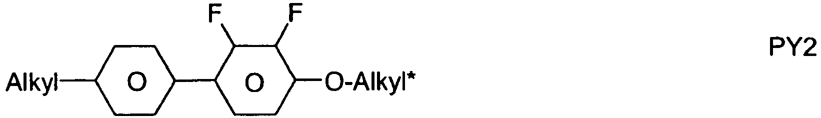 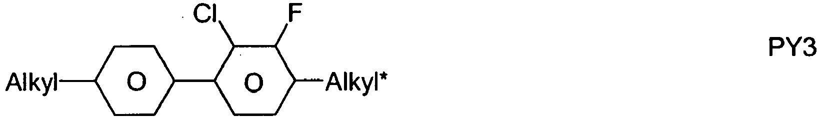 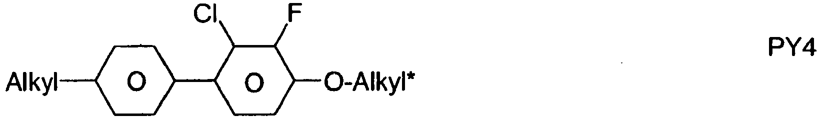 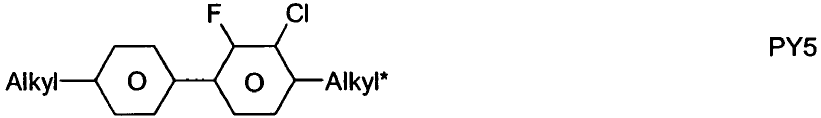 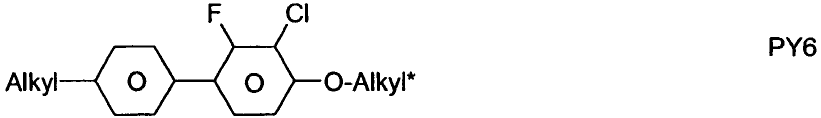 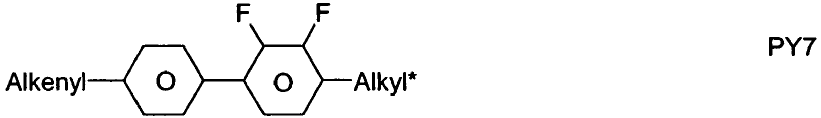 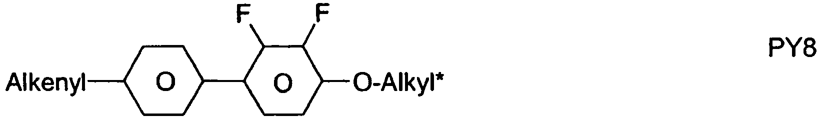 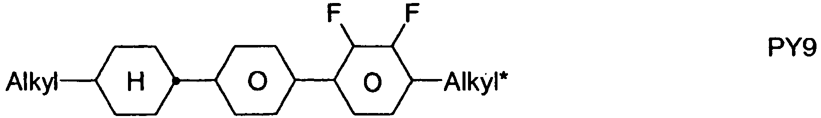 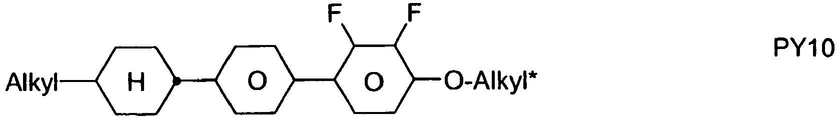 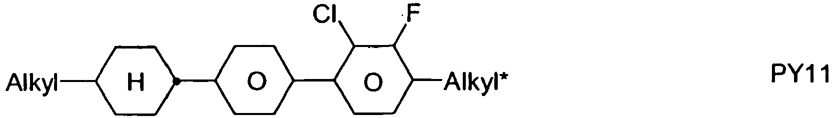 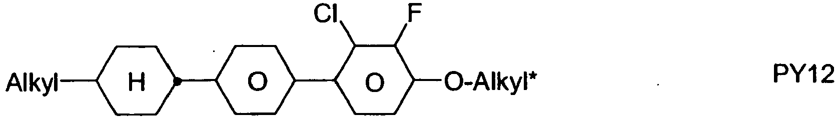 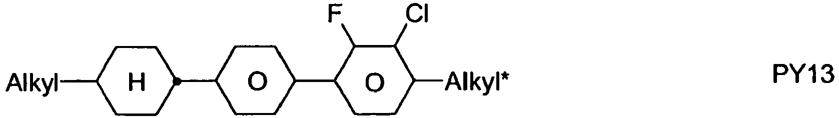 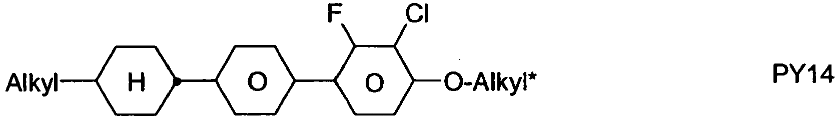 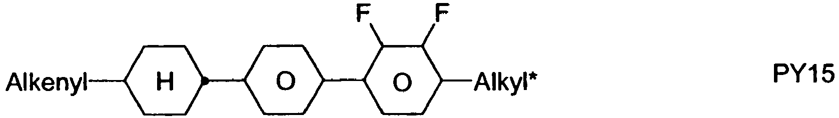 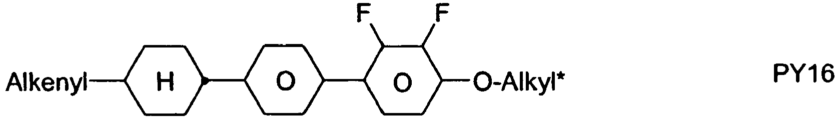 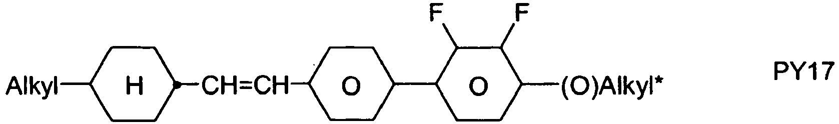 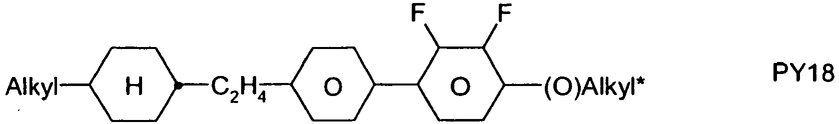 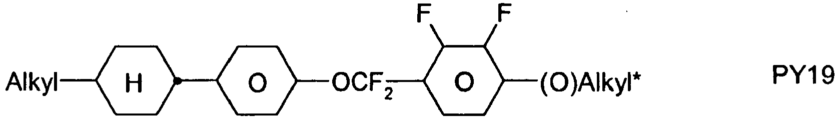 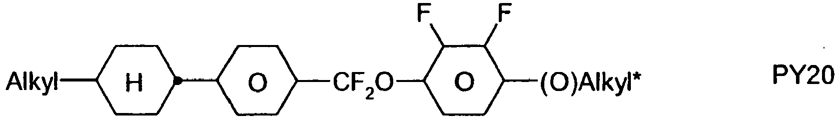 worin Alkyl und Alkyl* jeweils unabhängig voneinander einen geradkettigen Alkylrest mit 1-6 C-Atomen und Alkenyl einen geradkettigen Alkenylrest mit 2-6 C-Atomen, und (O) ein Sauerstoffatom oder eine Einfachbindung bedeuten. Alkenyl bedeutet vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
b) FK-Medium, welches zusätzlich eine oder mehrere Verbindungen der folgenden Formel enthält: 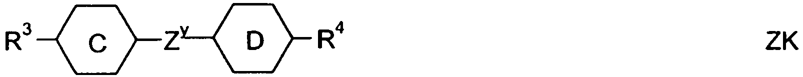 worin die einzelnen Reste folgende Bedeutung besitzen 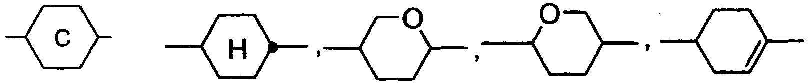 oder 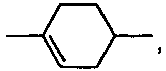 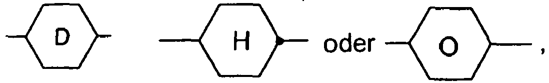
   - R³ und R⁴: jeweils unabhängig voneinander Alkyl mit 1 bis 12 C-Atomen, worin auch eine oder zwei nicht benachbarte CH₂-Gruppen durch -O-, -CH=CH-, -CO-, -OCO- oder - COO- so ersetzt sein können, dass O-Atome nicht direkt miteinander verknüpft sind,
   - Z^{y}: -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-, oder eine Einfachbindung, vorzugsweise eine Einfachbindung.

   Die Verbindungen der Formel ZK sind vorzugsweise ausgewählt aus der Gruppe bestehend aus folgenden Unterformeln: 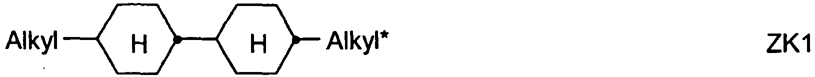 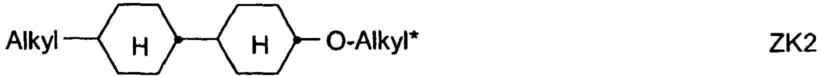 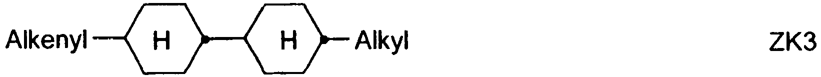 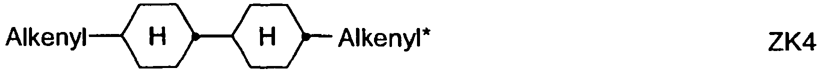 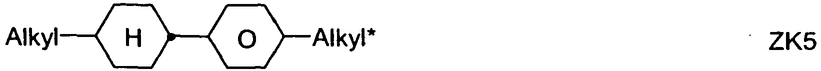 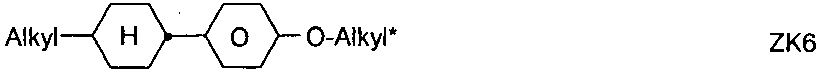 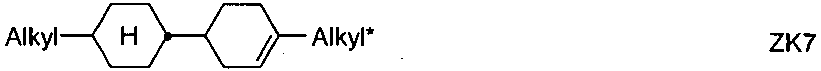 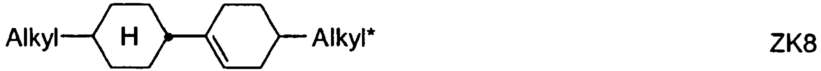 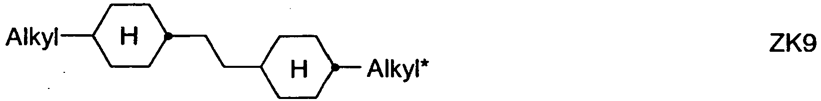 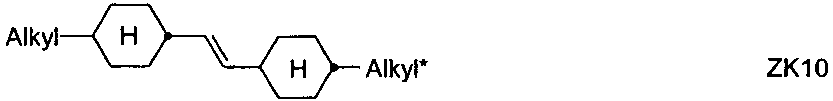 worin Alkyl und Alkyl* jeweils unabhängig voneinander einen geradkettigen Alkylrest mit 1-6 C-Atomen bedeuten, und Alkenyl einen geradkettigen Alkenylrest mit 2-6 C-Atomen bedeuten. Alkenyl bedeutet vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
c) FK-Medium, welches zusätzlich eine oder mehrere Verbindungen der folgenden Formel enthält: 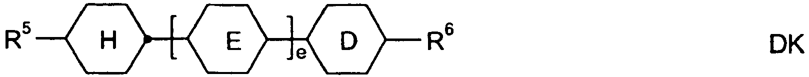 worin die einzelnen Reste bei jedem Auftreten gleich oder verschieden folgende Bedeutung haben:
   - R⁵ und R⁶: jeweils unabhängig voneinander eine der oben für R¹ angegebenen Bedeutungen, 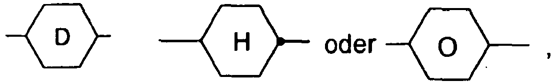 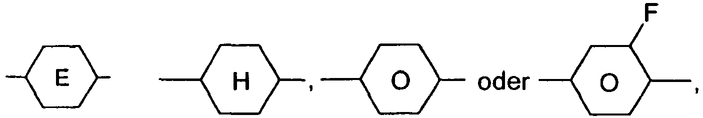 und
   - e: 1 oder 2.

   Die Verbindungen der Formel DK sind vorzugsweise ausgewählt aus der Gruppe bestehend aus folgenden Unterformeln: 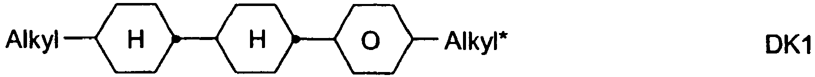 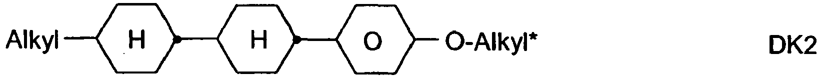 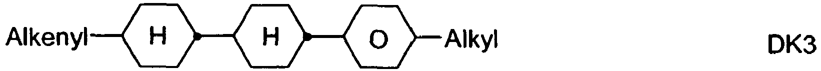 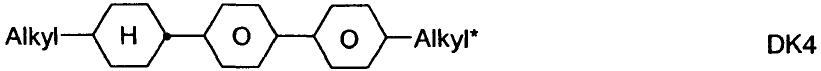 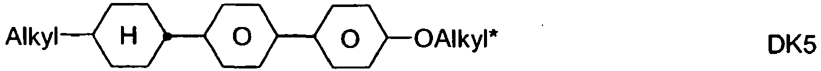 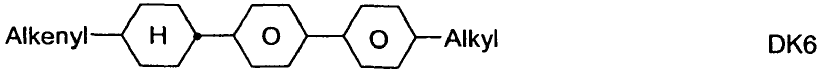 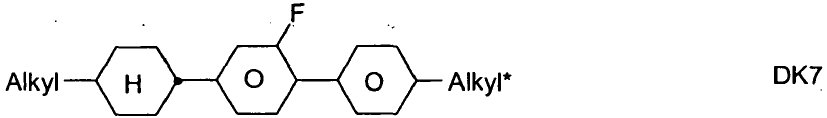 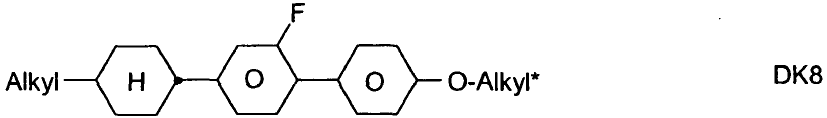 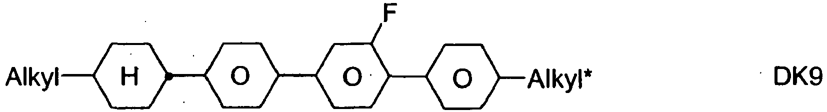 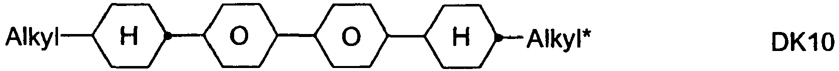 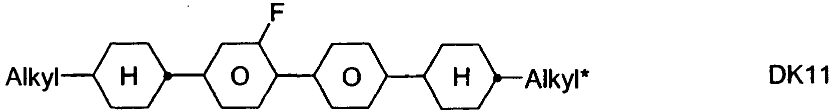 worin Alkyl und Alkyl* jeweils unabhängig voneinander einen geradkettigen Alkylrest mit 1-6 C-Atomen, und Alkenyl und Alkenyl* jeweils unabhängig voneinander einen geradkettigen Alkenylrest mit 2-6 C-Atomen bedeuten. Alkenyl und Alkenyl* bedeuten vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
d) FK-Medium, welches zusätzlich eine oder mehrere Verbindungen der folgenden Formel enthält: 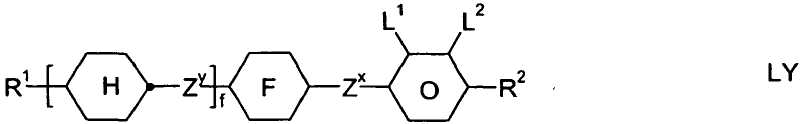 worin die einzelnen Reste folgende Bedeutung besitzen 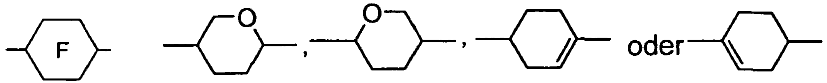
   - f: 0 oder 1,
   - R¹ und R²: jeweils unabhängig voneinander Alkyl mit 1 bis 12 C-Atomen, wobei auch eine oder zwei nicht benachbarte CH₂-Gruppen durch -O-, -CH=CH-, -CO-, -OCO- oder - COO- so ersetzt sein können, dass O-Atome nicht direkt miteinander verknüpft sind,
   - Z^{x} und Z^{y}: jeweils unabhängig voneinander -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-, oder eine Einfachbindung, vorzugsweise eine Einfachbindung,
   - L¹ und L²: jeweils unabhängig voneinander F, Cl, OCF₃, CF₃, CH₃, CH₂F, CHF₂.

   Vorzugsweise bedeuten beide Reste L¹ und L² F oder einer der Reste L¹ und L² F und der andere Cl.
   Die Verbindungen der Formel LY sind vorzugsweise ausgewählt aus der Gruppe bestehend aus folgenden Unterformeln 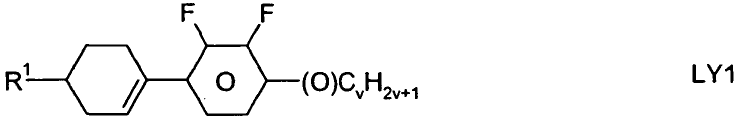 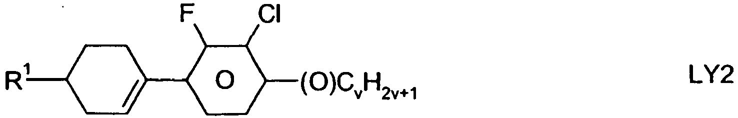 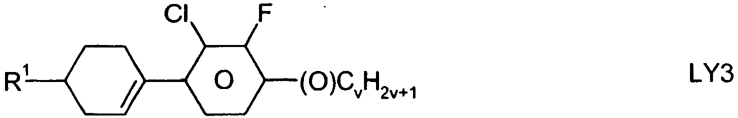 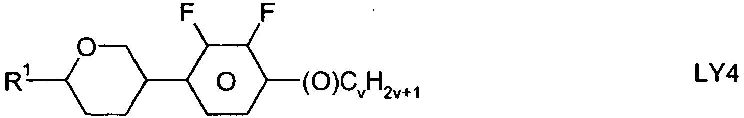 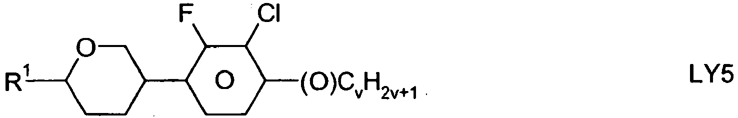 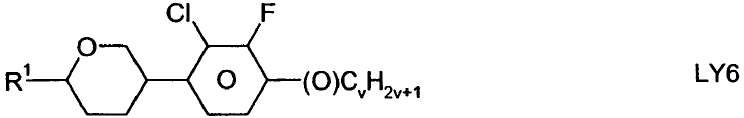 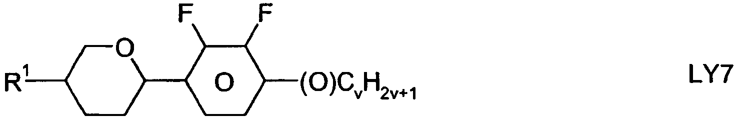 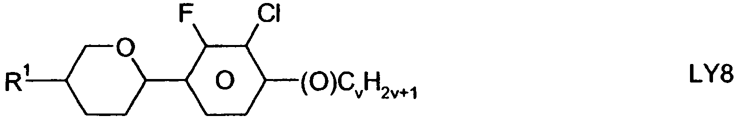 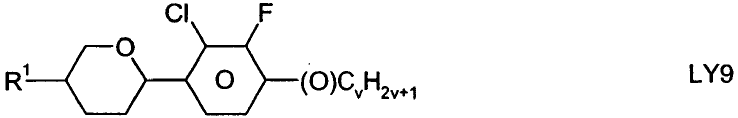 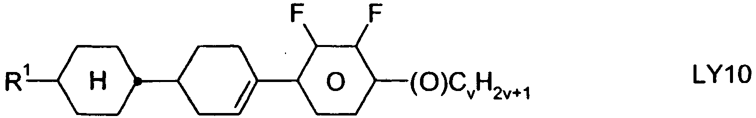 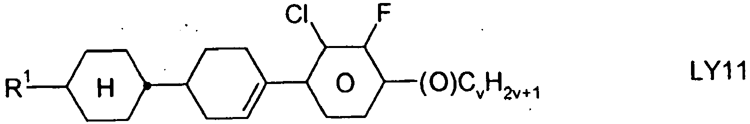 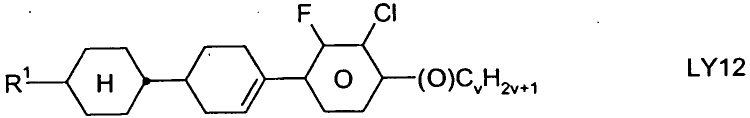 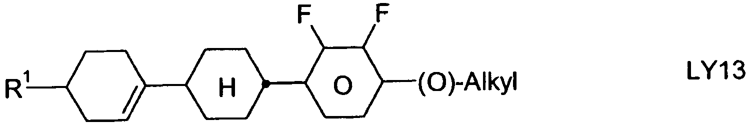 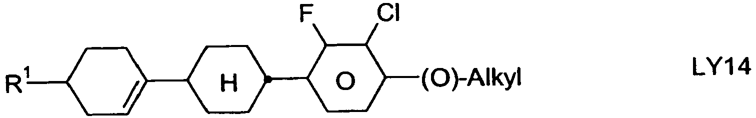 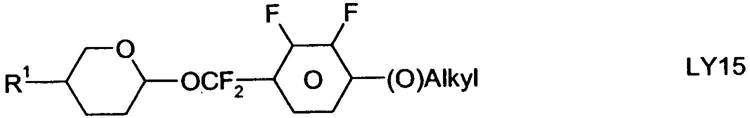 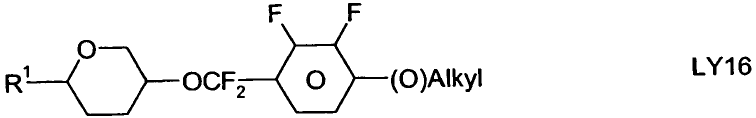 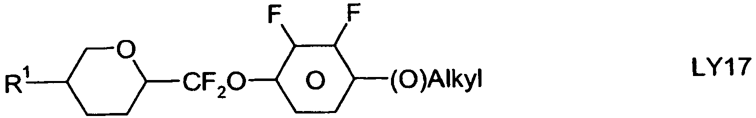 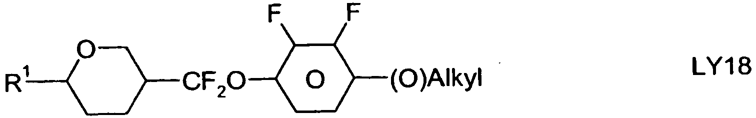 worin R¹ die oben angegebene Bedeutung hat, Alkyl einen geradkettigen Alkylrest mit 1-6 C-Atomen, (O) ein Sauerstoffatom oder eine Einfachbindung und v eine ganze Zahl von 1 bis 6 bedeuten. R¹ bedeutet vorzugsweise geradkettiges Alkyl mit 1 bis 6 C-Atomen oder geradkettiges Alkenyl mit 2 bis 6 C-Atomen, insbesondere CH₃, C₂H₅, n-C₃H₇, n-C₄H₉, n-C₅H₁₁, CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
e) FK-Medium, welches zusätzlich eine oder mehrere Verbindungen ausgewählt aus der Gruppe bestehend aus folgenden Formeln enthält: 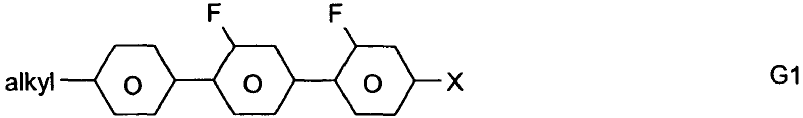 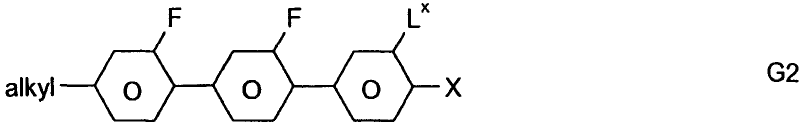 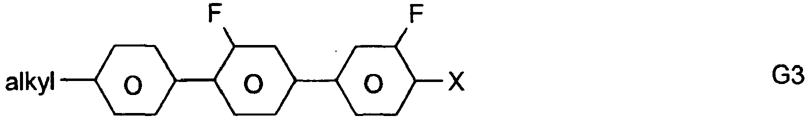 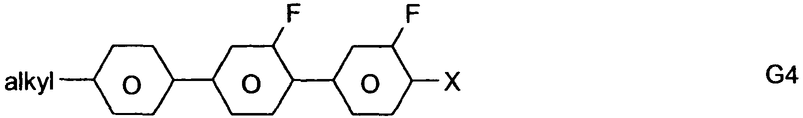 worin alkyl C₁₋₆-alkyl, L^{x} H oder F und X F, Cl, OCF₃, OCHF₂ oder OCH=CF₂ bedeutet. Besonders bevorzugt sind Verbindungen der Formel G1, worin X F bedeutet.
f) FK-Medium, welches zusätzlich eine oder mehrere Verbindungen ausgewählt aus der Gruppe bestehend aus folgenden Formeln enthält: 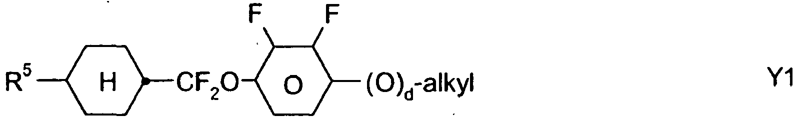 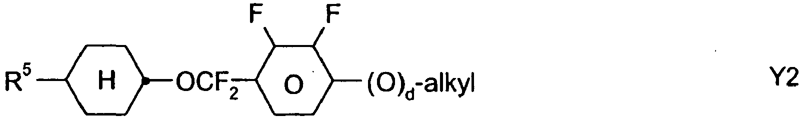 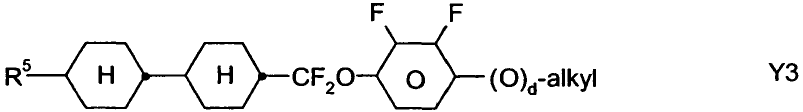 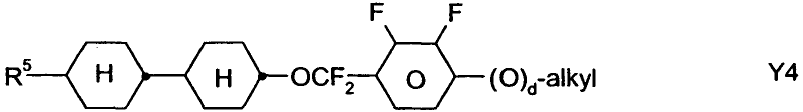 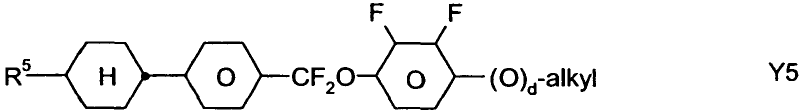 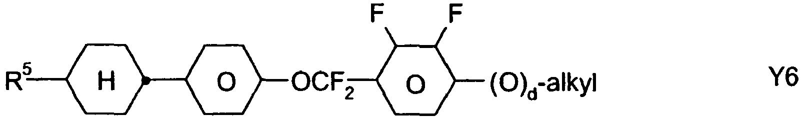 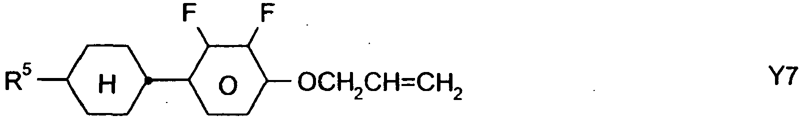 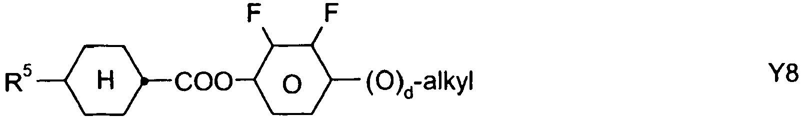 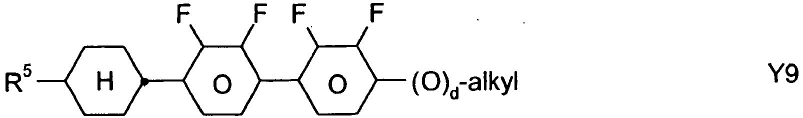 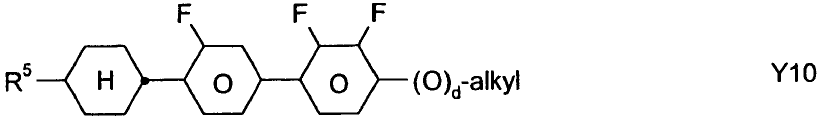 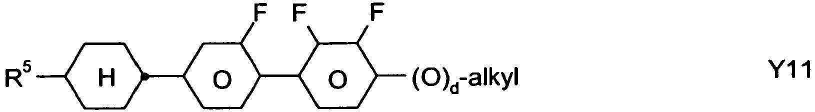 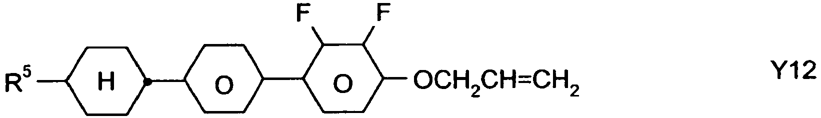 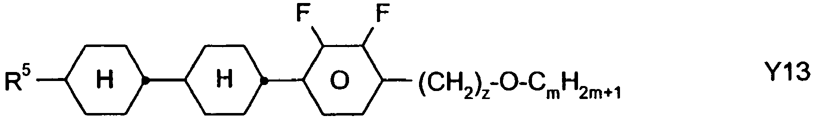 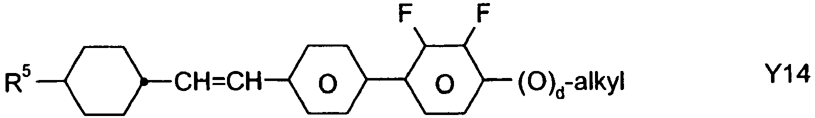 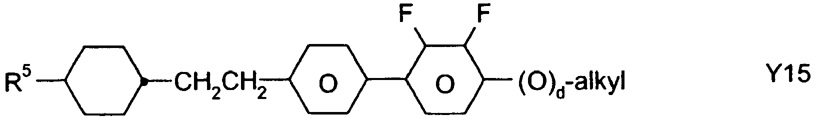 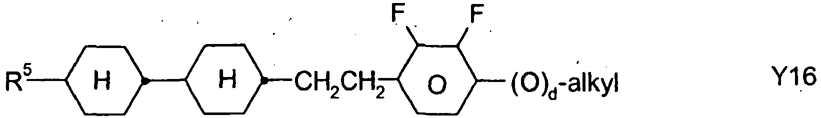 worin R⁵ eine der oben für R¹ angegebenen Bedeutungen besitzt, alkyl C₁₋₆-alkyl, d 0 oder 1, und z und m jeweils unabhängig voneinander eine ganze Zahl von 1 bis 6 bedeuten. R⁵ ist in diesen Verbindungen besonders bevorzugt C₁₋₆-alkyl oder -alkoxy oder C₂₋₆-alkenyl, d ist vorzugsweise 1. Vorzugsweise enthält das erfindungsgemäße FK-Medium eine oder mehrere Verbindungen der oben genannten Formeln in Mengen von ≥ 5 Gew.%.
g) FK-Medium, welches zusätzlich eine oder mehrere Biphenylverbindungen ausgewählt aus der Gruppe bestehend aus folgenden Formeln enthält: 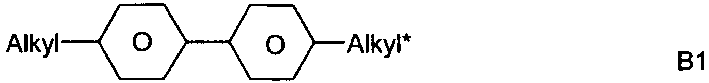 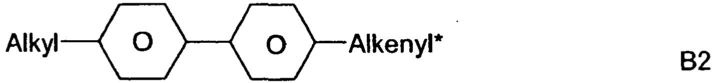 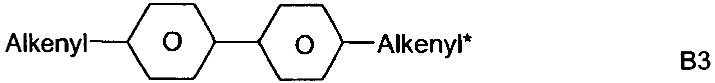 worin Alkyl und Alkyl* jeweils unabhängig voneinander einen geradkettigen Alkylrest mit 1-6 C-Atomen, und Alkenyl und Alkenyl* jeweils unabhängig voneinander einen geradkettigen Alkenylrest mit 2-6 C-Atomen bedeuten. Alkenyl und Alkenyl* bedeuten vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
   Der Anteil der Biphenyle der Formeln B1 bis B3 in der FK-Mischung beträgt vorzugsweise mindestens 3 Gew.%, insbesondere ≥ 5 Gew.%.
   Die Verbindungen der Formel B2 sind besonders bevorzugt.
   Die Verbindungen der Formel B1 bis B3 sind vorzugsweise ausgewählt aus der Gruppe bestehend aus folgenden Unterformeln 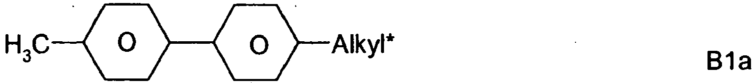 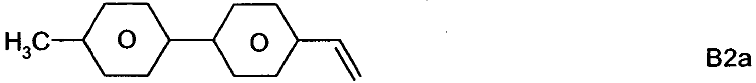 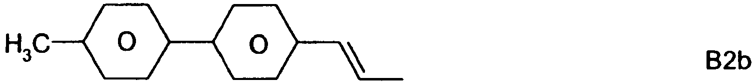 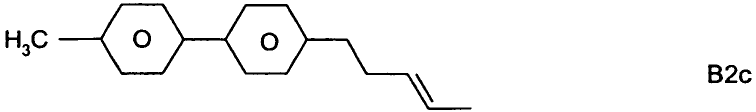 worin Alkyl* einen Alkylrest mit 1-6 C-Atomen bedeutet. Insbesondere bevorzugt enthält das erfindungsgemäße Medium eine oder mehrere Verbindungen der Formeln B1a und/oder B2c.
h) FK-Medium, welches zusätzlich eine oder mehrere Terphenylverbindungen der folgenden Formel enthält: 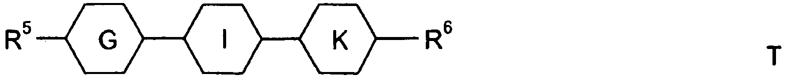 worin R⁵ und R⁶ jeweils unabhängig voneinander eine der oben für R¹ angegebenen Bedeutungen besitzen und 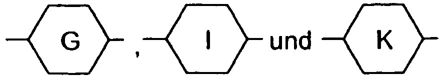 jeweils unabhängig voneinander 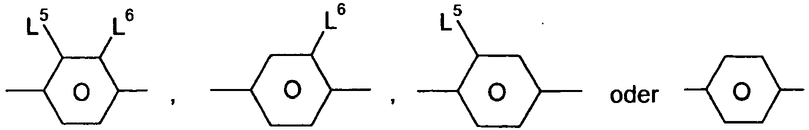 bedeuten, worin L⁵ F oder Cl, vorzugsweise F, und L⁶ F, Cl, OCF₃, CF₃, CH₃, CH₂F oder CHF₂, vorzugsweise F, bedeuten.
   Die Verbindungen der Formel T sind vorzugsweise ausgewählt aus der Gruppe bestehend aus folgenden Unterformeln 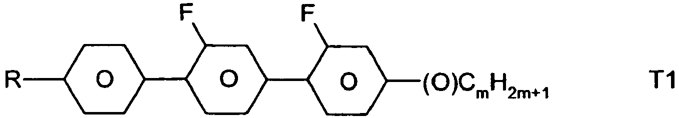 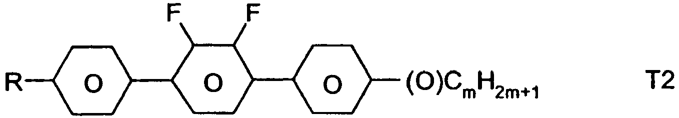 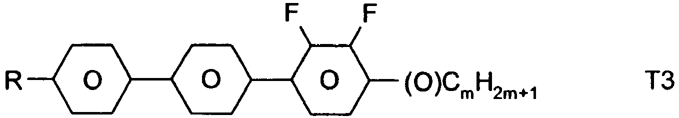 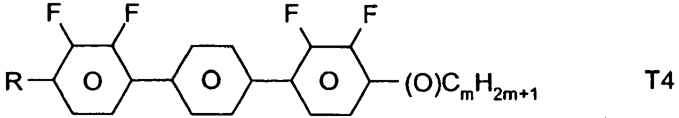 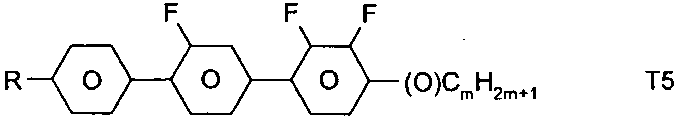 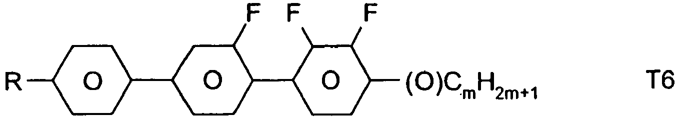 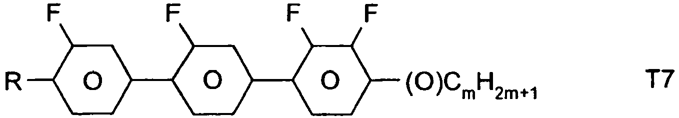 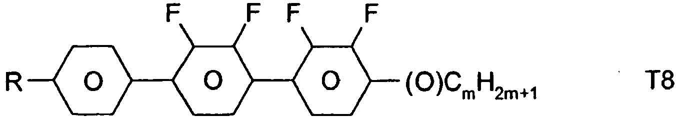 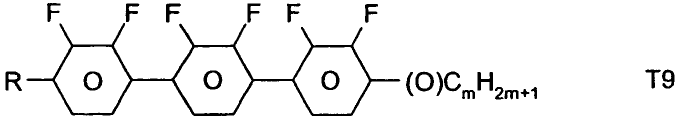 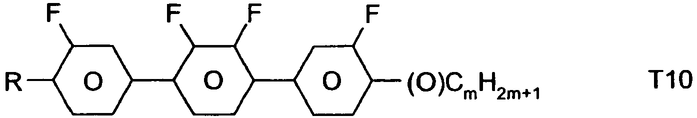 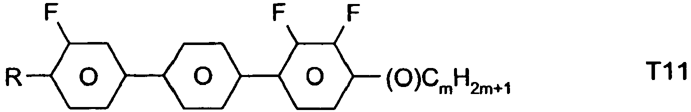 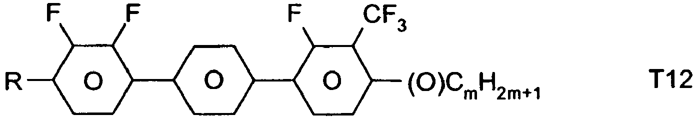 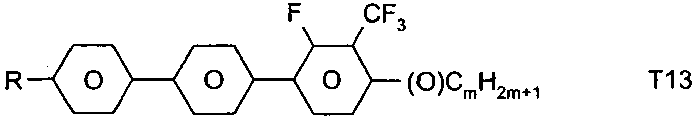 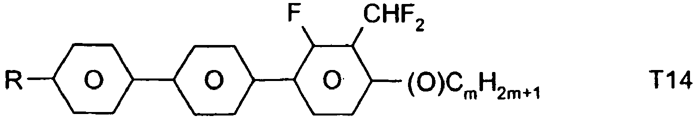 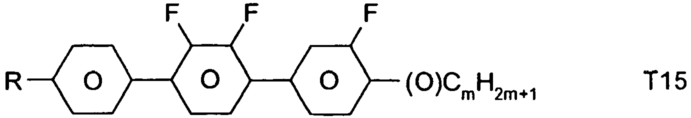 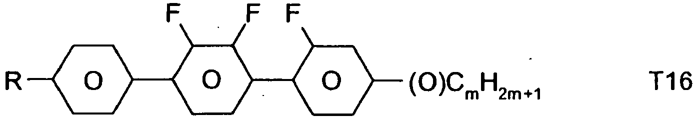 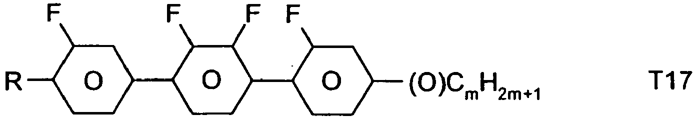 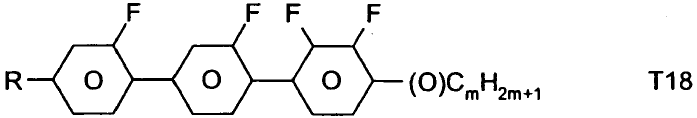 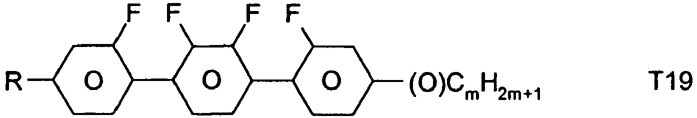 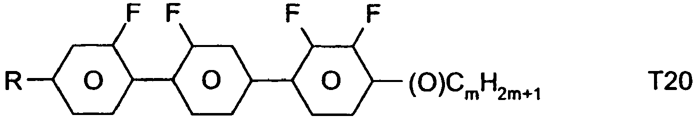 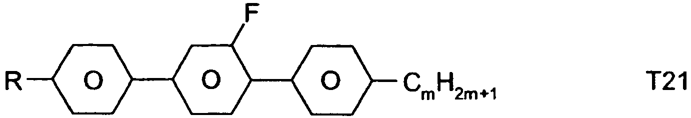 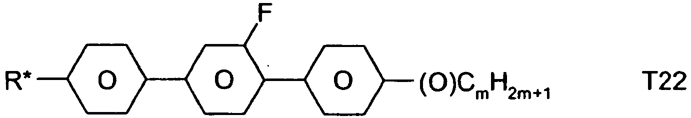 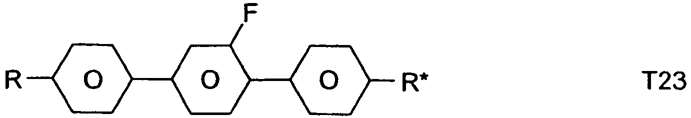 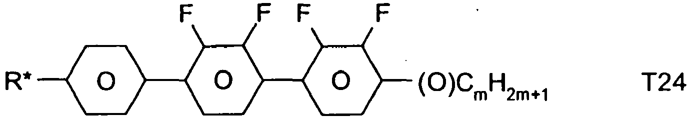 worin R einen geradkettigen Alkyl- oder Alkoxyrest mit 1-7 C-Atomen, R* einen geradkettigen Alkenylrest mit 2-7 C-Atomen, (O) ein Sauerstoffatom oder eine Einfachbindung, und m eine ganze Zahl von 1 bis 6 bedeutet. R* bedeutet vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
   Vorzugsweise bedeutet R Methyl, Ethyl, Propyl, Butyl, Pentyl, Hexyl Methoxy, Ethoxy, Propoxy, Butoxy oder Pentoxy.
   Das erfindungsgemäße FK-Medium enthält die Terphenyle der Formeln T und deren bevorzugte Unterformeln vorzugsweise in einer Menge von 2-30 Gew.%, insbesondere von 5-20 Gew.%.
   Besonders bevorzugt sind Verbindungen der Formeln T1, T2, T3 und T21. In diesen Verbindungen bedeutet R vorzugsweise Alkyl, ferner Alkoxy jeweils mit 1-5 C-Atomen.
   Vorzugsweise werden die Terphenyle in erfindungsgemäßen Mischungen eingesetzt, wenn der Δn-Wert der Mischung ≥ 0,1 sein soll. Bevorzugte Mischungen enthalten 2-20 Gew.% einer oder mehrerer Terphenyl-Verbindungen der Formel T, vorzugsweise ausgewählt aus der Gruppe der Verbindungen T1 bis T22.
i) FK-Medium, welches zusätzlich eine oder mehrere Verbindungen ausgewählt aus der Gruppe bestehend aus folgenden Formeln enthält: 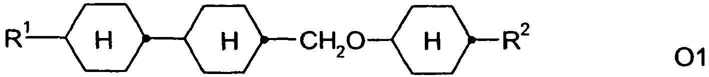 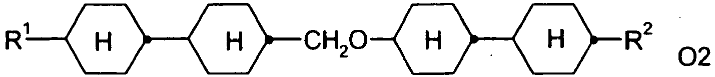 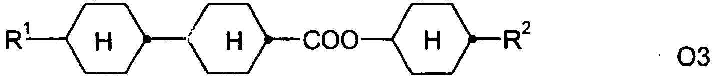 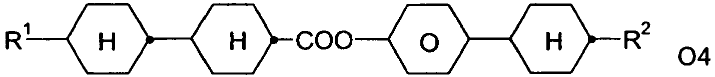 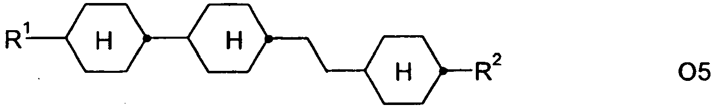 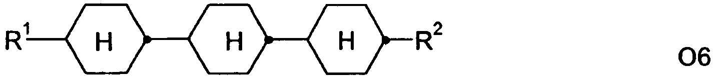 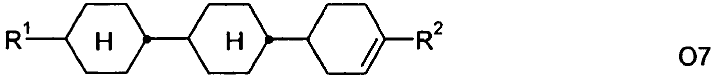 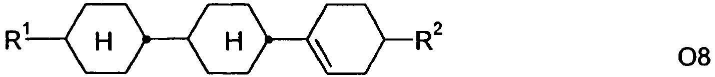 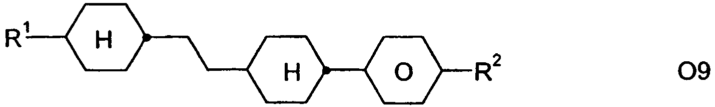 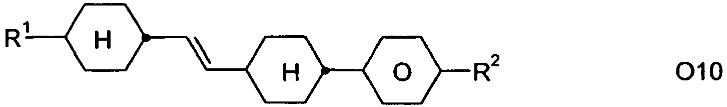 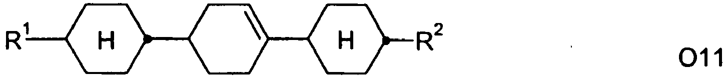 worin R¹ und R² die oben angegebenen Bedeutungen haben, und vorzugsweise jeweils unabhängig voneinander geradkettiges Alkyl mit 1 bis 6 C-Atomen oder geradkettiges Alkenyl mit 2 bis 6 C-Atomen bedeuten.
   Bevorzugte Medien enthalten eine oder mehrere Verbindungen ausgewählt aus den Formeln 01, 03 und 04.
k) FK-Medium, welches zusätzlich eine oder mehrere Verbindungen der folgenden Formel enthält: 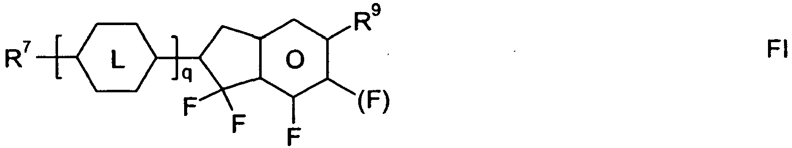 worin 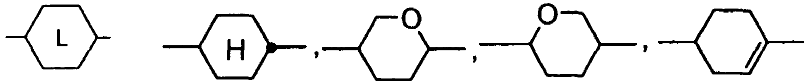 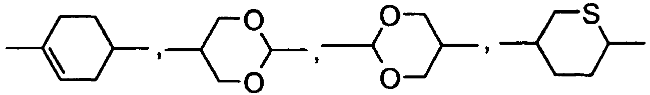 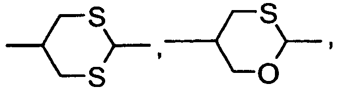
   R⁹ H, CH₃, C₂H₅ oder n-C₃H₇, (F) einen optionalen Fluorsubstituenten und q 1, 2 oder 3 bedeutet, und R⁷ eine der für R¹ angegebenen Bedeutungen hat, vorzugsweise in Mengen von > 3 Gew.%, insbesondere ≥ 5 Gew.%, und ganz besonders bevorzugt von 5-30 Gew.%.
   Besonders bevorzugte Verbindungen der Formel IF sind ausgewählt aus der Gruppe bestehend aus folgenden Unterformeln: 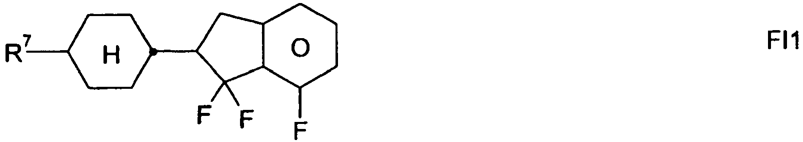 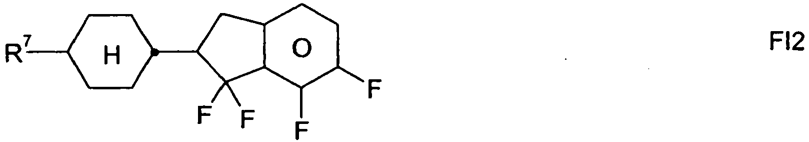 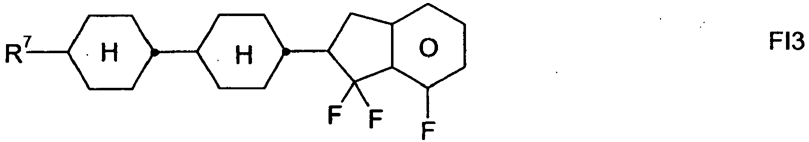 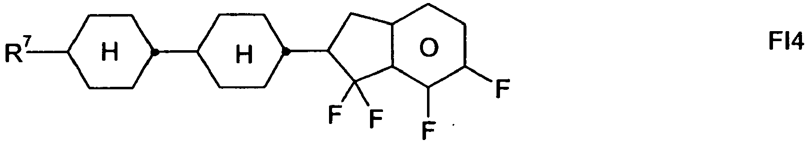 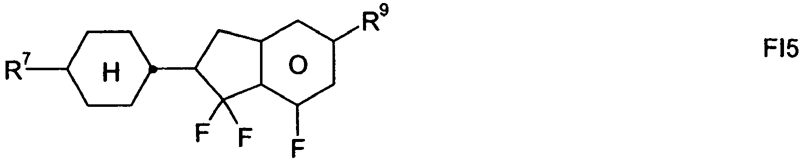 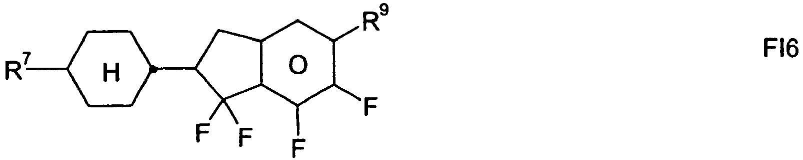 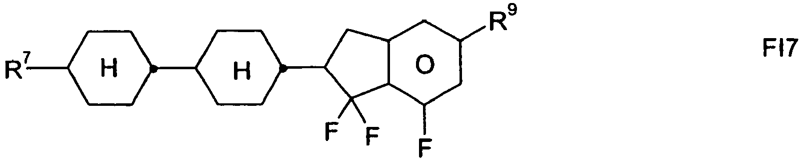 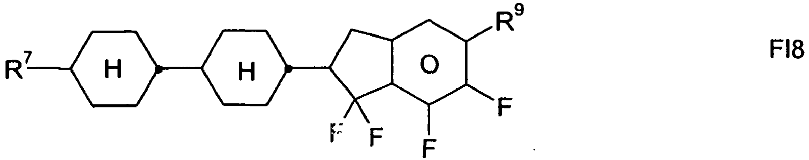 worin R⁷ vorzugsweise geradkettiges Alkyl bedeutet und R⁹ CH₃, C₂H₅ oder n-C₃H₇ bedeutet. Besonders bevorzugt sind die Verbindungen der Formel Fl1, Fl2 und Fl3.
m) FK-Medium, welches zusätzlich eine oder mehrere Verbindungen ausgewählt aus der Gruppe bestehend aus folgenden Formeln enthält: 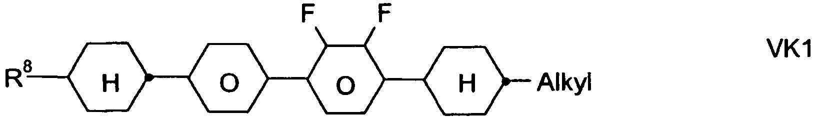 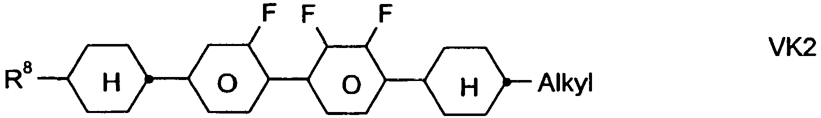 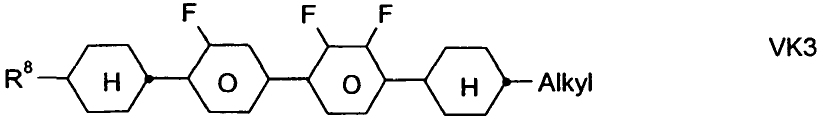 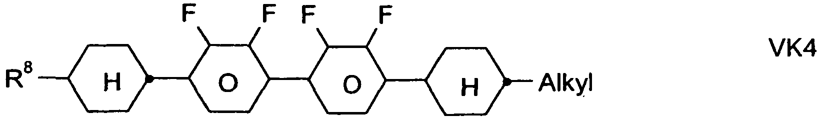 worin R⁸ die für R¹ angegebene Bedeutung hat und Alkyl einen geradkettigen Alkylrest mit 1-6 C-Atomen bedeutet.
n) FK-Medium, welches zusätzlich eine oder mehrere Verbindungen enthält, die eine Tetrahydronaphthyl- oder Naphthyl-Einheit aufweisen, wie z.B. die Verbindungen ausgewählt aus der Gruppe bestehend aus folgenden Formeln: 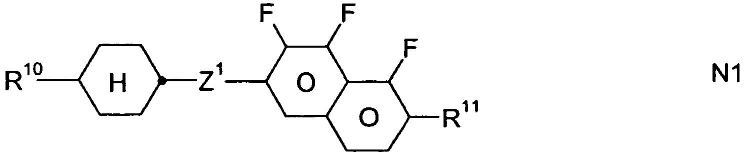 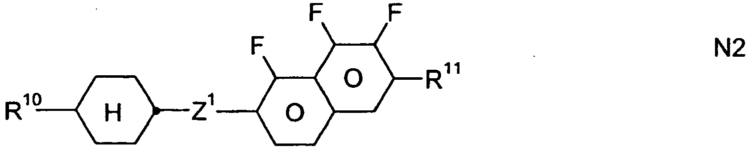 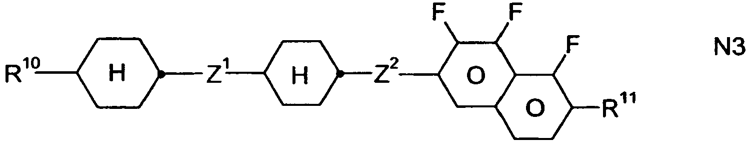 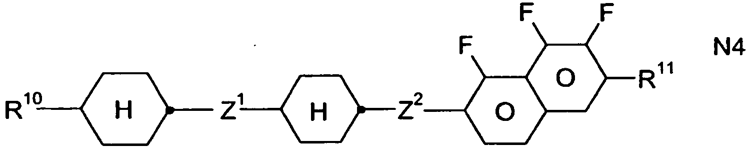 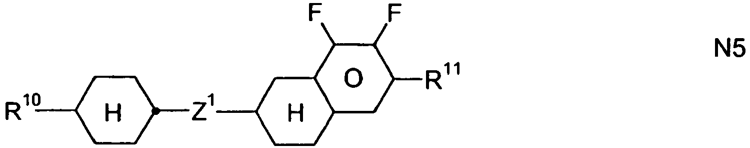 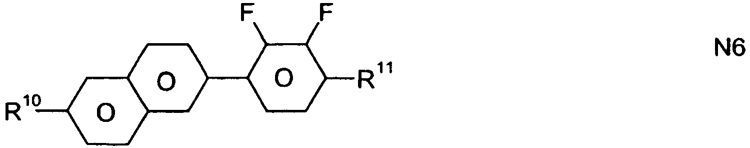 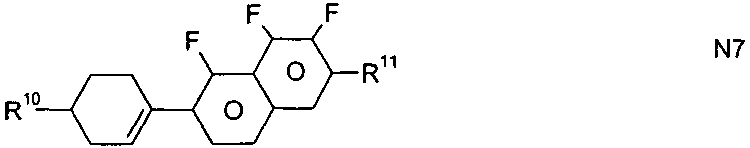 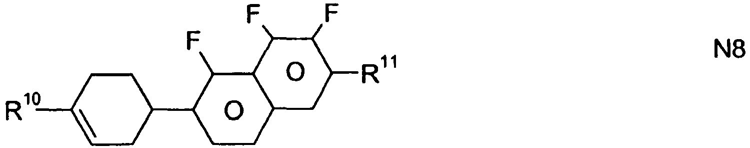 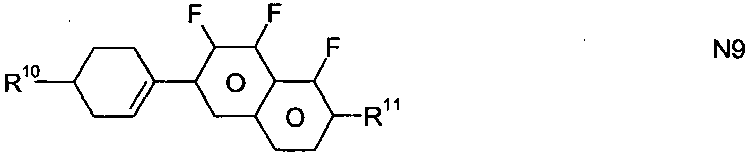 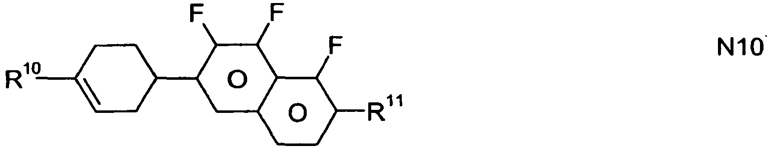 worin R¹⁰ und R¹¹ jeweils unabhängig voneinander eine der für R¹ angegebenen Bedeutungen haben, vorzugsweise geradkettiges Alkyl oder Alkoxy mit 1 bis 6 C-Atomen oder geradkettiges Alkenyl mit 2 bis 6 C-Atomen bedeuten, und Z¹ und Z² jeweils unabhängig voneinander -C₂H₄-, -CH=CH-, -(CH₂)₄-, -(CH₂)₃O-, -O(CH₂)₃-, - CH=CHCH₂CH₂-, -CH₂CH₂CH=CH-, -CH₂O-, -OCH₂-, -COO-, -OCO-, -C₂F₄-, -CF=CF-, -CF=CH-, -CH=CF-, -CH₂- oder eine Einfachbindung bedeuten.
o) FK-Medium, welches zusätzlich eine oder mehrere eine oder mehrere Difluordibenzochromane und/oder Chromane der folgenden Formeln enthält: 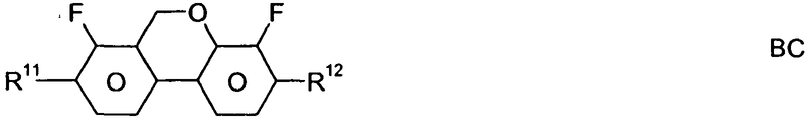 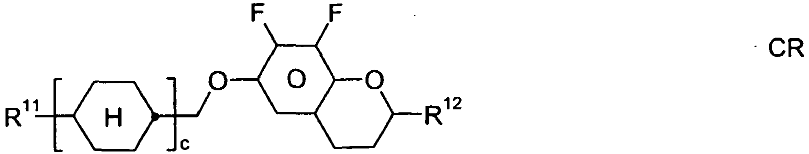 worin R¹¹ und R¹² jeweils unabhängig voneinander die oben angegebene Bedeutung aufweisen, und c 0 oder 1 bedeutet, vorzugsweise in Mengen von 3 bis 20 Gew.%, insbesondere in Mengen von 3 bis 15 Gew.%.
   Besonders bevorzugte Verbindungen der Formeln BC und CR sind ausgewählt aus der Gruppe bestehend aus folgenden Unterformeln: 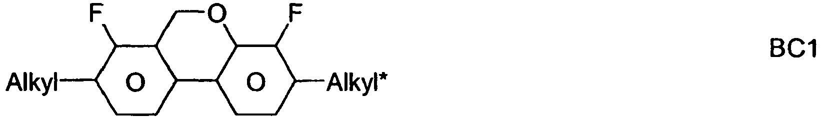 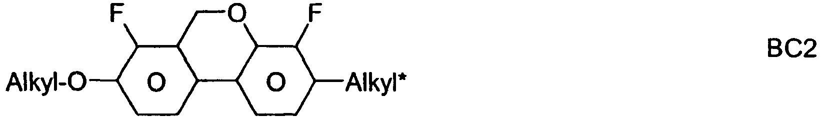 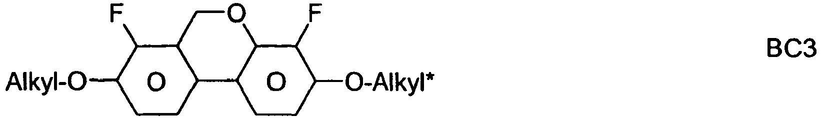 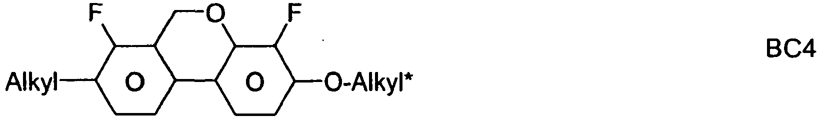 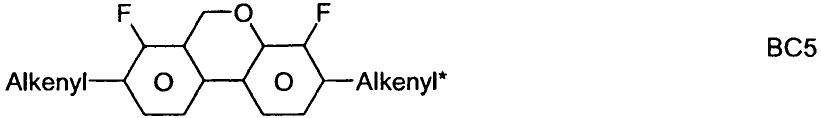 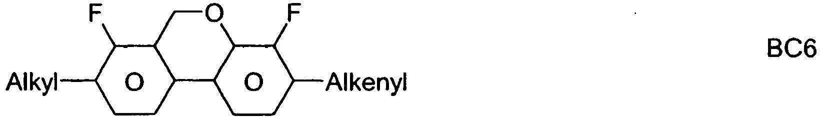 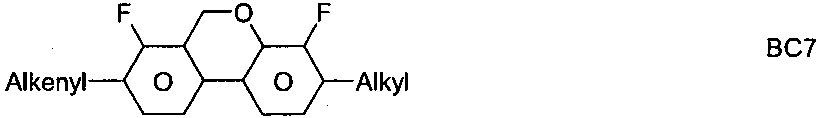 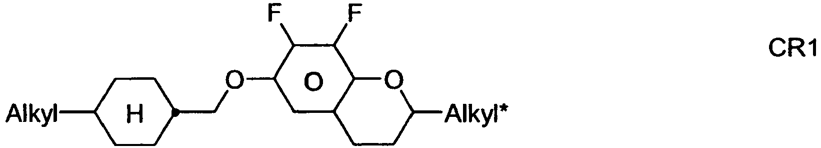 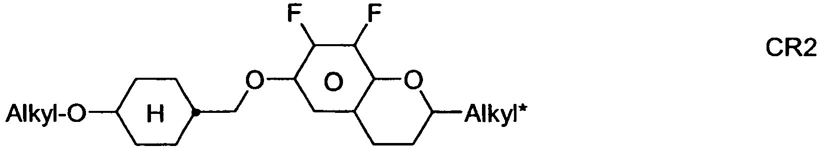 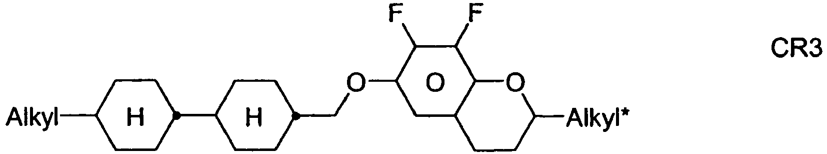 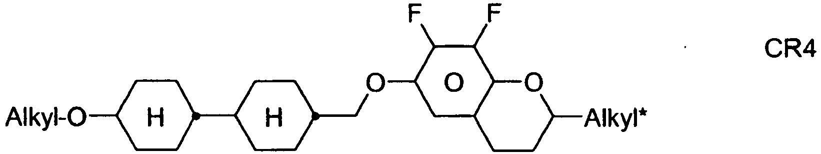 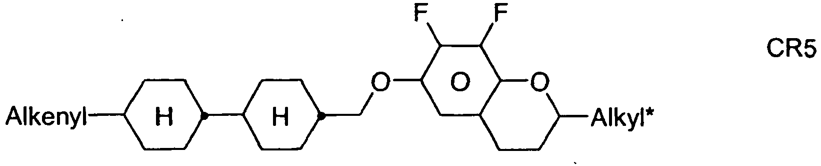 worin Alkyl und Alkyl* jeweils unabhängig voneinander einen geradkettigen Alkylrest mit 1-6 C-Atomen, und Alkenyl und Alkenyl* jeweils unabhängig voneinander einen geradkettigen Alkenylrest mit 2-6 C-Atomen bedeuten. Alkenyl und Alkenyl* bedeuten vorzugsweise CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- oder CH₃-CH=CH-(CH₂)₂-.
   Ganz besonders bevorzugt sind Mischungen enthaltend eine, zwei oder drei Verbindungen der Formel BC-2.
p) FK-Medium, welches zusätzlich eine oder mehrere fluorierte Phenanthrene und/oder Dibenzofurane der folgenden Formeln enthält: 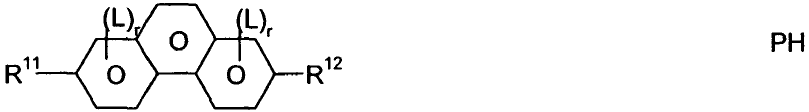 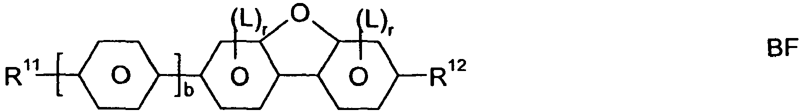 worin R¹¹ und R¹² jeweils unabhängig voneinander die oben angegebenen Bedeutungen besitzen, b 0 oder 1, L F und r 1, 2 oder 3 bedeutet.
   Besonders bevorzugte Verbindungen der Formeln PH und BF sind ausgewählt aus der Gruppe bestehend aus folgenden Unterformeln: 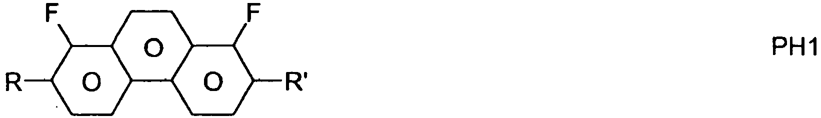 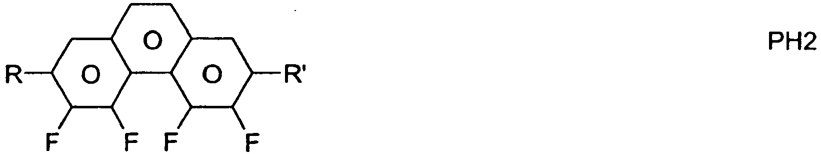 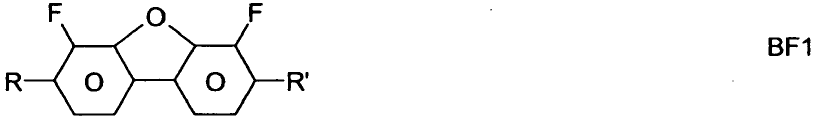 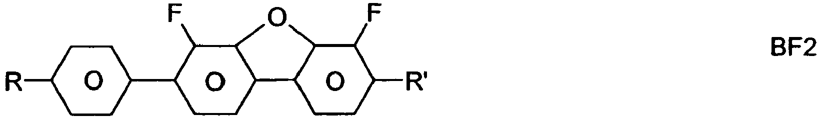 worin R und R' jeweils unabhängig voneinander einen geradkettigen Alkyl- oder Alkoxyrest mit 1-7 C-Atomen bedeuten.
q) FK-Medium, vorzugsweise zur Verwendung in PSA-OCB-Anzeigen, welches eine oder mehrere Verbindungen ausgewählt aus der Gruppe bestehend aus folgenden Formeln enthält: 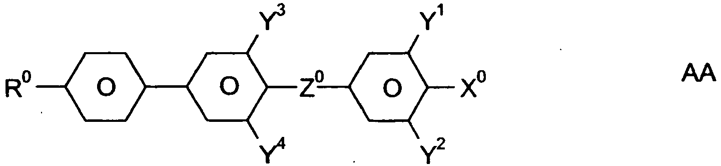 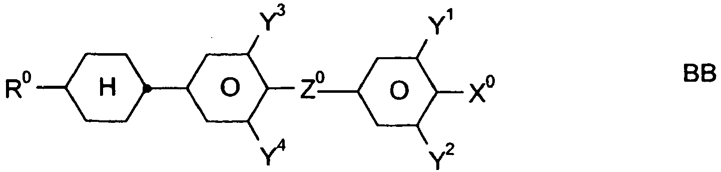 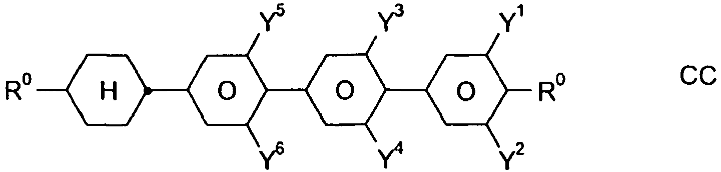 worin
   - R⁰: bei jedem Auftreten gleich oder verschieden n-Alkyl, Alkoxy, Oxaalkyl, Fluoralkyl oder Alkenyl mit jeweils bis zu 9 C-Atomen,
   - X⁰: F, Cl oder jeweils halogeniertes Alkyl, Alkenyl, Alkenyloxy oder Alkoxy mit jeweils bis zu 6 C-Atomen,
   - Z⁰: -CF₂O- oder eine Einfachbindung,
   - Y¹⁻⁶: jeweils unabhängig voneinander H oder F,
   bedeuten.
   X⁰ ist vorzugsweise F, Cl, CF₃, CHF₂, OCF₃, OCHF₂, OCFHCF₃, OCFHCHF₂, OCFHCHF₂, OCF₂CH₃, OCF₂CHF₂, OCF₂CHF₂, OCF₂CF₂CHF₂, OCF₂CF₂CHF₂, OCFHCF₂CF₃, OCFHCF₂CHF₂, OCF₂CF₂CF₃, OCF₂CF₂CClF₂, OCClFCF₂CF₃ oder CH=CF₂, besonders bevorzugt F oder OCF₃.
   Die Verbindungen der Formel AA sind vorzugsweise ausgewählt aus der Gruppe bestehend aus folgenden Formeln: 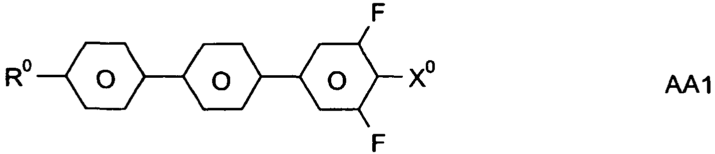 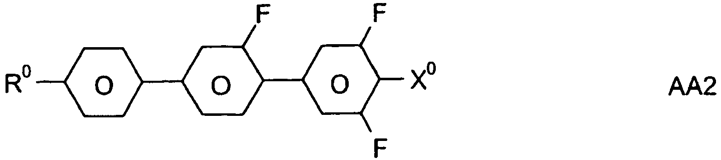 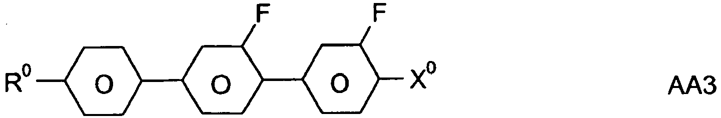 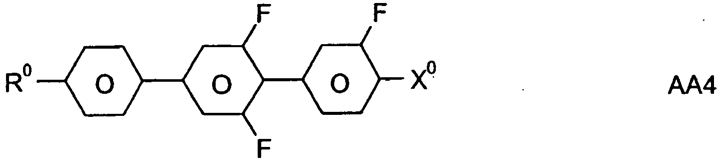 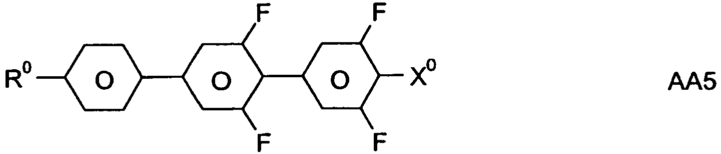 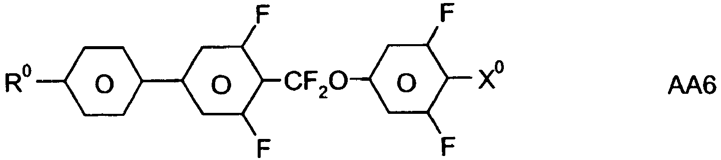 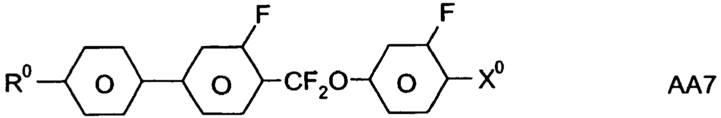 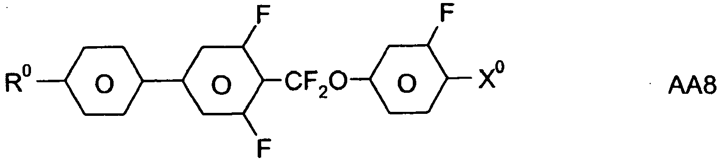 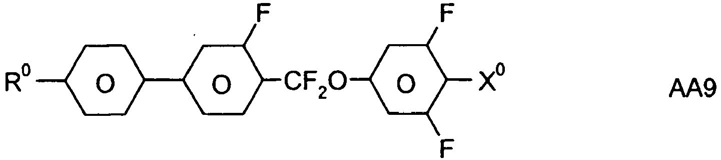 worin R⁰ und X⁰ die oben angegebene Bedeutung besitzen, und X⁰ vorzugsweise F bedeutet. Besonders bevorzugt sind Verbindungen der Formeln AA2 und AA6.
   Die Verbindungen der Formel BB sind vorzugsweise ausgewählt aus der Gruppe bestehend aus folgenden Formeln: 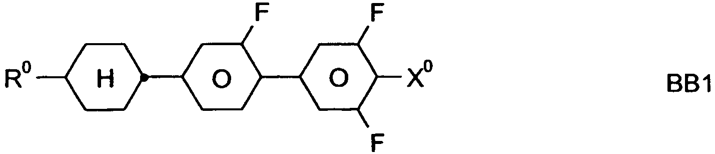 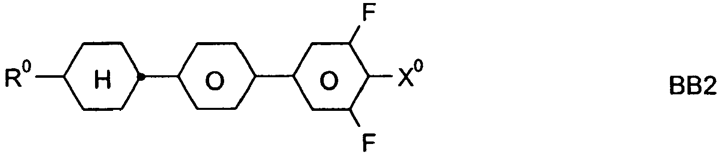 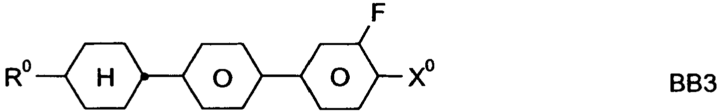 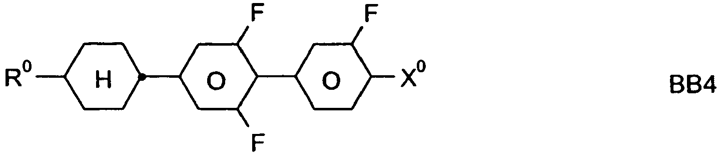 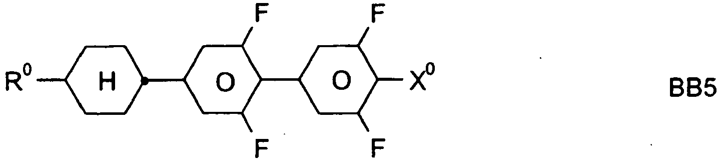 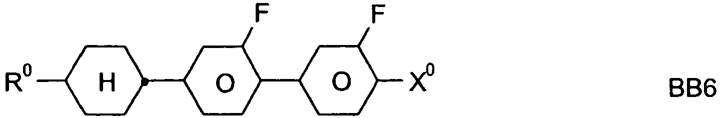 worin R⁰ und X⁰ die oben angegebene Bedeutung besitzen, und X⁰ vorzugsweise F bedeutet. Besonders bevorzugt sind Verbindungen der Formeln BB1, BB2 und BB5.
   Die Verbindungen der Formel CC sind vorzugsweise ausgewählt aus folgender Formel: 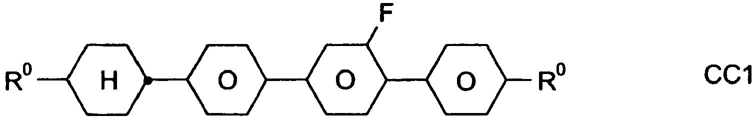 worin R⁰ bei jedem Auftreten gleich oder verschieden die oben angegebene Bedeutung besitzt, und vorzugsweise Alkyl mit 1 bis 6 C-Atomen bedeutet.
r) FK-Medium, welches außer den polymerisierbaren Verbindungen der Formel I oder deren Unterformeln sowie den Comonomeren keine Verbindungen enthält, die eine endständige Vinyloxygruppe (-O-CH=CH₂) aufweisen.
s) FK-Medium, welches 1 bis 5, vorzugsweise 1, 2 oder 3 polymerisierbare Verbindungen enthält.
t) FK-Medium, worin der Anteil an polymerisierbaren Verbindungen im Gesamtgemisch 0,05 bis 5 %, vorzugsweise 0,1 bis 1 % beträgt.
u) FK-Medium, welches 1 bis 8, vorzugsweise 1 bis 5 Verbindungen der Formel CY1, CY2, PY1 und/oder PY2 enthält. Der Anteil dieser Verbindungen im Gesamtgemisch beträgt vorzugsweise 5 bis 60 %, besonders bevorzugt 10 bis 35 %. Der Gehalt dieser einzelnen Verbindungen beträgt vorzugsweise jeweils 2 bis 20 %.
v) FK-Medium, welches 1 bis 8, vorzugsweise 1 bis 5 Verbindungen der Formel CY9, CY10, PY9 und/oder PY10 enthält. Der Anteil dieser Verbindungen im Gesamtgemisch beträgt vorzugsweise 5 bis 60 %, besonders bevorzugt 10 bis 35 %. Der Gehalt dieser einzelnen Verbindungen beträgt vorzugsweise jeweils 2 bis 20 %.
w) FK-Medium, welches 1 bis 10, vorzugsweise 1 bis 8 Verbindungen der Formel ZK enthält, insbesondere Verbindungen der Formel ZK1, ZK2 und/oder ZK6. Der Anteil dieser Verbindungen im Gesamtgemisch beträgt vorzugsweise 3 bis 25 %, besonders bevorzugt 5 bis 45 %. Der Gehalt dieser einzelnen Verbindungen beträgt vorzugsweise jeweils 2 bis 20 %.
x) FK-Medium, worin der Anteil an Verbindungen der Formel CY, PY und ZK im Gesamtgemisch mehr als 70 %, vorzugsweise mehr als 80 % beträgt,
y) PSA-VA-Anzeige, worin der pretilt-Winkel vorzugsweise ≤ 85°, besonderes bevorzugt ≤ 80° beträgt.

Die Kombination von Verbindungen der oben genannten bevorzugten Ausführungsformen a)-y) mit den oben beschriebenen polymerisierten Verbindungen bewirkt in den erfindungsgemäßen FK-Medien niedrige Schwellenspannungen, niedrige Rotationsviskositäten und sehr gute Tieftemperaturstabilitäten bei gleichbleibend hohen Klärpunkten und hohen HR-Werten, und erlaubt die schnelle Einstellung eines besonders niedrigen pretilt-Winkels in PSA-Anzeigen. Insbesondere zeigen die FK-Medien in PSA-Anzeigen im Vergleich zu den Medien aus dem Stand der Technik deutlich verringerte Schaltzeiten, insbesondere auch der Graustufenschaltzeiten.

Vorzugsweise weist die Flüssigkristallmischung einen nematischen Phasenbereich von mindestens 80 K, besonders bevorzugt von mindestens 100 K, und eine Rotationsviskosität von nicht mehr als 250, vorzugsweise nicht mehr als 200 mPa·s, bei 20°C auf.

Erfindungsgemäße FK-Medien zur Verwendung in Anzeigen des VA-Typs weisen eine negative dielektrische Anisotropie Δε auf, vorzugsweise von etwa -0,5 bis -10, insbesondere von etwa -2,5 bis -7,5 bei 20°C und 1 kHz.

In den erfindungsgemäßen Anzeigen des VA-Typs sind die Moleküle in der Schicht des FK-Mediums im ausgeschalteten Zustand senkrecht zu den Elektrodenflächen (homöotrop) oder gekippt homöotrop (engl. "tilted") orientiert. Bei Anlegen einer elektrischen Spannung an die Elektroden findet eine Umorientierung der FK-Moleküle mit den Moleküllängsachsen parallel zu den Elektrodenflächen statt.

In den erfindungsgemäßen Anzeigen des OCB-Typs sind die Moleküle in der Schicht des FK-Mediums eine "bend"-Orientierung auf. Bei Anlegen einer elektrischen Spannung findet eine Umorientierung der FK-Moleküle mit den Moleküllängsachsen senkrecht zu den Elektrodenflächen statt.

Erfindungsgemäße FK-Medien zur Verwendung in Anzeigen des OCB-Typs weisen eine positive dielektrische Anisotropie Δε auf, vorzugsweise von etwa +7 bis +17 bei 20°C und 1 kHz.

Die Doppelbrechung Δn in erfindungsgemäßen FK-Medien zur Verwendung in Anzeigen des VA-Typs liegt vorzugsweise unter 0,16, besonders bevorzugt zwischen 0,06 und 0,14, insbesondere zwischen 0,07 und 0,12.

Die Doppelbrechung Δn in erfindungsgemäßen FK-Medien zur Verwendung in Anzeigen des OCB-Typs liegt vorzugsweise zwischen 0,14 und 0,22, insbesondere zwischen 0,16 und 0,22.

Die erfindungsgemäßen FK-Medien können auch weitere, dem Fachmann bekannte und in der Literatur beschriebene Zusätze oder Additive enthalten, wie beispielsweise Polymerisationsinitiatoren, Inhibitoren, Stabilisatoren, oberflächenaktive Substanzen oder chirale Dotierstoffe. Diese können polymerisierbar oder unpolymerisierbar sein. Polymerisierbare Additive werden dementsprechend der polymerisierbaren Komponente oder Komponente A) zugerechnet. Unpolymerisierbare Additive werden dementsprechend der unpolymerisierbaren Komponente oder Komponente B) zugerechnet.

Die FK.Medien können beispielsweise einen oder mehrere chirale Dotierstoffe enthalten, vorzusgweise solche ausgewählt aus der Gruppe bestehned aus Verbindungen der nachfolgenden Tabelle B.

Femer können den FK.Medien beispielsweise 0 bis 15 Gew.-% pleochroitische Farbstoffe zugesetzt werde, ferner Nanopartikel, Leitsalze, vorzugsweise Ethyl-dimethyldodecylammonium-4-hexoxy-benzoat, Tetrabutylammoniumtetraphenylborat oder Komplexsalze von Kronenethern (vgl. z.B. Haller et al., Mol. Cryst. Liq. Cryst. 24, 249-258 (1973)) zur Verbesserung der Leitfähigkeit, oder Substanzen zur Veränderung der dielektrischen Anisotropie, der Viskosität und/oder der Orientierung der nematischen Phasen. Derartige Substanzen sind z.B. in DE-A 22 09 127, 22 40 864, 23 21 632, 23 38 281, 24 50 088, 26 37 430 und 28 53 728 beschrieben.

Die einzelnen Komponenten der bevorzugten Ausführungsformen a)-z) der erfindungsgemäßen FK-Medien sind entweder bekannt, oder ihre Herstellungsweisen sind für den einschlägigen Fachmann aus dem Stand der Technik ohne weiteres abzuleiten, da sie auf in der Literatur beschriebenen Standardverfahren basieren. Entsprechende Verbindungen der Formel CY werden beispielsweise in EP-A-0 364 538 beschrieben. Entsprechende Verbindungen der Formel ZK werden beispielsweise in DE-A-26 36 684 und DE-A-33 21 373 beschrieben.

Die Herstellung der erfindungsgemäß verwendbaren FK-Medien erfolgt in an sich üblicher Weise, beispielsweise indem man eine oder mehrere der oben genannten Verbindungen mit einer oder mehreren polymerisierbaren Verbindungen wie oben definiert, und ggf. mit weiteren flüssigkristallinen Verbindungen und/oder Additiven mischt. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation. Das Verfahren zur Herstellung der erfindungsgemäßen FK-Medien ist ein weiterer Gegenstand der Erfindung.

Es versteht sich für den Fachmann von selbst, daß die erfindungsgemäßen FK-Medien auch Verbindungen enthalten können, worin beispielsweise H, N, O, Cl, F durch die entsprechenden Isotope ersetzt sind.

Der Aufbau der erfindungsgemäßen FK-Anzeigen entspricht der für PSA-Anzeigen üblichen Geometrie, wie er im eingangs zitierten Stand der Technik beschrieben ist. Es sind Geometrien ohne Protrusions bevorzugt, insbesondere diejenigen, bei denen darüber hinaus die Elektrode auf der Colour Filter-Seite unstrukturiert ist und lediglich die Elektrode auf der TFT-Seite Schlitze aufweist. Besonders geeignete und bevorzugte Elektrodenstrukturen für PSA-VA-Anzeigen sind beispielsweise in US 2006/0066793 A1 beschrieben.

Die folgenden Beispiele erläutern die vorliegende Erfindung ohne sie zu begrenzen. Sie zeigen dem Fachmann jedoch bevorzugte Mischungskonzepte mit bevorzugt einzusetzenden Verbindungen und deren jeweiligen Konzentrationen sowie deren Kombinationen miteinander. Außerdem illustrieren die Beispiele, welche Eigenschaften und Eigenschftskombinationen zugänglich sind.

Folgende Abkürzungen werden verwendet:
(n, m, z: jeweils unabhängig voneinander 1, 2, 3, 4, 5 oder 6)

**Tabelle A**

| | |
|---|---|
| 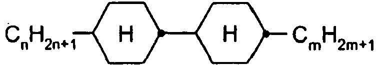 | 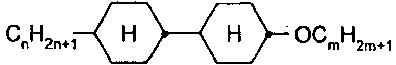 |
| CCH-nm | CCH-nOm |
| 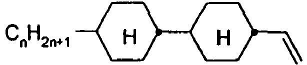 | 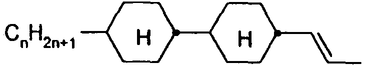 |
| CC-n-V | CC-n-V1 |
| 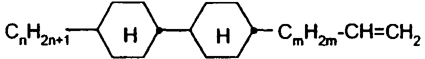 | 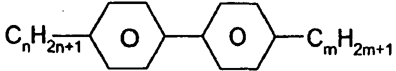 |
| CC-n-mV | PP-n-m |
| 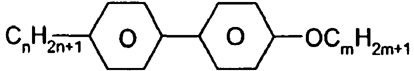 | 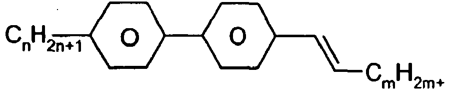 |
| PP-n-Om | PP-n-Vm |
| 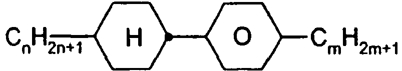 | 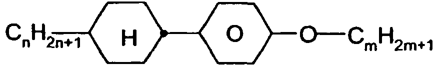 |
| PCH-nm | PCH-nOm |
| 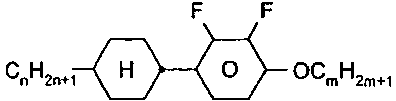 | 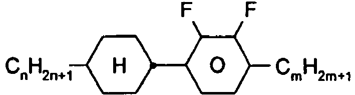 |
| CY-n-Om | CY-n-m |
| 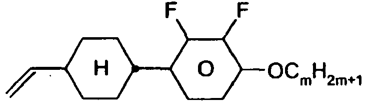 | 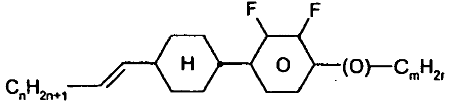 |
| CY-V-Om | CY-nV-(O)m |
| 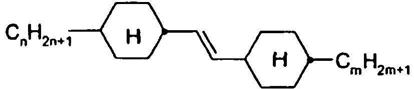 | 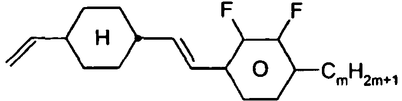 |
| CVC-n-m | CVY-V-m |
| 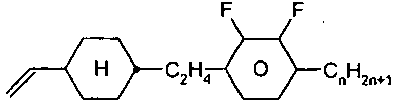 | 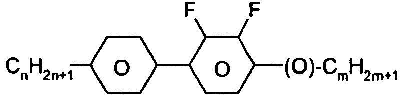 |
| CEY-V-m | PY-n-(O)m |
| 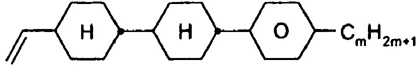 | 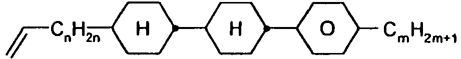 |
| CCP-V-m | CCP-Vn-m |
| 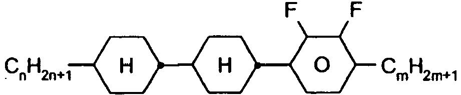 | 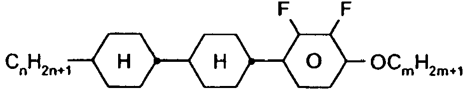 |
| CCY-n-m | CCY-n-Om |
| 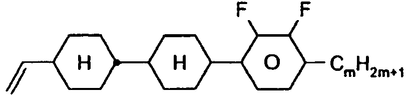 | 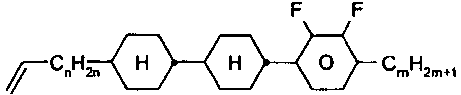 |
| CCY-V-m | CCY-Vn-m |
| 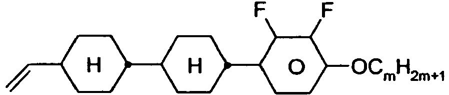 | 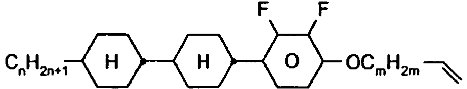 |
| CCY-V-Om | CCY-n-OmV |
| 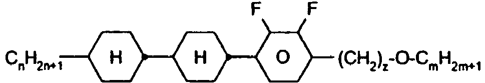 | 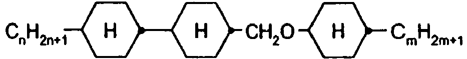 |
| CCY-n-zOm | CCOC-n-m |
| 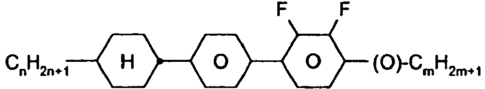 | 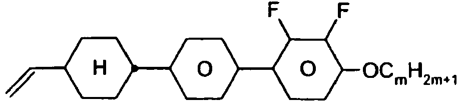 |
| CPY-n-(O)m | CPY-V-Om |
| 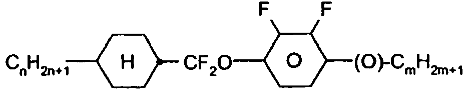 | 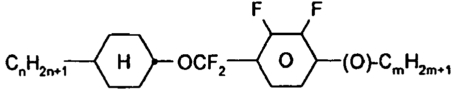 |
| CQY-n-(O)m | CQIY-n-(O)m |
| 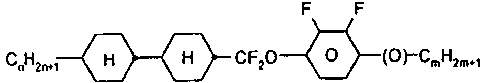 | 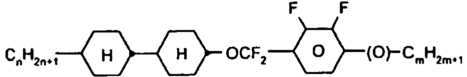 |
| CCQY-n-(O)m | CCQIY-n-(O)m |
| 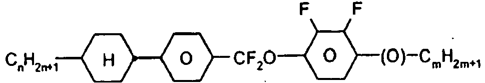 | 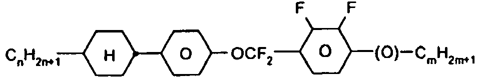 |
| CPQY-n-(O)m | CPQIY-n-Om |
| 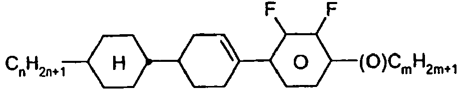 | 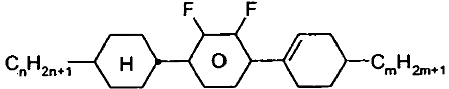 |
| CLY-n-(O)m | CYLI-n-m |
| 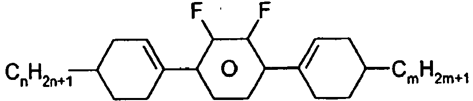 | 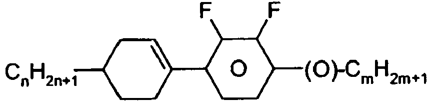 |
| LYLI-n-m | LY-n-(O)m |
| 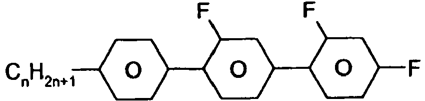 | 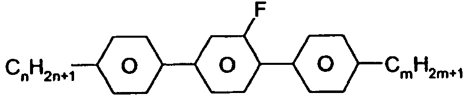 |
| PGIGI-n-F | PGP-n-m |
| 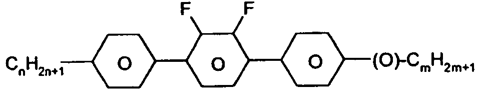 | 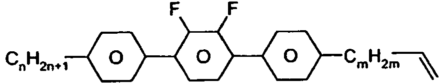 |
| PYP-n-(O)m | PYP-n-mV |
| 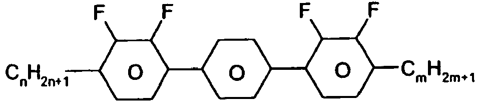 | 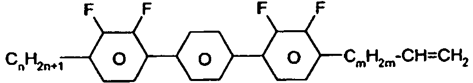 |
| YPY-n-m | YPY-n-mV |
| 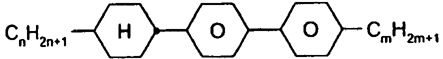 | 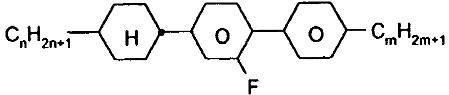 |
| BCH-nm | BCH-nmF |
| 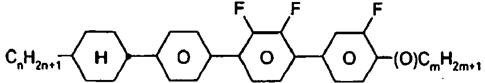 | 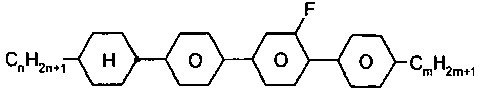 |
| CPYP-n-(O)m | CPGP-n-m |
| 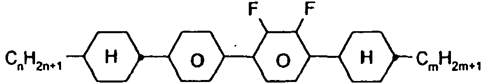 | 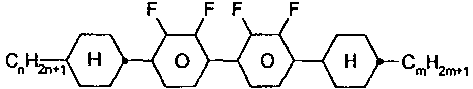 |
| CPYC-n-m | CYYC-n-m |
| 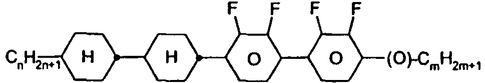 | 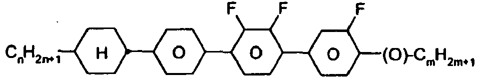 |
| CCYY-n-m | CPYG-n-(O)m |
| 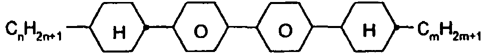 | 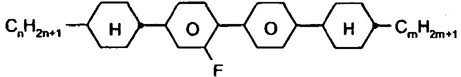 |
| CBC-nm | CBC-nmF |
| 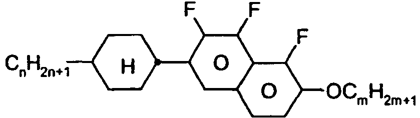 | 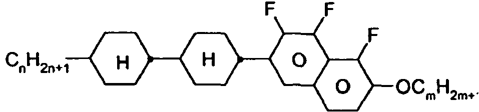 |
| CNap-n-Om | CCNap-n-Om |
| 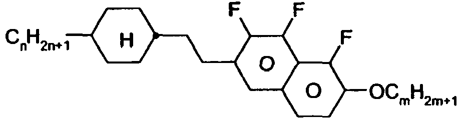 | 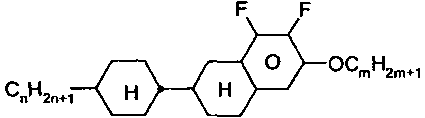 |
| CENap-n-Om | CTNap-n-Om |
| 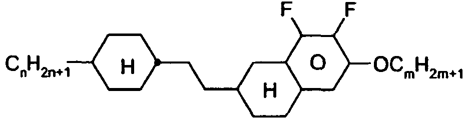 | 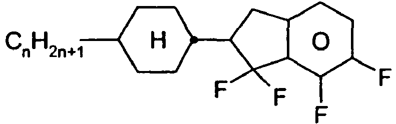 |
| CETNap-n-Om | CK-n-F |
| 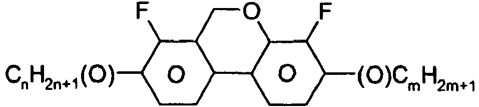 | 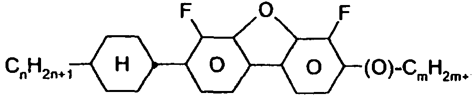 |
| DFDBC-n(O)-(O)m | C-DFDBF-n-(O)m |

In einer bevorzugten Ausführungsform der vorliegenden Erfindung enthalten die erfindungsgemäßen FK-Medien eine oder mehrere Verbindungen ausgewählt aus der Guppe bestehend aus Verbindungen der Tabelle A.

**Tabelle B**

| | |
|---|---|
| In der Tabelle B werden mögliche chirale Dotierstoffe angegeben, die den erfindungsgemäßen FK-Medien zugesetzt werden können. | |
| 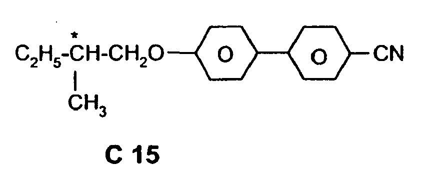 | 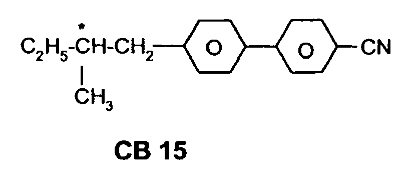 |
| 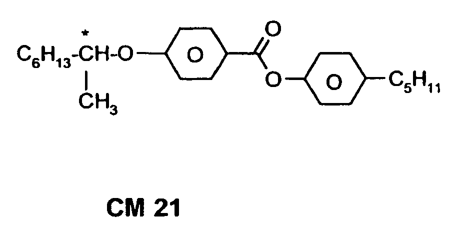 | 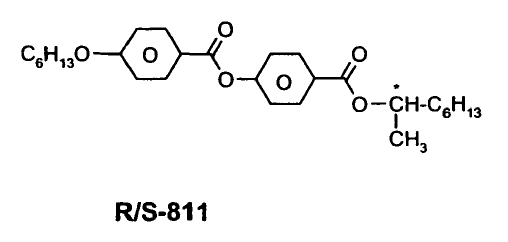 |
| 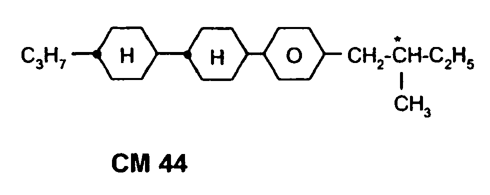 | 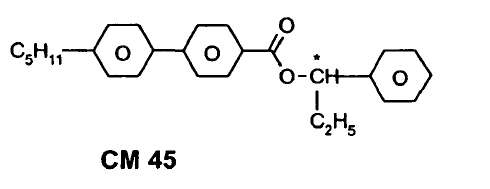 |
| 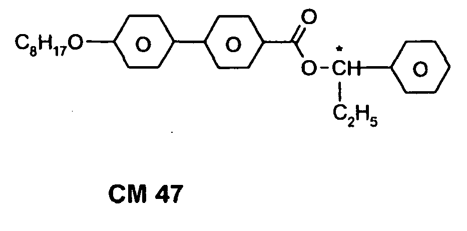 | 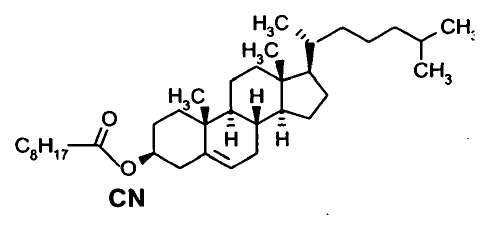 |
| 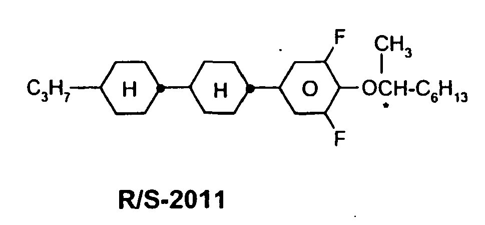 | 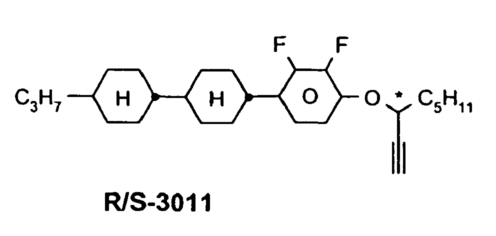 |
| 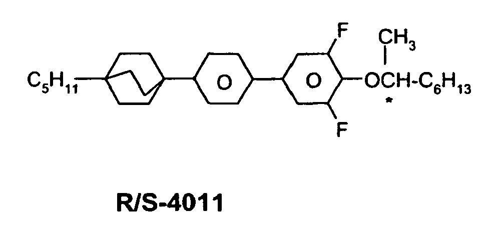 | 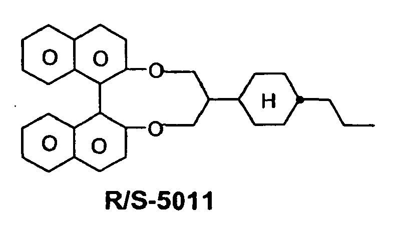 |
| 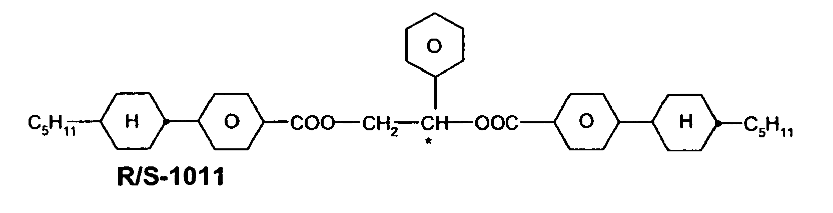 | |

Vorzugsweise enthalten die FK-Medien 0 bis 10 Gew.%, insbesondere 0,01 bis 5 Gew.% und besonders bevorzugt 0,1 bis 3 Gew.% an Dotierstoffen. Vorzugsweise enthalten die FK-Medien einen oder mehrere Dotierstoffe ausgewählt aus der Guppe bestehend aus Verbindungen der Tabelle B.

**Tabelle C**

| | |
|---|---|
| In der Tabelle C werden mögliche Stabilisatoren angegeben, die den erfindungsgemäßen FK-Medien zugesetzt werden können. (n bedeutet hier eine ganze Zahl von 1 bis 12) | |
| 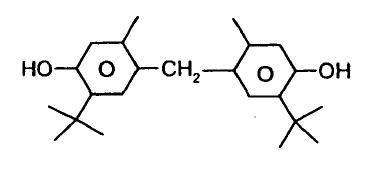 | 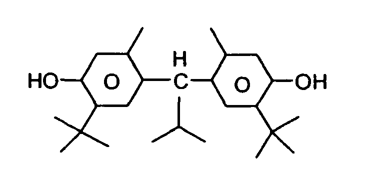 |
| 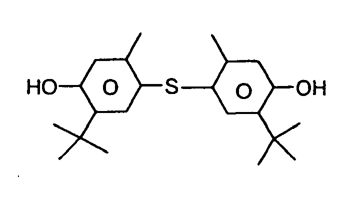 | 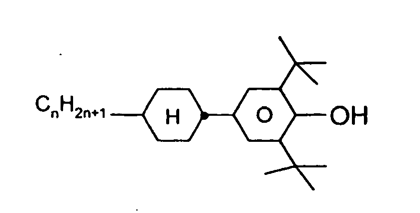 |
| 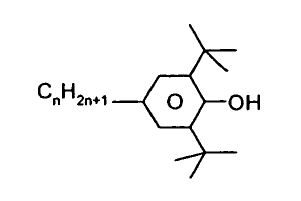 | 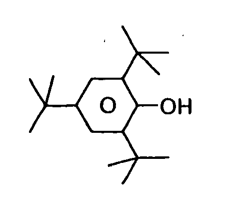 |
| 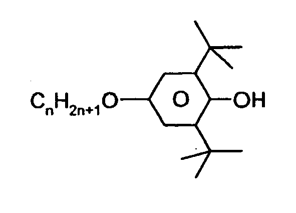 | 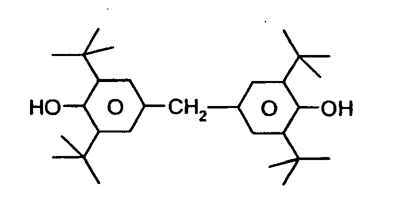 |
| 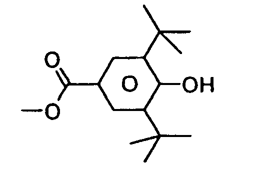 | 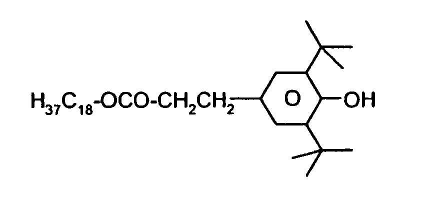 |
| 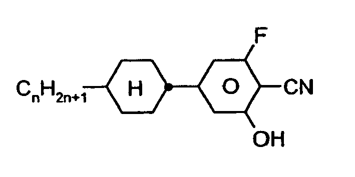 | 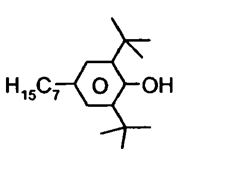 |
| 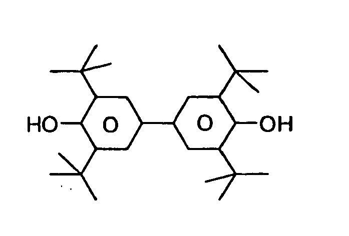 | 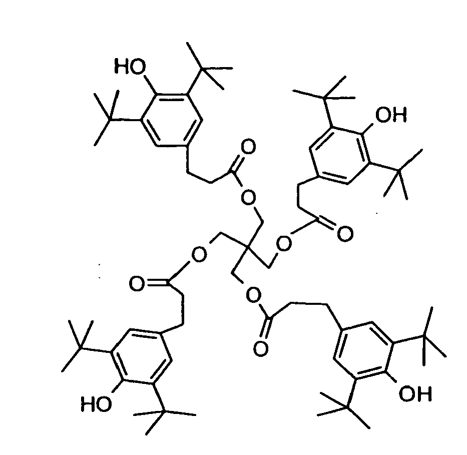 |
| 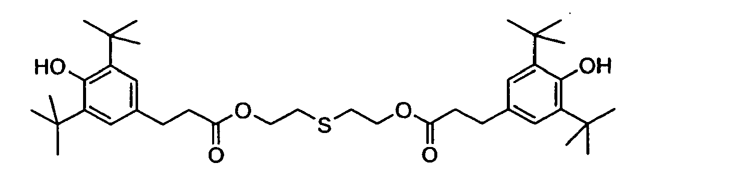 | |
| 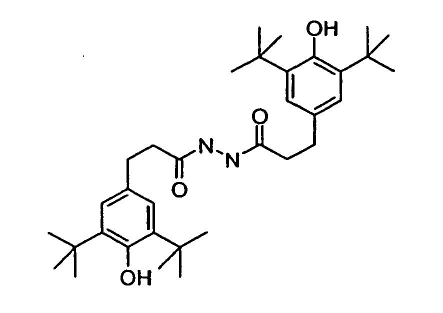 | 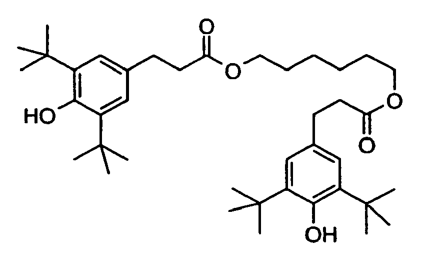 |
| 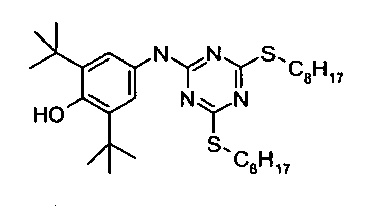 | 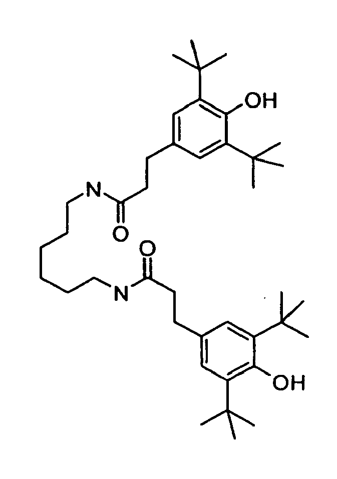 |
| 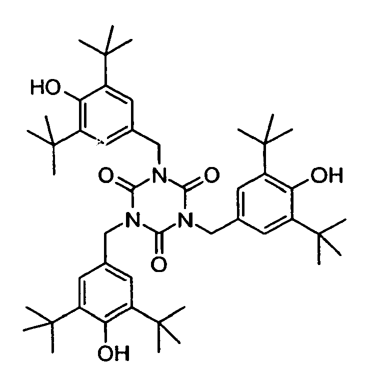 | 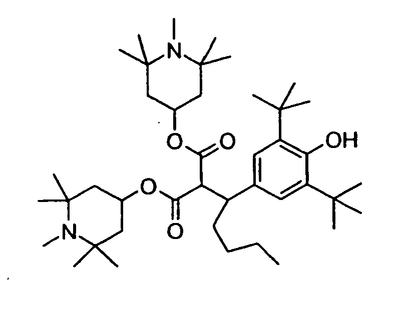 |
| 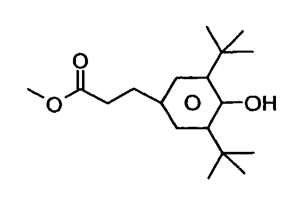 | 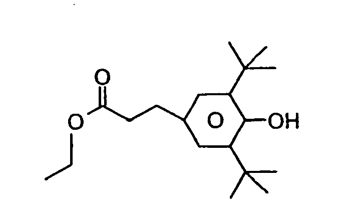 |
| 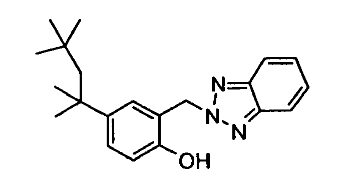 | 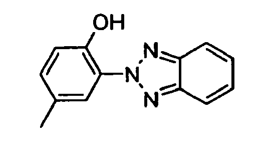 |
| 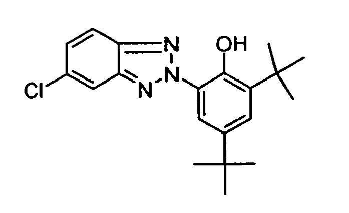 | 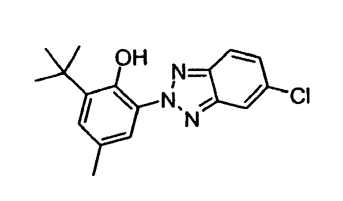 |
| 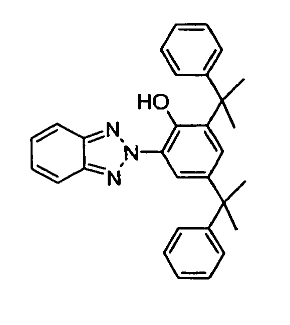 | 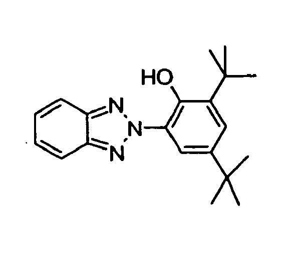 |
| 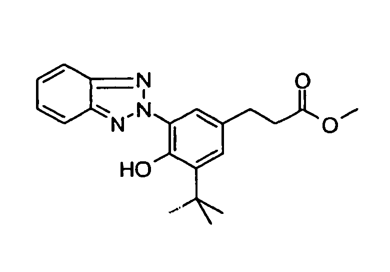 | 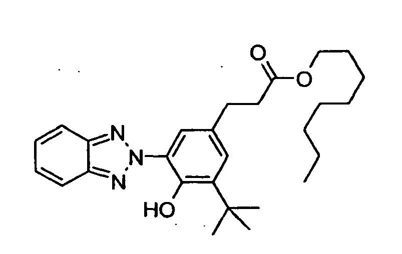 |
| 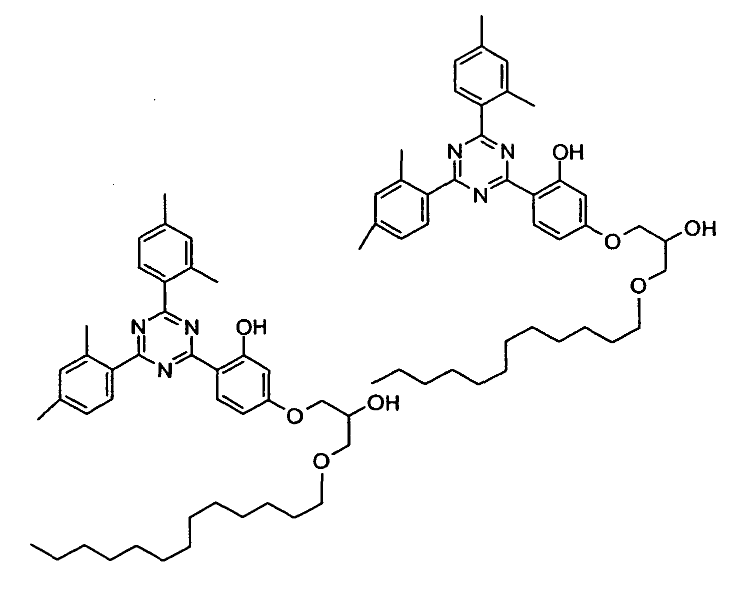 | |
| 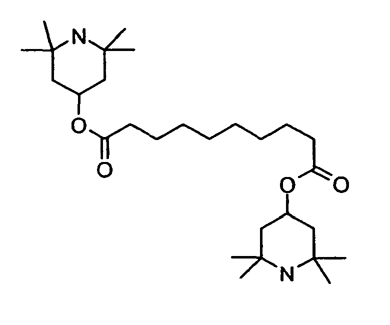 | 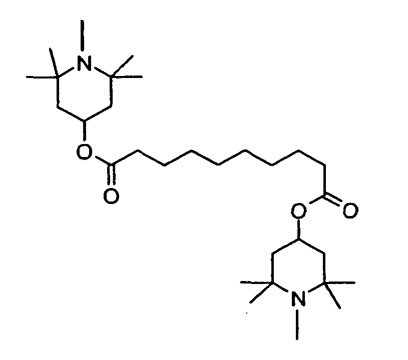 |

Vorzugsweise enthalten die FK-Medien 0 bis 10 Gew.%, insbesondere 1 ppm bis 5 Gew.% und besonders bevorzugt 1 ppm bis 1 Gew.% an Stabilisatoren. Vorzugsweise enthalten die FK-Medien einen oder mehrere Stabilisatoren ausgewählt aus der Gruppe bestehend aus Verbindungen der Tabelle C.

Außerdem werden folgende Abkürzungen und Symbole verwendet:

| | |
|---|---|
| Vₒ | Schwellenspannung, kapazitiv [V] bei 20°C, |
| nₑ | außerordentlicher Brechungsindex bei 20°C und 589 nm, |
| nₒ | ordentlicher Brechungsindex bei 20°C und 589 nm, |
| Δn | optische Anisotropie bei 20°C und 589 nm, |
| ε_{⊥} | dielektrische Suszeptibilität senkrecht zum Direktor bei 20°C und 1 kHz, |
| ε_{∥} | dielektrische Suszeptibilität parallel zum Direktor bei 20°C und 1 kHz, |
| Δε | dielektrische Anisotropie bei 20°C und 1 kHz, |
| Kp., T(N,I) | Klärpunkt [°C], |
| γ₁ | Rotationsviskosität bei 20°C [mPa·s], |
| K₁ | elastische Konstante, "splay"-Deformation bei 20°C [pN], |
| K₂ | elastische Konstante, "twist"-Deformation bei 20°C [pN], |
| K₃ | elastische Konstante, "bend"-Deformation bei 20°C [pN], |
| LTS | "low temperature stability" (Phase), bestimmt in Testzellen, |
| HR₂₀ | "voltage holding ratio" bei 20°C [%] und |
| HR₁₀₀ | "voltage holding ratio" bei 100°C [%]. |

Soweit nicht explizit anders vermerkt, sind in der vorliegenden Anmeldung alle Konzentrationen in Gewichtsprozent angegeben und beziehen sich auf die entsprechende Gesamtmischung, enthaltend alle festen oder flüssigkristallinen Komponenten, ohne Lösungsmittel.

Soweit nicht explizit anders vermerkt, sind in der vorliegenden Anmeldung alle angegebenen Werte für Temperaturen, wie z. B. der Schmelzpunkt T(C,N), der Übergang von der smektischen (S) zur nematischen (N) Phase T(S,N) und der Klärpunkt T(N,I), in Grad Celsius (°C) angegeben. "Fp." oder "Schmp." bedeutet Schmelzpunkt, Kp. = Klärpunkt. Ferner bedeuten K = kristalliner Zustand, N = nematische Phase, S = smektische Phase und I = isotrope Phase. Die Angaben zwischen diesen Symbolen stellen die Übergangstemperaturen dar.

Alle physikalischen Eigenschaften werden und wurden nach "Merck Liquid Crystals, Physical Properties of Liquid Crystals", Status Nov. 1997, Merck KGaA, Deutschland bestimmt und gelten für eine Temperatur von 20°C und Δn wird bei 589 nm und Δε bei 1 kHz bestimmt, sofern nicht jeweils explizit anders angegeben.

Der Begriff "Schwellenspannung" bezieht sich für die vorliegende Erfindung auf die kapazitive Schwelle (V₀), auch Freedericksz-Schwelle genannt, sofern nicht explizit anders angegeben. In den Beispielen kann auch, wie allgemein üblich, die optische Schwelle für 10 % relativen Kontrast (V₁₀) angegeben werden.

Die zur Messung der kapazitiven Schwellenspannung verwendete Anzeige besteht aus zwei planparallelen Glasträgerplatten im Abstand von 20 µm, welche auf den Innenseiten jeweils ein Elektrodenschicht sowie eine darüberliegende, ungeriebene Orientierungsschicht aus Polyimid aufweisen, die eine homöotrope Randorientierung der Flüssigkristallmoleküle bewirken.

Die zur Messung der Tiltwinkel verwendete Anzeige bzw. Testzelle besteht aus zwei planparallelen Glasträgerplatten im Abstand von 4 µm, welche auf den Innenseiten jeweils ein Elektrodenschicht sowie eine darüberliegende Orientierungsschicht aus Polyimid aufweisen, wobei die beiden Polyimidschichten antiparallel zueinander gerieben werden und eine homöotrope Randorientierung der Flüssigkristallmoleküle bewirken.

Die polymerisierbaren Verbindungen werden in der Anzeige bzw. Testzelle durch Bestrahlung mit UVA-Licht (üblicherweise 365nm) einer definierten Intensität für eine vorgegebene Zeit polymerisiert, wobei gleichzeitig eine Spannung an die Anzeige angelegt wird (üblicherweise 10V bis 30V Wechselstrom, 1 kHz). In den Beispielen wird, falls nicht anders angegeben, eine Quecksilberdampflampe mit 28 mW/cm² verwendet, die Intensität wird mit einem Standard-UV-Meter (Fabrikat Ushio UNI meter) gemessen, der mit einem Bandpassfilter bei 365nm ausgerüstet ist.

Der Tiltwinkel wird per Drehkristall-Experiment (Autronic-Melchers TBA-105) bestimmt. Ein niedriger Wert (d.h. eine große Abweichung vom 90°-Winkel) entspricht dabei einem großen Tilt.

Der VHR -Wert wird wie folgt gemessen: Zur FK-Host-Mischung werden 0.3% einer polymerisierbaren monomeren Verbindung zugesetzt, und die dadurch entstandene Mischung in TN-VHR-Testzellen gefüllt (90° gerieben, Orientierungsschicht TN-Polyimid, Schichtdicke d≈4µm). Der HR-Wert wird nach 5min bei 100°C vor und nach 2h UV-Belastung (suntest) bei 1V, 60Hz, 64µs pulse bestimmt (Messgerät: Autronic-Melchers VHRM-105).

### Beispiel 1

Verbindung 1 (2-Methacrylsäure-3-(4-methoxy-phenyl)-2-oxo-2H-chromen-7-ylester) wird wie folgt hergestellt:

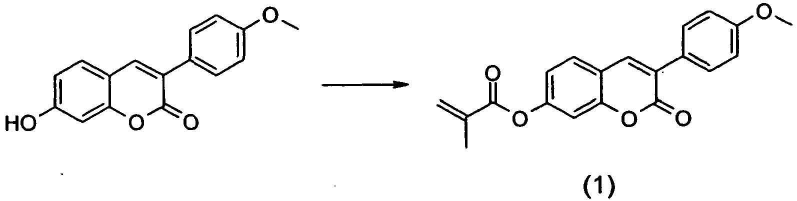

Die Ausgangsverbindung 7-Hydroxy-3-(4-methoxy-phenyl)-chromen-2-on ist kommerziell erhältlich.

1,50 g (5,60 mmol) 7-Hydroxy-3-(4-methoxy-phenyl)-chromen-2-on werden in 20 ml Dichlormethan und wenig Pyridin suspendiert, mit 2 ml Triethylamin versetzt und unter Eiskühlung eine Lösung von 0,8 g (7,7 mmol) Methacrylsäurechlorid in 5 ml Dichlormethan zutropfen gelassen. Der Ansatz wird über Nacht bei Raumtemp. gerührt, filtriert, das Lösungsmittel i. Vak. entfernt und der Rückstand mit Toluol/Essigester (6:4) über Kieselgel filtriert. Kristallisation des Rohproduktes aus Heptan/Toluol liefert 2-Methacrylsäure-3-(4-methoxy-phenyl)-2-oxo-2H-chromen-7-ylester als farblosen Feststoff vom Schmp. 163 °C.

### Beispiel 2

Verbindung 2 (2-Methacrylsäure-3-[3-(4-methoxy-phenyl)-2-oxo-2H-chromen-7-yl]-propylester) wird wie folgt hergestellt:

### 2.1 Trifluormethansulfonsäure-3-(4-methoxy-phenyl)-2-oxo-2H-chromen-7-ylester

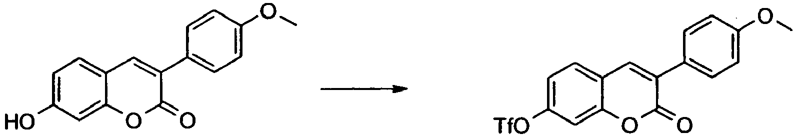

7,0 g (26,1 mmol) 7-Hydroxy-3-(4-methoxy-phenyl)-chromen-2-on werden in 200 ml Dlchlormethan suspendiert und nach Zugabe von 5 ml (36 mmol) Triethylamin und 100 mg (0,819 mmol) DMAP unter Eiskühlung tropfenweise mit 5,3 ml (32,3 mmol) Trifluormethansulfonsäureanhydrid versetzt. Nach 2 h wird die Lösung mit Eiswasser gewaschen und das Lösungsmittel i. Vak. entfernt. Chromatographie des Rohproduktes mit Toluol/Essigester an Kieselgel liefert den Trifluormethansulfonsäure-3-(4-methoxy-phenyl)-2-oxo-2H-chromen-7-ylester als gelben Feststoff.
¹H-NMR (400 MHz, CDCl₃):
δ = 3,86 (s, 3 H, OCH₃), 6,99 (m_{c}, 2 H , Ar-H), 7,23 (dd, J = 2,4 Hz, J = 8,6 Hz, 1 H, Ar-H), 7,30 (d, J = 2,4 Hz, 1 H, Ar-H), 7, 62 (d, J = 8,6 Hz, 1 H, Ar-H), 7,67 (mc, 2 H, Ar-H), 7,76 (s, 1 H, -C=C*H*-).

### 2.2 7-(3-Hydroxyprop-1-inyl)-3-(4-methoxy-phenyl)-chromen-2-on

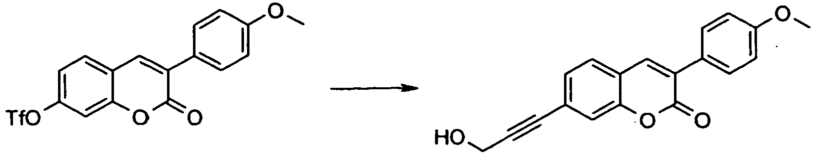

6,90 g (17,2 mmol) Trifluormethansulfonsäure-3-(4-methoxy-phenyl)-2-oxo-2H-chromen-7-ylester, 1,5 ml (25,4 mmol) Propin-1-ol, 12,0 g (36,8 mmol) Caesiumcarbonat, 150 mg (0,578 mmol)
Bis(acetonitril)palladium(II)chlorid und 800 mg (1,68 mmol) 2-Dicyclohexylphosphino-2'-4'-6'-triisopropylbiphenyl werden in 100 ml Dioxan bei 60 °C 3h rühren gelassen, auf 400 ml Wasser gegeben und mit 2 N Salzsäure angesäuert. Die wäßrige Phase wird dreimal mit Essigester extrahiert und die vereinigten org. Phasen mit Wasser gewaschen und über Natriumsulfat getrocknet. Das Lösungsmittel wird i. Vak. entfernet und der Rückstand wird mit Toluol/Essigester (4:1) über Kieselgel filtriert. Kristallisation des Rohproduktes aus Toluol/Essigester (10:1) liefert 7-(3-Hydroxyprop-1-inyl)-3-(4-methoxy-phenyl)-chromen-2-on als gelbe Kristalle.
¹H-NMR (400 MHz, CDCl₃):
δ = 1,74 ppm (t, br., OH), 3,86 (s, 3 H, OCH₃), 4,45 (d, br., J = 4,0 Hz, 2 H, C*H*₂OH), 6,98 (m_{c}, 2 H , Ar-H), 7,33 (dd, J = 1,5 Hz, J = 8,0 Hz, 1 H, Ar-H), 7,40 (s, br., 1 H), 7, 46 (d, J = 8,0 Hz, 1 H, Ar-H), 7,68 (mc, 2 H, Ar-H), 7,73 (s, 1 H, -C=C*H*-).

### 2.3 7-(3-Hydroxy-propyl)-3-(4-methoxy-phenyl)-chromen-2-on

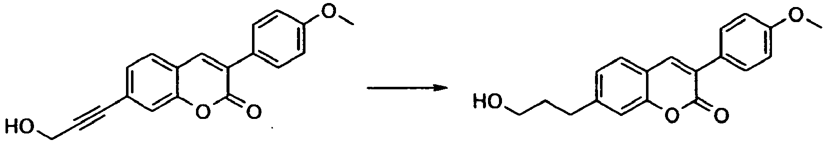

7-(3-Hydroxyprop-1-inyl)-3-(4-methoxy-phenyl)-chromen-2-on wird in THF an Palladium-Aktivkohlekatalysator bis zum Stillstand hydriert. Der Katalysator wird abfiltriert, das Lösungsmittel i. Vak. entfernt und das Rohprodukt aus Toluol/Heptan (1:1) umkristallisiert. Man erhält 7-(3-Hydroxy-propyl)-3-(4-methoxy-phenyl)-chromen-2-on als farblosen Feststoff.

### 2.4 2-Methacrylsäure-3-[3-(4-methoxy-phenyl)-2-oxo-2H-chromen-7-yl]-propylester

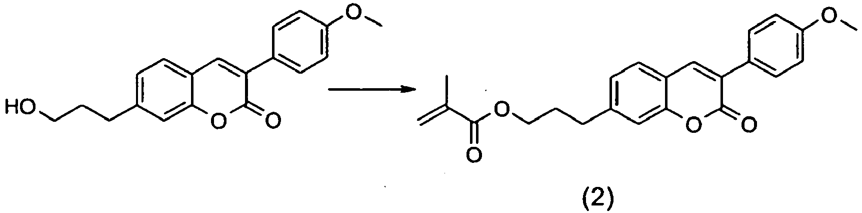

In Analogie zu der in Beispiel 1 beschriebenen Synthese erhält man aus 7-(3-Hydroxy-propyl)-3-(4-methoxy-phenyl)-chromen-2-on den 2-Methacrylsäure-3-[3-(4-methoxy-phenyl)-2-oxo-2H-chromen-7-yl]-propylester als farblosen Feststoff vom Schmp. 111 °C.

### Beispiel 3

Verbindung 3 (2-Methacrylsäure-3-{3-[4-(2-methacryloyloxy)-phenyl]-2-oxo-2H-chromen-7-yl}-propylester) wird wie folgt hergestellt:

### 3.1 3-(4-Hydroxy-phenyl)-7-(3-hydroxy-propyl)-chromen-2-on

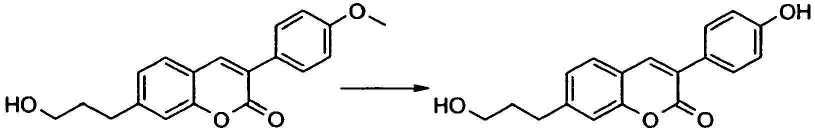

1,00 g (3,22 mmol) 7-(3-Hydroxy-propyl)-3-(4-methoxy-phenyl)-chromen-2-on (s. Bsp. 3.1) werden in 30 ml Dichlormethan vorgelegt und unter Eiskühlung mit einer Lösung von 0,4 ml (4,2 mmol) Bortribromid in 10 ml Dichlormethan versetzt. Die Kühlung wird entfernt und der Ansatz über Nacht bei Raumtemp. rühren gelassen. Die Lösung wird auf Eiswasser gegeben, mit 2 N Salzsäure angesäuert und dreimal mit Essigester extrahiert. Die vereinigten org. Phasen werden mit Wasser gewaschen und über Natriumsulfat gerocknet. Das Lösungsmittel wird i. Vak. entfernt und der Rückstand mit Toluol/Essigester (1:1) an Kieselgel chromatographiert. Nach einem Vorlauf erhält man in einer zweiten Fraktion (Rf = 0,3) das 3-(4-Hydroxy-phenyl)-7-(3-hydroxy-propyl)-chromen-2-on als farblosen Feststoff.
¹H-NMR (400 MHz, DMSO-d₆):
δ = 1,83 ppm (dddd., J = 6,5 Hz, J = 6,5 Hz, J = 7,4 Hz, J = 7,4 Hz, 2 H, - CH₂C*H*₂CH₂OH), 2,78 (dd, J = 7,4 Hz, J = 7,4 Hz, 2 H, C*H*₂CH₂CH₂OH), 3,49 (t, J = 6,5 Hz, 2 H, CH₂CH₂C*H*₂OH), 6,90 (m_{c}, 2 H, Ar-H), 7,22 (d, J = 8,2 Hz, 1 H, Ar-H), 7,26 (s, 1 H, Ar-H), 7,63 (m_{c}, 3 H, Ar-H), 8,06 (s, br. 1 H, -C=C*H*-), 9,73 (s, br., 1 H, austauschbar, Ar-OH).

### 3.2 2-Methacrylsäure-3-{3-[4-(2-methacryloyloxy)-phenyl]-2-oxo-2H-chromen-7-yl}propylester

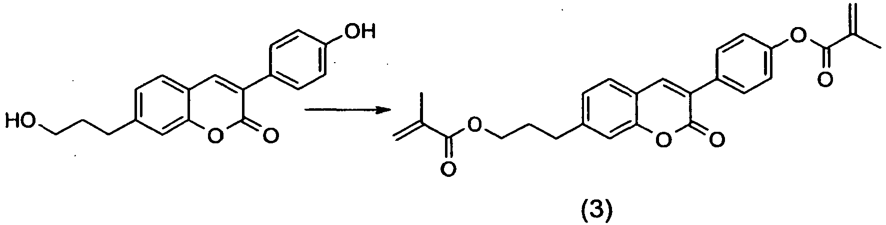

In Analogie zu der unter 2.4 beschriebenen Synthese erhält man aus 3-(4-Hydroxy-phenyl)-7-(3-hydroxy-propyl)-chromen-2-on den 2-Methacrylsäure-3-{3-[4-(2-methacryloyloxy)-phenyl]-2-oxo-2H-chromen-7-yl}-propylester als farblosen Feststoff vom Schmp. 112 °C.

### Beispiel 4

Verbindung 4 (Methacrylsäure-3-[4-(2-methacryloyloxy)-phenyl]-2-oxo-2H-chromen-7-ylester) wird wie folgt hergestellt:

### 4.1 7-Hydroxy-3-(4-hydroxy-phenyl)-chromen-2-on

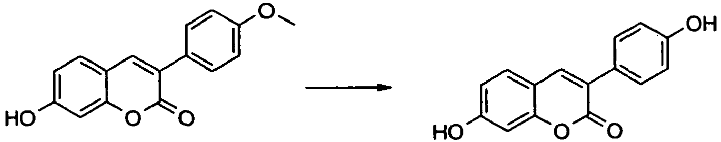

4,00 g (14,9 mmol) 7-Hydroxy-3-(4-methoxy-phenyl)-chromen-2-on werden in 190 ml Dichlormethan vorgelegt und unter Eiskühlung mit einer Lösung von 2,5 ml (26,3 mmol) Bortribromid in 10 ml Dichlormethan versetzt. Die Kühlung wird entfernt und der Ansatz über Nacht bei Raumtemp. rühren gelassen. Die Lösung wird auf Eiswasser gegeben, mit 2 N Salzsäure angesäuert und dreimal mit Essigester extrahiert. Die vereinigten org. Phasen werden mit Wasser gewaschen und über Natriumsulfat gerocknet. Das Lösungsmittel wird i. Vak. entfernt und der Rückstand aus Toluol/Essigester (2:1) umkristallisiert. Man erhält 7-Hydroxy-3-(4-hydroxy-phenyl)-chromen-2-on als gelbe Kristalle.

### 4.2 2-Methacrylsäure-3-[4-(2-methacryloyloxy)-phenyl]-2-oxo-2H-chromen-7-ylester

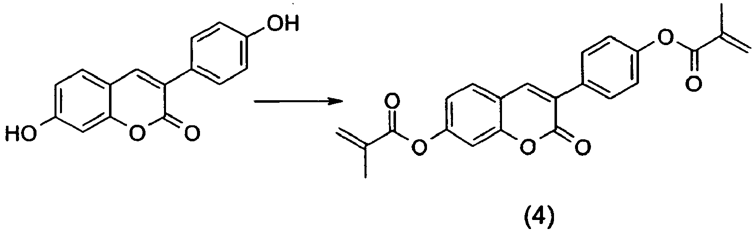

In Analogie zu Beispiel 1 erhält man aus 7-Hydroxy-3-(4-hydroxy-phenyl)-chromen-2-on den 2-Methacrylsäure-3-[4-(2-methacryloyloxy)-phenyl]-2-oxo-2H-chromen-7-ylester als farblosen Feststoff vom Schmp. 174 °C.

### Beispiel 5

Verbindung 5 (2-Meth-acrylsäure-2-[4-(2-methacryloyloxy)-phenyl]-4-oxo-4H-chromen-6-ylester) wird wie folgt hergestellt:
6-Hydroxy-2-(4-hydroxy-phenyl)-chromen-4-on und 6-Hydroxy-2-(4-methoxy-phenyl)-chromen-4-on sind kommerziell erhältlich.

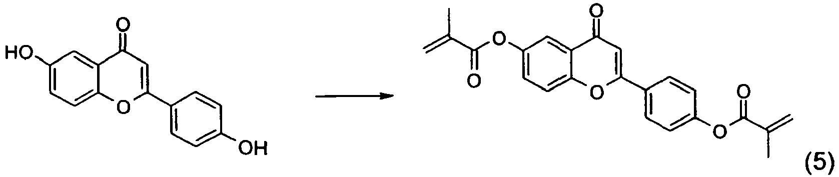

In Analogie zu den in Beispiel 1-5 beschriebenen Synthesen erhält man aus 6-Hydroxy-2-(4-hydroxy-phenyl)-chromen-4-on den 2-Methacrylsäure-2-[4-(2-methacryloyloxy)-phenyl]-4-oxo-4H-chromen-6-ylester als farblosen Feststoff vom Schmp. 152 °C.

### Beispiel 6

Verbindung 6 (2-Methacrylsäure-2-[4-(2-methacryloyloxy)-phenyl]-4-oxo-4H-chromen-6-ylester) wird wie folgt hergestellt:

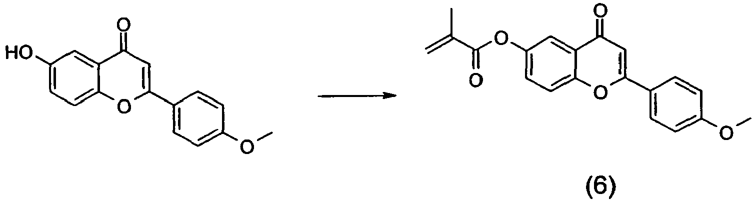

In Analogie zu der in Beispiel 1 beschriebenen Synthese erhält man aus 6-Hydroxy-2-(4-hydroxy-phenyl)-chromen-4-on den 2-Methacrylsäure-2-[4-(2-methacryloyloxy)-phenyl]-4-oxo-4H-chromen-6-ylester als farblosen Feststoff vom Schmp. 134 °C.

### Beispiel 7

Verbindung 7 (2-Methacrylsäure-4-(2-oxo-2H-chromen-3-yl)-phenyl ester) wird analog zu der Verbindung 1 aus Beispiel 1 hergestellt:

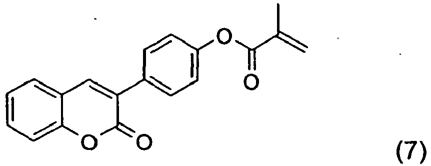

Man erhält farblose Kristalle vom Schmp. 158°C.

### Beispiel 8

Verindung 8 (2-Methacrylsäure-2-oxo-3-phenyl-2H-chromen-6-yl ester) wird analog zu der Verbindung 1 aus Beispiel 1 hergestellt:

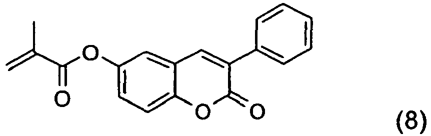

Man erhält farblose Kristalle vom Schmp. 169 °C.

### Beispiel 9

Verbindung 9 (2-Methacrylsäure-(2-oxo-3-phenyl)-2H-chromen-7-yl ester) wird analog zu der Verbindung 1 aus Beispiel 1 hergestellt:

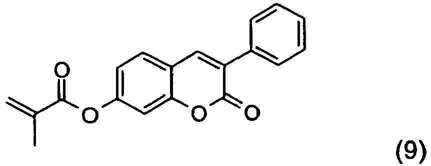

Man erhält farblose Kristalle vom Schmp. 169 °C.

### Beispiel 10

Verbindung 10 ((2-Methacrylsäure-3-(4-methoxy-phenyl)-2-oxo-2H-chromen-7-ylester) wird wie folgt hergestellt:

### 10.1 3-(4-Butoxy-phenyl)-7-hydroxy-chromen-2-on

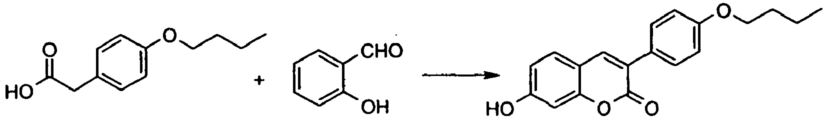

89,5 g (0,43 mol) 4-Butoxyphenylessigsäure (hergestellt nach McElvain, Carney; J. Am. Chem. Soc. 1946 (68), 2592 - 2599) und 30,0 g (0,22 mol) 2,4-Dihydroxybenzaldehyd werden in 100 ml Essigsäureanhydrid und 120 ml Triethylamin 5 h auf 120 °C erhitzt. Anschließend wird die noch heiße Lösung auf 3 l Eiswasser gegeben, das ausgefallene Produkt abgesaugt und in 1 l Wasser und 1,4 l Ethanol suspendiert. Nach tropfenweise Zugabe von 190 ml konz. Schwefelsäure wird der Ansatz 4 h unter Rückfluß erhitzt, auf 3 l Wasser gegeben und das ausgefallene Produkt abgesaugt. Das Rohprodukt wird mit heißem Toluol/Essigester (1:1) über Kieselgel filtriert, das Lösungsmittel i.Vak eingeengt und der Rückstand aus Toluol umkristallisiert. Man erhält 3-(4-Butoxy-phenyl)-7-hydroxy-chromen-2-on als farblose Kristalle.

### 10.2 2-Methacrylsäure-3-(4-methoxy-phenyl)-2-oxo-2H-chromen-7-ylester

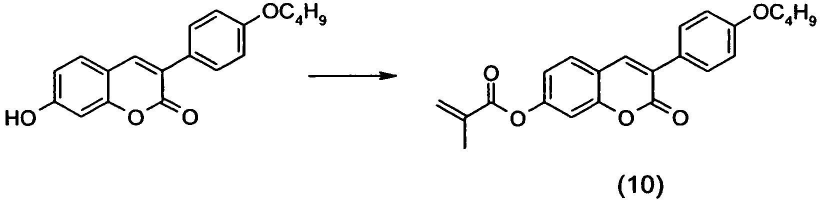

In Analogie zu Beispiel 1 erhält man aus 3-(4-Butoxy-phenyl)-7-hydroxy-chromen-2-on den 2-Methacrylsäure-3-(4-methoxy-phenyl)-2-oxo-2H-chromen-7-ylester als farblose Kristalle vom Schmp. 129°C.

### Beispiel 11-17

Die folgenden Verbindungen werden in Analogie zu den in Beispiel 1 bis 10 beschriebenen Syntheseverfahren hergestellt.

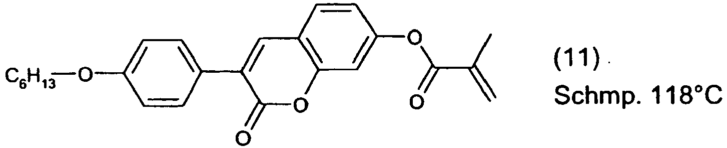

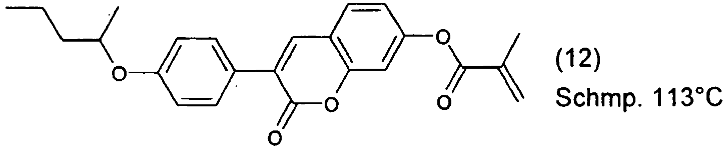

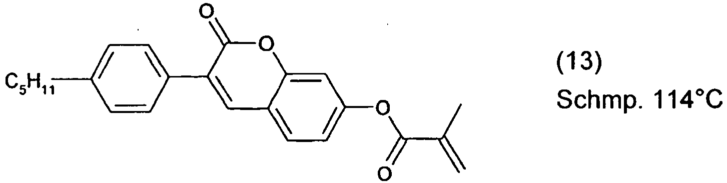

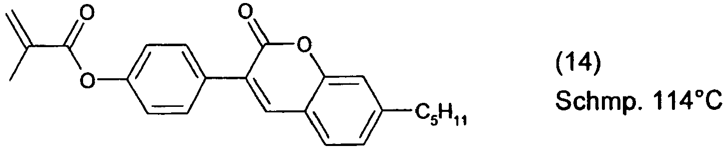

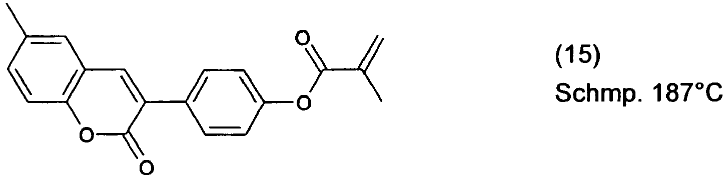

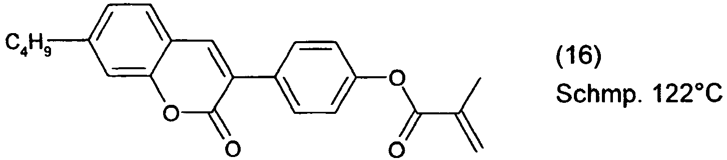

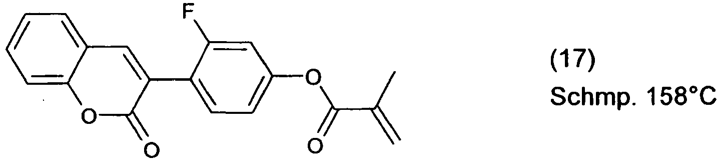

### Mischungsbeispiele

### Beispiel A1

Die nematische FK-Host-Mischung N1 wird wie folgt formuliert

| | | | |
|---|---|---|---|
| CY-3-O4 | 14,00 % | Kp. | +71,0 |
| CY-5-04 | 13,00 % | Δn | 0,0825 |
| CCY-3-O2 | 8,00 % | Δε | - 3,5 |
| CCY-5-02 | 8,00 % | ε_{∥} | 3,5 |
| CCY-2-1 | 9,00 % | K₃/K₁ | 1,00 |
| CCY-3-1 | 9,00 % | γ₁ | 141 |
| CPY-2-O2 | 8,00 % | V₀ | 2,06 |
| CCH-501 | 9,00 % | | |
| CCH-35 | 14,00 % | | |
| PCH-53 | 8,00 % | | |

Zur FK-Mischung N1 werden 0.3% des erfindungsgemäßen RMs (1) aus Beispiel 1 zugesetzt. Die dadurch entstanden Mischung P1 wird in VA-e/o-Testzellen wie oben beschrieben gefüllt. Zu Vergleichszwecken werden VA-e/o-Testzellen der Vergleichsmischungen V1 und V2 hergestellt wie oben beschrieben, wobei jedoch anstelle eines erfindungsgemäßen RMs die aus dem Stand der Technik bekannten RMs der Formel A bzw. B verwendet werden:

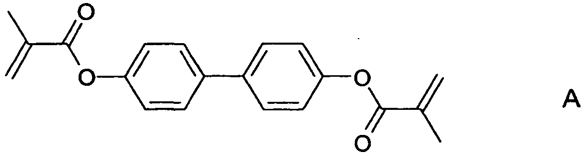

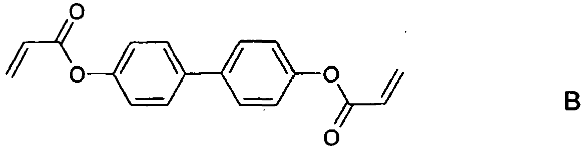

Für jede Kombination RM/Host-Mischung werden jeweils zwei Testzellen hergestellt. Unter Anlegen einer Spannung von 24V (Wechselstrom) werden die Zellen für verschiedene Dauer mit UV-Licht (365nm) der Intensität 50mW/cm² bestrahlt, dadurch erfolgt Polymerisation des RMs. Für jede Testzelle wird der pretilt-Winkel wie oben angegeben bestimmt. Die für die verschiedenen Belichtungszeiten jeweils erzielten pretilt-Winkel sind in Tabelle 1 und 2 zusammengefasst. Darin sind die pretilt-Winkel für die beiden Zellen jeder Testreihe sowie der daraus errechnete mittlere pretilt-Winkel angegeben:

**Tabelle 1**

| | Tilt [°] für V1 (0.3% RM A in N1) | | | Tilt [°] für P1 (0.3% RM 1 in N1) | | |
|---|---|---|---|---|---|---|
| Bel.-zeit [s] | Zelle 1 | Zelle 2 | Mittel | Zelle 1 | Zelle 2 | Mittel |
| 0 | 89.6 | 88.8 | 89.2 | 89.1 | 88.8 | 89.0 |
| 30 | 88.8 | 89.4 | 89.1 | 75.2 | 74.4 | 74.8 |
| 60 | 88.8 | 87.9 | 88.4 | 73.1 | 75.2 | 74.2 |
| 120 | 83.6 | 84.2 | 83.9 | 73.8 | 74.0 | 73.9 |
| 240 | 77.6 | 75.4 | 76.5 | 73.9 | 76.6 | 75.3 |

**Tabelle 2**

| | Tilt [°] für P1 (0.3% RM 1 in N1) | | |
|---|---|---|---|
| Bel.-zeit [s] | Zelle 1 | Zelle 2 | Mittel |
| 0 | 88.6 | 89.8 | 89.2 |
| 10 | 85.2 | 83.0 | 84.1 |
| 20 | 77.1 | 79.3 | 78.2 |
| 30 | 75.6 | 77.6 | 76.6 |

Wie aus Tabelle 1 und 2 ersichtlich ist, kann mit dem erfindungsgemäßen FK-Medium P1 enthaltend RM (1) eine deutlich schnellere Einstellung des pretilt-Winkels erreicht werden als mit dem FK-Medium V1 enthaltend RM A aus dem Stand der Technik. Für das FK-Medium V1 beträgt beispielsweise der pretilt-Winkel nach 4 min Belichtungszeit 76.5°. Ein ähnlicher pretilt-Winkel (74.8° bzw. 76.6°) kann, unter gleichen Bedingungen, mit dem erfindungsgemäßen FK-Medium P1 bereits nach 30 Sekunden erreicht werden.

### Beispiel A2

Zu der FK-Host-Mischung N1 werden jeweils 0.3 % des erfindungsgemäßen RMs (1) bzw. (4) aus Beispiel 1 bzw. 4 zugesetzt, dadurch werden die erfindungsgemäßen Mischungen P1 bzw. P4 erhalten. In einer zweiten Versuchsreihe wird jedem FK-Medium vor der Polymerisation noch zusätzlich 0.006% (bezogen auf die Gesamtmischung) des Photoinitiators Irgacure651 ® (PI) zugesetzt. Die Mischungen werden jeweils in VA-e/o-Testzellen wie oben beschrieben gefüllt. Zu Vergleichszwecken werden entsprechende VA-e/o-Testzellen der Vergleichsmischungen V1 und V2 aus Bsp. A1 jeweils mit bzw. ohne Photoinitiator hergestellt. Zur Polymerisation des RMs werden die Zellen unter Anlegen einer Spannung von 10V (Wechselstrom) mit UV-Licht (365nm) der Intensität 28mW/cm² bestrahlt, wobei die Belichtungszeit für die Proben ohne Photoinitiator 20min und für die Proben mit Photoinitiator 2min beträgt. Die erzielten pretilt-Winkel sind in Tabelle 3 zusammengefasst.

**Tabelle 3**

| | Tilt [°] für jew. 0.3 % RM in N1 | |
|---|---|---|
| Mischung | ohne Init., 20 min | mit Init., 2 min |
| P1 | 83.3 | 80.8 |
| P4 | 85.7 | 85.4 |
| V1 | 81.8 | 84.8 |
| V2 | 86.2 | 87.0 |

Wie aus Tabelle 3 ersichtlich ist, zeigen die erfindungsgemäße FK-Medien gute bis sehr gute pretilt-Winkel, sowohl mit als auch ohne Initiator, die mit dem FK-Medium aus dem Stand der Technik vergleichbar sind.

### Beispiel A3

Die nematische Hostmischung N1, das erfindungsgemäße FK-Medium P1, sowie die Vergleichsmischung V1 aus Beispiel A1 werden jeweils in TN-VHR-Testzellen wie oben beschrieben gefüllt. Der VHR-Wert vor und nach UV-Belastung wird wie oben beschrieben bestimmt. Die Ergebnisse sind in Tabelle 4 zusammengefasst.

**Tabelle 4**

| Mischung | RM | VHR [%] vor UV | VHR [%] nach UV |
|---|---|---|---|
| N1 | - | 93.2 | 85.7 |
| P1 | 1 | 93.7 | 87.3 |
| V1 | A | 93.1 | 91.7 |

Wie aus Tabelle 4 ersichtlich, zeigt das erfindungsgemäße FK-Medium P1 gegenüber dem FK-Medium V1 aus dem Stand der Technik vergleichbare und gegenüber der Host-Mischung N1 höhere VHR-Werte.

### Beispiel A4

Die nematische FK-Host-Mischung N2 wird wie folgt formuliert

| | | | |
|---|---|---|---|
| CY-3-02 | 16,00 % | Kp. | + 71,0 |
| CY-5-02 | 14,00 % | Δn | 0,0822 |
| CCY-3-O2 | 12,00 % | Δε | - 3,8 |
| CCY-5-02 | 11,00% | ε_{∥} | 3,6 |
| CCY-2-1 | 9,00% | K₃/K₁ | 1,16 |
| CCY-3-1 | 8,00 % | γ₁ | 133 |
| CCH-34 | 8,00 % | V₀ | 2,10 |
| CCH-35 | 9,00 % | | |
| PCH-53 | 7,00 % | | |
| PCH-301 | 6,00 % | | |

Zu den FK-Mischungen N1 aus Beispiel A1 und N2 werden 0.2% bzw. 0.3% des erfindungsgemäßen RMs (1) aus Beispiel 1 zugesetzt. Die dadurch entstandenen Mischungen werden in VA-e/o-Testzellen wie oben beschrieben gefüllt. Unter Anlegen von verschiedenen Spannungen (Wechselstrom) werden die Zellen für ein Dauer von 4min mit UV-Licht (365nm) der Intensität 25mW/cm² bestrahlt, dadurch erfolgt Polymerisation des RMs. Für jede Testzelle wird der pretilt-Winkel wie oben angegeben bestimmt. Die für die verschiedenen Spannungen jeweils erzielten pretilt-Winkel sind in Tabelle 5 zusammengefasst.

**Tabelle 5**

| Mischung | Spannung (RMS) [V] | Tilt [°] |
|---|---|---|
| N1 + 0.3% RM1 | 3.5 | 87.3 |
| | 7 | 84.8 |
| | 14 | 80.7 |
| | 24 | 76.1 |
| N2 + 0.3% RM1 | 3.5 | 87.9 |
| | 7 | 85.8 |
| | 14 | 82.4 |
| | 24 | 78.3 |
| N1 + 0.2% RM1 | 3.5 | 88.5 |
| | 7 | 86.8 |
| | 14 | 84.9 |
| | 24 | 82.7 |
| N2 + 0.2% RM1 | 3.5 | 89.0 |
| | 7 | 87.1 |
| | 14 | 85.6 |
| | 24 | 83.5 |

Wie aus Tabelle 5 ersichtlich ist, kann der erzielte pretilt-Winkel durch Veränderung der Spannung kontrolliert werden.

### Beispiel A5

Zu der FK-Host-Mischung N1 wird das erfindungsgemäße RM (1) aus Beispiel 1 in verschiedenen Konzentrationen zugesetzt. Die dadurch entstandenen Mischungen werden in VA-e/o-Testzellen wie oben beschrieben gefüllt. Unter Anlegen einer Spannung von 24V (Wechselstrom) werden die Zellen für verschiedene Dauer mit UV-Licht (365nm) der Intensität 50mW/cm² bestrahlt, dadurch erfolgt Polymerisation des RMs. Für jede Testzelle wird der pretilt-Winkel wie oben angegeben bestimmt. Die für die verschiedenen Belichtungszeiten jeweils erzielten pretilt-Winkel sind in Tabelle 6 zusammengefasst.

**Tabelle 6**

| Konz. RM1 in N1 | Belichtungszeit [s] | Tilt [°] |
|---|---|---|
| 0.1% | 0 | 88.5 |
| | 30 | 87.9 |
| | 60 | 88.6 |
| | 120 | 87.3 |
| | 240 | 88.4 |
| 0.2% | 0 | 88.5 |
| | 30 | 85.1 |
| | 60 | 84.0 |
| | 120 | 83.7 |
| | 240 | 84.0 |
| 0.3% | 0 | 88.4 |
| | 30 | 78.0 |
| | 60 | 77.5 |
| | 120 | 77.0 |
| | 240 | 78.2 |

Wie aus Tabelle 6 ersichtlich ist, kann der erzielte pretilt-Winkel durch Veränderung der Konzentration des RMs kontrolliert werden.

### Beispiel A6

Zur FK-Mischung N1 werden jeweils 0.3% des erfindungsgemäßen RM (1) aus Beispiel 1 bzw. des aus dem Stand der Technik bekannten RM A (siehe Beispiel 12) zugesetzt. Die dadurch entstandenen Mischungen werden in VA-e/o-Testzellen wie oben beschrieben gefüllt. Unter Anlegen einer Spannung von 24V (Wechselstrom) werden die Zellen für verschiedene Dauer mit UV-Licht (365nm) der Intensität 50mW/cm² bestrahlt, dadurch erfolgt Polymerisation des RMs.

Zur Bestimmung der Polymerisationsgeschwindigkeit wird der Restgehalt an unpolymerisiertem RM in der Testzelle mit der HPLC-Methode gemessen. Dazu wird die Mischung unter den angegebenen Bedingungen in Testzellen polymerisiert. Danach wird die Mischung aus den Testzellen mit MEK (Methylethylketon) gespült und vermessen. Die Ergebnisse sind in Tabelle 7 zusammengefasst.

**Tabelle 7**

| Mischung | Belichtungszeit [s] | RM-Restgehalt [%] |
|---|---|---|
| RM A in N1 | 0 | 0,3 |
| | 120 | 0,28 |
| | 240 | 0,24 |
| RM 1 in N1 | 0 | 0,3 |
| | 120 | 0,01 |
| | 240 | 0,004 |

Wie aus Tabelle 7 ersichtlich ist, ist im Falle von RM 1 bereits nach kurzer Zeit deutlich weniger unpolymerisiertes Rest-RM in der Zelle vorhanden als im Falle des aus dem Stand der Technik bekannten RM A, woraus auf eine deutlich höhere Polymerisationsgeschwindigkeit des RM 1 in der Zelle geschlossen werden kann.

### Beispiel A7

Zur FK-Mischung N1 werden jeweils 0.3% der erfindungsgemäßen RMs (1)-(17) aus Beispiel 1-17 zugesetzt. Die dadurch entstandenen Mischungen werden in VA-e/o-Testzellen wie oben beschrieben gefüllt. Unter Anlegen einer Spannung von 24V (Wechselstrom) werden die Zellen für verschiedene Dauer mit UV-Licht (365nm) der Intensität 50mW/cm² bestrahlt, dadurch erfolgt Polymerisation des RMs. Für jede Testzelle wird der pretilt-Winkel wie oben angegeben bestimmt. Die für die verschiedenen Belichtungszeiten jeweils erzielten pretilt-Winkel sind in Tabelle 8 zusammengefasst.

**Tabelle 8**

| RM | 1 | 2 | 3 | 4 | 5 | 6 |
|---|---|---|---|---|---|---|
| Bel.-zeit / s | Tiltwinkel / ° | | | | | |
| 0 | 89,0 | 88,7 | 88,8 | 89,5 | 89,4 | 89,3 |
| 30 | 74,8 | 90,0 | 78,8 | 86,2 | 86,9 | 88,9 |
| 60 | 74,2 | 89,6 | 75,4 | 85,5 | 83,8 | 88,8 |
| 120 | 73,9 | 88,1 | 75,0 | 84,4 | 78,2 | 88,8 |
| 240 | 75,3 | 85,2 | 73,8 | 84,8 | 71,8 | 88,6 |
| 360 | - | 82,5 | 72,0 | 84,9 | - | 88,8 |
| | | | | | | |

| RM | 7 | 8 | 9 | 10 | 11 | 12 |
|---|---|---|---|---|---|---|
| Bel.-zeit / s | Tiltwinkel / **°** | | | | | |
| 0 | 88,7 | 88,8 | 88,6 | 89,4 | 89,5 | 88,8 |
| 30 | 87,4 | 85,5 | 85,6 | 85,4 | 85,5 | 85,9 |
| 60 | 84,4 | 84,0 | 83,0 | 82,8 | 85,0 | 84,1 |
| 120 | 81,9 | 83,0 | 81,3 | 82,4 | 84,6 | 83,9 |
| 240 | 81,0 | 80,0 | 80,6 | 82,4 | 85,1 | 84,2 |
| 360 | 79,0 | 81,2 | 79,2 | 81,5 | 85,4 | 84,9 |
| | | | | | | |

| RM | 13 | 14 | 15 | 16 | 17 | |
|---|---|---|---|---|---|---|
| Bel.-zeit / s | Tiltwinkel / ° | | | | | |
| 0 | 89,9 | 89,0 | 89,5 | 89,6 | 89,4 | |
| 30 | 87,9 | 88,6 | 86,5 | 88,7 | 89,2 | |
| 60 | 86,6 | 88,8 | 83,6 | 88,2 | 89,0 | |
| 120 | 85,6 | 87,2 | 81,5 | 87,9 | 87,2 | |
| 240 | 85,5 | 85,4 | 79,3 | 86,2 | 85,9 | |
| 360 | 85,7 | 85,0 | 78,3 | 85,5 | 85,4 | |

Zur Bestimmung der Polymerisationsgeschwindigkeit wird der Restgehalt an unpolymerisiertem RM in der Testzelle mit der HPLC-Methode gemessen. Dazu wird die Mischung unter den angegebenen Bedingungen in Testzellen polymerisiert. Danach wird die Mischung aus den Testzellen mit MEK (Methylethylketon) gespült und vermessen. Die Ergebnisse sind in Tabelle 9 zusammengefasst.

**Tabelle 9**

| RM | 1 | 2 | 3 | 5 | 6 | 7 |
|---|---|---|---|---|---|---|
| Bel.-zeit / s | RM Konzentration / % | | | | | |
| 0 | 0,300 | 0,300 | 0,300 | 0,300 | 0,300 | 0,300 |
| 120 | 0,002 | 0,024 | 0,012 | 0,094 | 0,042 | 0,041 |
| 240 | 0,001 | 0,000 | 0,000 | 0,038 | 0,000 | 0,013 |
| 360 | 0,001 | 0,000 | 0,000 | 0,019 | 0,000 | 0,000 |
| | | | | | | |

| RM | 8 | 9 | 10 | 11 | 12 | |
|---|---|---|---|---|---|---|
| Bel.-zeit / s | RM Konzentration / % | | | | | |
| 0 | 0,300 | 0,300 | 0,300 | 0,300 | 0,300 | |
| 120 | 0,000 | 0,024 | 0,011 | 0,000 | 0,000 | |
| 240 | 0,000 | 0,000 | 0,007 | 0,000 | 0,000 | |
| 360 | 0,000 | 0,000 | 0,007 | 0,000 | 0,000 | |
| | | | | | | |

| RM | 13 | 14 | 15 | 16 | 17 | |
|---|---|---|---|---|---|---|
| Bel.-zeit / s | RM Konzentration / % | | | | | |
| 0 | 0,300 | 0,300 | 0,300 | 0,300 | 0,300 | |
| 120 | 0,000 | 0,013 | 0,058 | 0,000 | 0,137 | |
| 240 | 0,000 | 0,000 | 0,000 | 0,000 | 0,063 | |
| 360 | 0,000 | 0,000 | 0,000 | 0,000 | 0,043 | |

Wie aus Tabelle 9 ersichtlich ist, ist bereits nach kurzer Zeit nur noch wenig unpolymerisiertes Rest-RM in der Zelle vorhanden, woraus auf eine hohe Polymerisationsgeschwindigkeit des RM in der Zelle geschlossen werden kann.

## Patentansprüche

1. FK-Medium, enthaltend
- eine polymerisierbare Komponente A) enthaltend eine oder mehrere polymerisierbare Verbindungen, sowie
- eine flüssigkristalline Komponente B) enthaltend eine oder mehrere niedermolekulare Verbindungen,
**dadurch gekennzeichnet, dass** Komponente A) eine oder mehrere polymerisierbare Verbindungen der Formel I enthält 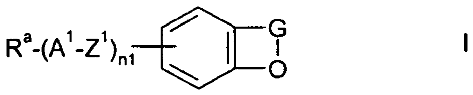 worin die einzelnen Reste folgende Bedeutung besitzen
G -CM=CR^{c}-CO- oder -CO-CM=CR^{c}-,
M -(Z² -A²)ₙ₂-R^{b},
A¹ und A² jeweils unabhängig voneinander eine aromatische, heteroaromatische, alicyclische oder heterocyclische Gruppe, vorzugsweise mit 4 bis 25 C-Atomen, welche auch anellierte Ringe enthalten kann, und welche optional durch L ein- oder mehrfach substituiert ist,
Z¹ bei jedem Auftreten gleich oder verschieden -O-, -S-, - CO-, -CO-O-, -OCO-, -O-CO-O-, -OCH₂-, -CH₂O-, - SCH₂-, -CH₂S-, -CF₂O-, -OCF₂-, -CF₂S-, -SCF₂-, - (CH₂)ₙ₃-, -CF₂CH₂-, -CH₂CF₂-, -(CF₂)ₙ₃-, -CH=CH-, - CF=CF-, -CH=CF-, -CF=CH-, -C≡C-, -CH=CH-COO-, - OCO-CH=CH-, -CH₂-CH₂-COO-, -OCO-CH₂-CH₂-, - CR⁰R⁰⁰- oder eine Einfachbindung,
R^{a-c} P, P-Sp-, H, OH, F, Cl, Br, I, -CN, -NO₂, -NCO, -NCS, - OCN, -SCN, SF₅ oder geradkettiges oder verzweigtes Alkyl mit 1 bis 25 C-Atomen, worin auch eine oder mehrere nicht benachbarte CH₂-Gruppen jeweils unabhängig voneinander durch -C(R⁰⁰)=C(R⁰⁰⁰)-, -C≡C-, -N(R⁰⁰)-, -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, Br, I, CN oder P-Sp- ersetzt sein können, wobei mindestens einer der Reste R^{a} und R^{b} eine Gruppe P oder P-Sp- bedeutet oder enthält,
P bei jedem Auftreten gleich oder verschieden eine polymerisierbare Gruppe,
Sp bei jedem Auftreten gleich oder verschieden eine Abstandsgruppe oder eine Einfachbindung,
R⁰⁰ und R⁰⁰⁰ jeweils unabhängig voneinander H oder Alkyl mit 1 bis 12 C-Atomen,
L bei jedem Auftreten gleich oder verschieden P-Sp-, H, OH, CH₂ OH, Halogen, SF₅, NO₂, eine Kohlenstoffgruppe oder Kohlenwasserstoffgruppe,
n1 und n2 jeweils unabhängig voneinander 0, 1, 2 oder 3,
n3 1, 2, 3 oder 4.

2. FK-Medium nach Anspruch 1, **dadurch gekennzeichnet, dass** in Formel I R^{a} und R^{b} gleiche oder verschiedene Reste P oder P-Spbedeuten.

3. FK-Medium nach Anspruch 1 oder 2, **dadurch gekennzeichnet, dass** die Verbindungen der Formel I ausgewählt sind aus der Gruppe bestehend aus folgenden Unterformeln 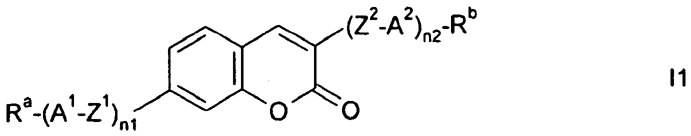 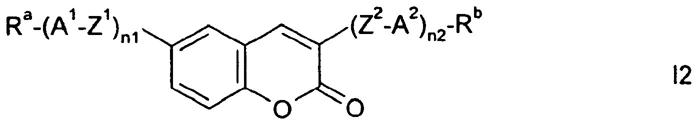 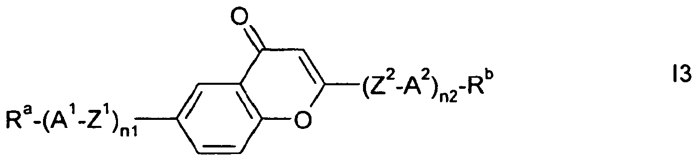 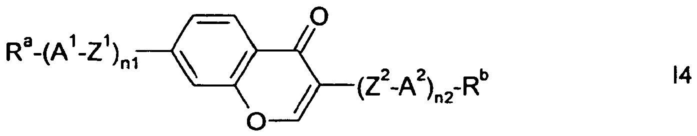 worin die einzelnen Reste die in Anspruch 1 angegebenen Bedeutungen besitzen.

4. FK-Medium nach einem oder mehreren der Ansprüche 1 bis 3, **dadurch gekennzeichnet, dass** die Verbindungen der Formel I ausgewählt sind aus der Gruppe bestehend aus folgenden Unterformeln 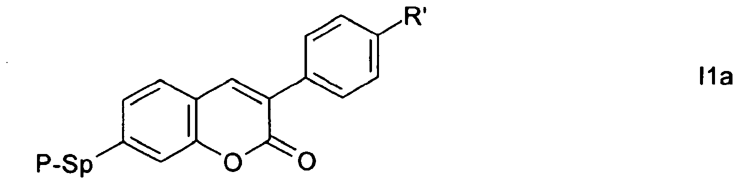 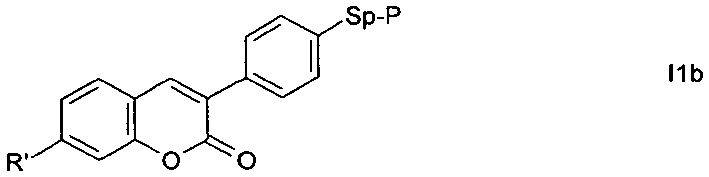 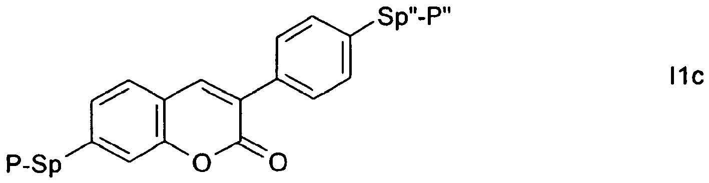 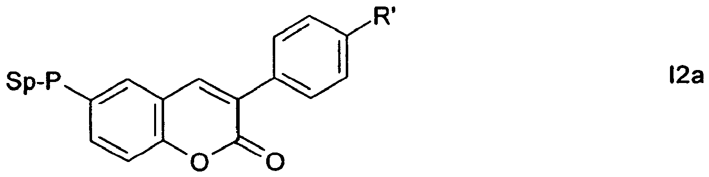 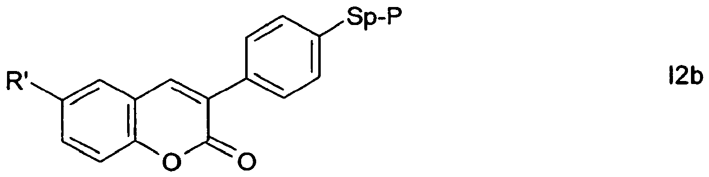 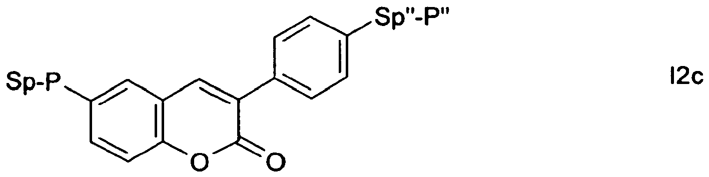 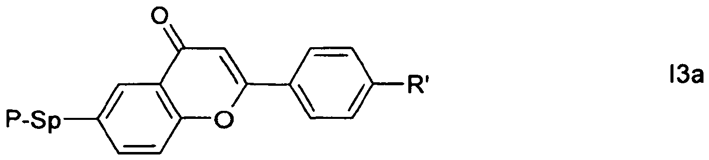 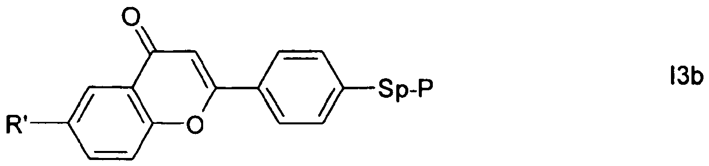 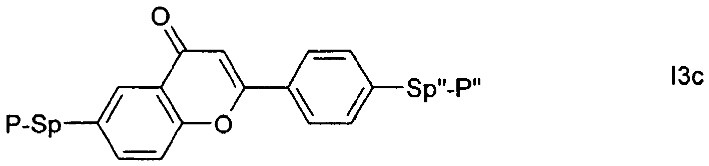 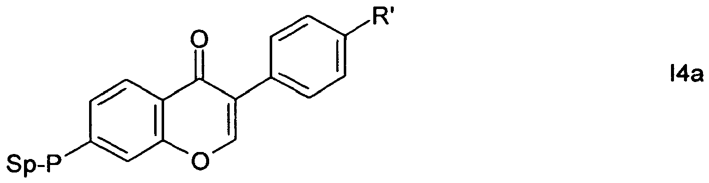 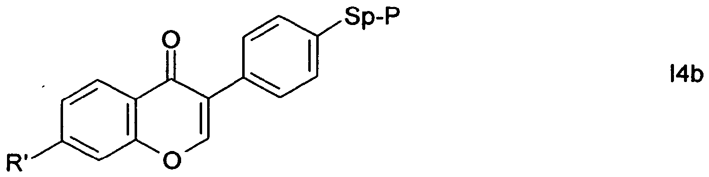 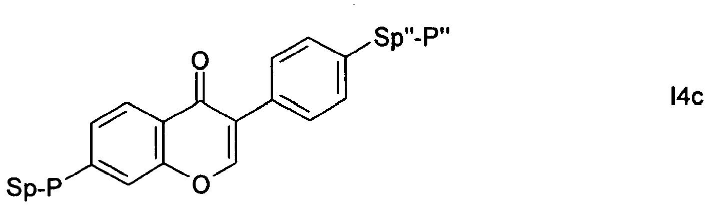 worin P und Sp die in Anspruch 1 angegebenen Bedeutungen besitzen, P" eine der in Anspruch 1 für P angegebenen Bedeutungen besitzt, Sp" eine der in Anspruch 1 für Sp angegebenen Bedeutungen besitzt, und R' eine der in Anspruch 1 für R^{a} angegebenen Bedeutungen besitzt, wobei R' von H verschieden ist und keine Gruppe P-Sp- bedeutet oder enthält.

5. FK-Medium nach nach einem oder mehreren der Ansprüche 1 bis 4, **dadurch gekennzeichnet, dass** die flüssigkristalline Komponente B) eine oder mehrere Verbindungen der Formel CY und/oder PY enthält: 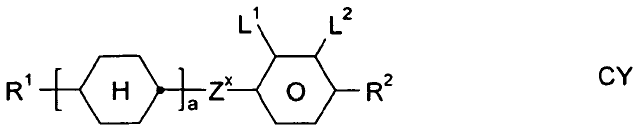 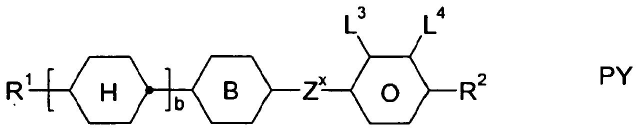 worin die einzelnen Reste folgende Bedeutung besitzen
a 1 oder 2,
b 0 oder 1, 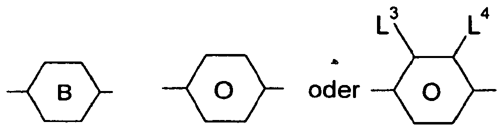
R¹ und R² jeweils unabhängig voneinander Alkyl mit 1 bis 12 C-Atomen, wobei auch eine oder zwei nicht benachbarte CH₂-Gruppen durch -O-, -CH=CH-, -CO-, -OCO- oder - COO- so ersetzt sein können, dass O-Atome nicht direkt miteinander verknüpft sind,
Z^{x} -CH=CH-, -CH₂O-, -OCH₂-, -CF₂O-, -OCF₂-, -O-, -CH₂-, -CH₂CH₂-, oder eine Einfachbindung, vorzugsweise eine Einfachbindung,
L¹⁻⁴ jeweils unabhängig voneinander F, Cl, OCF₃, CF₃, CH₃, CH₂F, CHF₂.

6. FK-Medium nach nach einem oder mehreren der Ansprüche 1 bis 5, **dadurch gekennzeichnet, dass** die flüssigkristalline Komponente B) eine oder mehrere Verbindungen der folgenden Formel enthält: 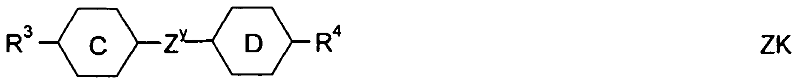 worin die einzelnen Reste folgende Bedeutung besitzen 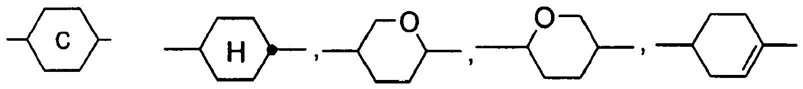 oder 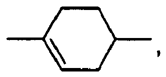 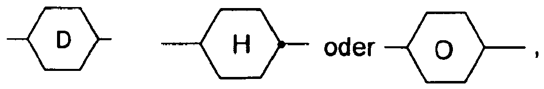
R³ und R⁴ jeweils unabhängig voneinander Alkyl mit 1 bis 12 C-Atomen, worin auch eine oder zwei nicht benachbarte CH₂-Gruppen durch -O-, -CH=CH-, -CO-, -OCO- oder - COO- so ersetzt sein können, dass O-Atome nicht direkt miteinander verknüpft sind,
Z^{y} -CH₂CH₂-, -CH=CH-, -CF₂O-, -OCF₂-, -CH₂O-, -OCH₂-, -COO-, -OCO-, -C₂F₄-, -CF=CF- oder eine Einfachbindung.

7. FK-Medium nach nach einem oder mehreren der Ansprüche 1 bis 6, **dadurch gekennzeichnet, dass** die flüssigkristalline Komponente B) eine oder mehrere Verbindungen der folgenden Formel enthält: 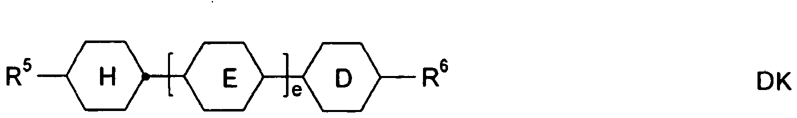 worin die einzelnen Reste bei jedem Auftreten gleich oder verschieden folgende Bedeutung haben:
R⁵ und R⁶ jeweils unabhängig voneinander eine der oben für R¹ angegebenen Bedeutungen, 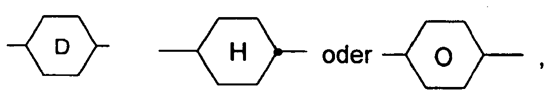 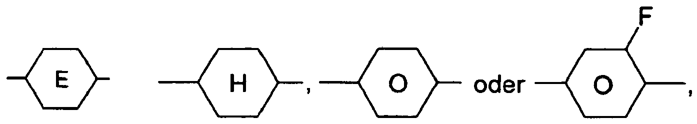 und
e 1 oder 2.

8. FK-Medium nach nach einem oder mehreren der Ansprüche 1 bis 7, **dadurch gekennzeichnet, dass** die Konzentration der Verbindungen der Formel I < 5 Gew.-% beträgt.

9. Verwendung von Verbindungen der Formel I wie in einem oder mehreren der Ansprüche 1 bis 4 definiert, oder eines FK-Mediums nach einem oder mehreren der Ansprüche 1 bis 8, in FK-Anzeigen des PS-(polymer stabilized) oder PSA-(polymer sustained alignment) Typs.

10. Verwendung von Verbindungen der Formel I wie in einem oder mehreren der Ansprüche 1 bis 4 definiert, oder eines FK-Mediums nach einem oder mehreren der Ansprüche 1 bis 8, in FK-Anzeigen des PS- oder PSA-Typs, enthaltend eine FK-Zelle bestehend aus zwei Substraten und zwei Elektroden, wobei mindestens ein Substrat lichtdurchlässig ist und mindestens ein Substrat eine oder zwei Elektroden aufweist, sowie einer zwischen den Substraten befindlichen Schicht eines FK-Mediums enthaltend eine polymerisierte Komponente und eine niedermolekulare Komponente, wobei die polymerisierte Komponente erhältlich ist durch Polymerisation einer oder mehrerer polymerisierbarer Verbindungen zwischen den Substraten der FK-Zelle im FK-Medium, vorzugsweise unter Anlegen einer elektrischen Spannung an die Elektroden, wobei mindestens eine der polymerisierbaren Verbindungen eine Verbindung der Formel I wie in einem oder mehreren der Ansprüche 1 bis 4 definiert ist.

11. FK-Anzeige des PS- oder PSA-Typs, enthaltend eine Verbindung der Formel I wie in einem oder mehreren der Ansprüche 1 bis 4 definiert oder ein FK-Medium nach einem oder mehreren der Ansprüche 1 bis 8.

12. FK-Anzeige nach Anspruch 11, **dadurch gekennzeichnet, dass** sie eine PSA-VA-, PSA-OCB-, PS-IPS-, PS-FFS- oder PS-TN-Anzeige ist.

13. Verfahren zu Herstellung einer FK-Anzeige des PS- oder PSA-Typs, indem man ein FK-Medium nach einem oder mehreren der Ansprüche 1 bis 8 in eine FK-Zelle mit zwei Substraten und zwei Elektroden, wobei mindestens ein Substrat lichtdurchlässig ist und mindestens ein Substrat eine oder zwei Elektroden aufweist, füllt, und die polymerisierbaren Verbindungen, vorzugsweise unter Anlegen einer elektrischen Spannung an die Elektroden, polymerisiert.

14. Verbindungen der Formel I 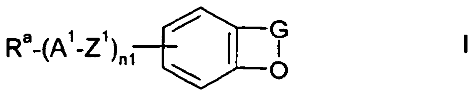 wobei die einzelnen Reste die Anspruch 1 angegebenen Bedeutungen besitzen, mit der Massgabe, dass
a) beide Reste R^{a} und R^{b} jeweils unabhängig voneinander P-Spbedeuten,
und/oder
b) n1 und n2 von 0 verschieden sind,
und/oder
c) n2 von 0 verschieden ist und -(Z²-A²)ₙ₂- nicht -CO-C₆H₄- bedeutet,
ausgenommen Verbindungen der folgenden Formel 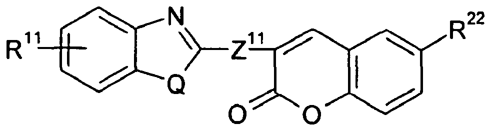 worin die einzelnene Reste folgende Bedeutung besitzen
R¹¹ und R²² jeweils unabhängig voneinander H, Halogen, -NO₂, - CN, -NCS, oder geradkettiges, verzweigtes oder cyclisches Alkyl mit 1 bis 25 C-Atomen, worin eine oder mehrere CH₂-Gruppen auch durch -CO-, -O-, -S-, -NR°-, -CH=CH-, -C=C-, so ersetzt sein können, dass O-und/oder S-Atome nicht direkt miteinander verknüpft sind, und worin ein oder mehrere H-Atome durch F oder Cl ersetzt sein können, oder P-(Sp-X)ₙ-,
X -O-, -S-, -CO-, -COO-, -OCO-, -CO-NR°-, -NR°-CO-, - NR°- oder eine Einfachbindung,
n 0 oder 1,
R° H oder Alkyl mit 1 bis 5 C-Atomen,
Z¹¹ -CH=CH-, -CF=CH-, -CH=CF-, -CF=CF- oder eine Einfachbindung,
Q -O-, -S-, -NR°- oder

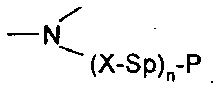

15. Verbindungen der Formel I nach Anspruch 14, dadurch gekennnzeichnet, dass
A¹ und A² jeweils unabhängig voneinander 1,4-Phenylen, Naphthalin-1,4-diyl oder Naphthalin-2,6-diyl, wobei in diesen Gruppen auch eine oder mehrere CH-Gruppen durch N ersetzt sein können, Cyclohexan-1,4-diyl, worin auch eine oder mehrere nicht-benachbarte CH₂-Gruppen durch O und/oder S ersetzt sein können, 1,4-Cyclohexenylen, Bicyclo[1.1.1]pentan-1,3-diyl, Bicyclo[2.2.2]octan-1,4-diyl, Spiro[3.3]heptan-2,6-diyl, Piperidin-1,4-diyl, Decahydronaphthalin-2,6-diyl, 1,2,3,4-Tetrahydronaphthalin-2,6-diyl, Indan-2,5-diyl oder Octahydro-4,7-methano-indan-2,5-diyl, wobei alle diese Gruppen unsubstituiert oder durch L ein- oder mehrfach substituiert sein können,
L P, P-Sp-, OH, CH₂OH, F, Cl, Br, I, -CN, -NO₂, -NCO, - NCS, -OCN, -SCN, -C(=O)N(R^{x})₂, -C(=O)Y¹, -C(=O)R^{x}, - N(R^{x})₂, optional substituiertes Silyl, optional substituiertes Aryl mit 6 bis 20 C Atomen, geradkettiges oder verzweigtes Alkyl oder Alkoxy 1 bis 25 C-Atomen, oder geradkettiges oder verzweigtes Alkenyl, Alkinyl, Alkylcarbonyl, Alkoxycarbonyl, Alkylcarbonyloxy oder Alkoxycarbonyloxy mit 2 bis 25 C-Atomen, worin in allen diesen Gruppen auch ein oder mehrere H-Atome durch F, Cl, P oder P-Sp- ersetzt sein können,
Y¹ Halogen, und
R^{x} P, P-Sp-, H, Halogen, geradkettiges, verzweigtes oder cyclisches Alkyl mit 1 bis 25 C-Atomen, worin auch eine oder mehrere nicht benachbarte CH₂-Gruppen durch -O-, - S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl oder P-Sp- ersetzt sein können,
bedeuten.

16. Verbindungen der Formel I nach Anspruch 14 oder 15, dadurch gekennnzeichnet, dass Sp -(CH₂)ₚ₁-, -(CH₂)ₚ₁-O-, -(CH₂)ₚ₁-OCO-, oder -(CH₂)ₚ₁-OCOO- bedeutet, worin p1 eine ganze Zahl von 1 bis 12 und r1 eine ganze Zahl von 1 bis 8 bedeutet.

17. Verbindungen der Formel I nach einem oder mehreren der Ansprüche 14 bis 16, dadurch gekennnzeichnet, dass A¹ und A² ausgewählt sind aus der Gruppe bestehend aus 1,4-Phenylen und Naphthalin-2,6-diyl, wobei in diesen Ringen auch eine oder zwei CH-Gruppen durch N ersetzt sein können, wobei diese Ringe ein- oder mehrfach durch L wie in Anspruch 15 definiert substituiert sein können,

18. Verbindungen der Formel I nach einem oder mehreren der Ansprüche 14 bis 17, ausgewählt aus der Gruppe bestehend aus folgenden Unterformeln 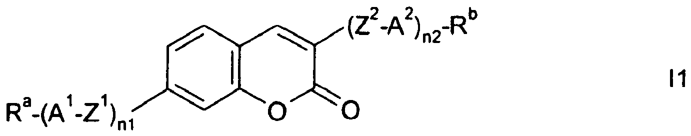 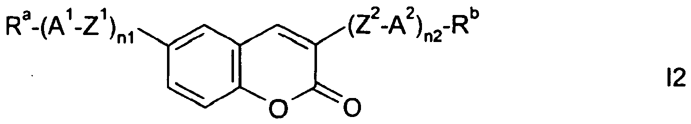 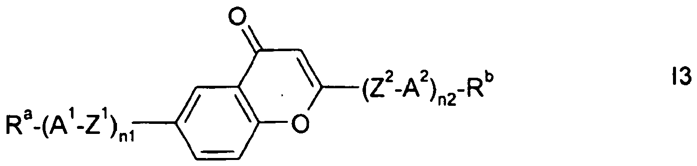 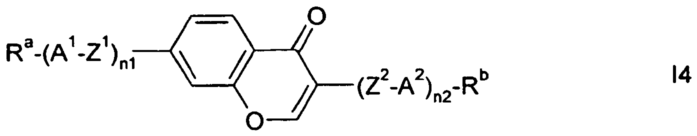 worin die einzelnen Reste die in Anspruch 1 angegebenen Bedeutungen besitzen.

19. Verbindungen der Formel I nach einem oder mehreren der Ansprüche 14 bis 18, ausgewählt aus der Gruppe bestehend aus folgenden Unterformeln 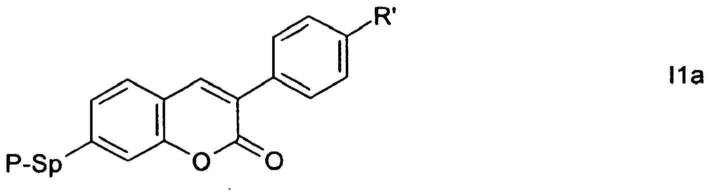 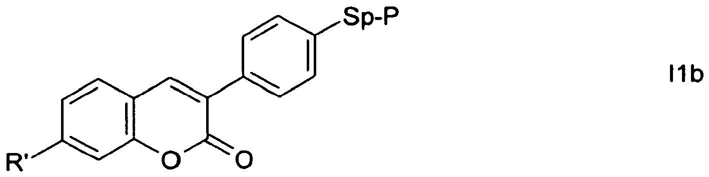 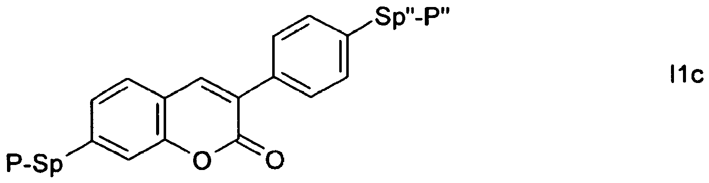 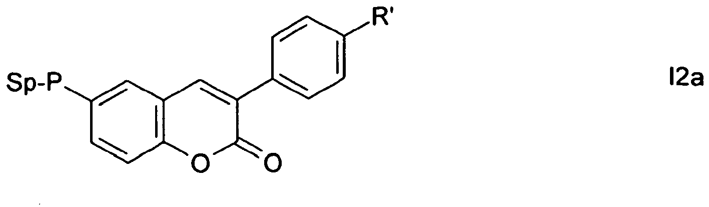 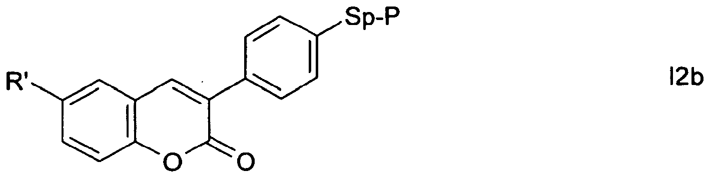 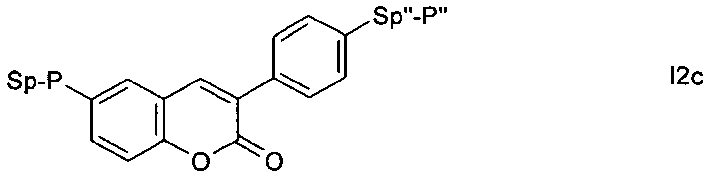 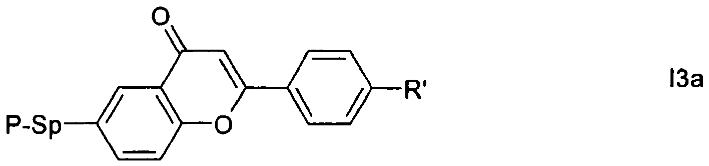 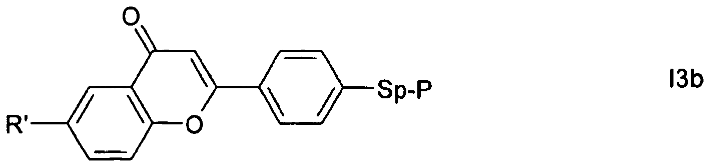 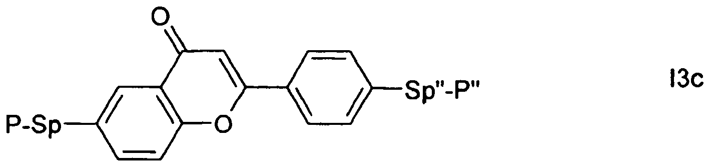 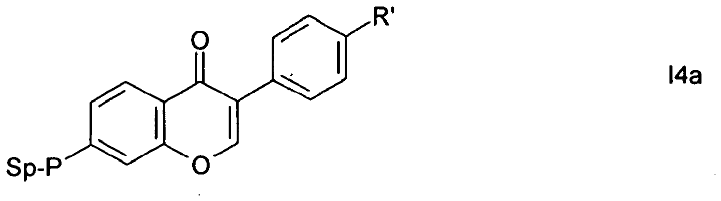 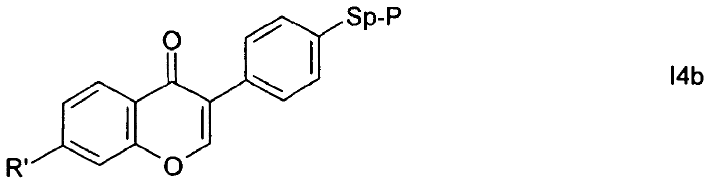 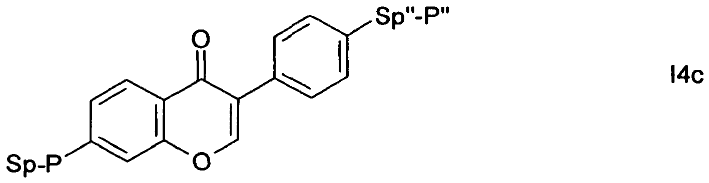 worin P und Sp die in Anspruch 1 angegebenen Bedeutungen besitzen, P" eine der in Anspruch 1 für P angegebenen Bedeutungen besitzt, Sp" eine der in Anspruch 1 für Sp angegebenen Bedeutungen besitzt, und R' eine der in Anspruch 1 für R^{a} angegebenen Bedeutungen besitzt, wobei R' von H verschieden ist und keine Gruppe P-Sp- bedeutet oder enthält.

20. Verbindungen der Formel I* 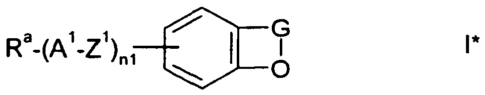 worin die einzelnen Reste die in Anspruch 1 angegebene Bedeutung besitzen, mit der Massgabe, dass beide Reste R^{a} und R^{b} -Sp-O-Sg bedeuten, wobei Sg ein H-Atom oder eine Schutzgruppe bedeutet.

21. Verbindungen nach Anspruch 20, ausgewählt aus der Gruppe bestehend aus folgenden Unterformeln 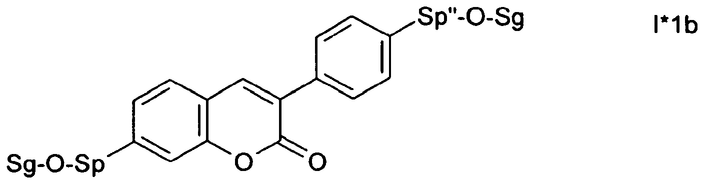 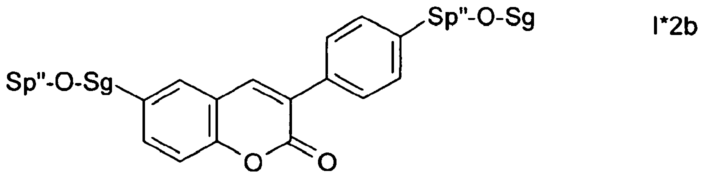 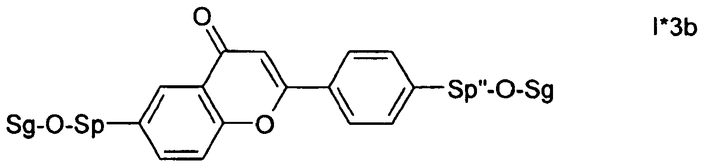 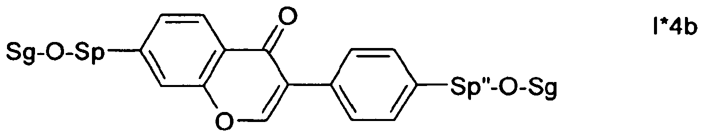 worin Sp, Sp" und Sg die in Anspruch 4 und 20 angegebene Bedeutung besitzen.

22. Verfahren zur Herstellung einer Verbindung nach einem oder mehreren der Ansprüche 14 bis 19, durch Veresterung oder Veretherung einer Verbindung nach Anspruch 20 oder 21 mit entsprechenden Säuren, Säurederivaten, oder halogenierten Verbindungen enthaltend eine Gruppe P, in Gegenwart eines wasserentziehenden Reagens.

## Claims

1. LC medium comprising
- a polymerisable component A) comprising one or more polymerisable compounds, and
- a liquid-crystalline component B) comprising one or more low-molecular-weight compounds,
**characterised in that** component A) comprises one or more polymerisable compounds of the formula I 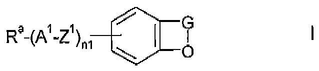 in which the individual radicals have the following meanings:
G denotes -CM=CR^{c}-CO- or -CO-CM=CR^{c}-,
M denotes -(Z²-A²)ₙ₂-R^{b},
A¹ and A² each, independently of one another, denote an aromatic, heteroaromatic, alicyclic or heterocyclic group, preferably having 4 to 25 C atoms, which may also contain fused rings, and which is optionally mono- or polysubstituted by L,
Z¹ denotes on each occurrence, identically or differently, -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₃-, -CF₂CH₂-, -CH₂CF₂-, -(CF₂)ₙ₃-, -CH=CH-, -CF=CF-, -CH=CF-, -CF=CH-, -C≡C-, -CH=CH-COO-, -OCO-CH=CH-, -CH₂-CH₂-COO-, -OCO-CH₂-CH₂-, -CR⁰R⁰⁰- or a single bond,
R^{a-c} denote P, P-Sp-, H, OH, F, Cl, Br, I, -CN, -NO₂, -NCO, -NCS, -OCN, -SCN, SF₅ or straight-chain or branched alkyl having 1 to 25 C atoms, in which one or more non-adjacent CH₂ groups may also each be replaced, independently of one another, by -C(R⁰⁰)=C(R⁰⁰⁰)-, -C≡C-, -N(R⁰⁰)-, -O-, -S-, -CO-, -CO-O-, -O-CO-, -O-CO-O- in such a way that O and/or S atoms are not linked directly to one another, and in which one or more H atoms may also be replaced by F, Cl, Br, I, CN or P-Sp-, where at least one of the radicals R^{a} and R^{b} denotes or contains a group P or P-Sp-,
P denotes on each occurrence, identically or differently, a polymerisable group,
Sp denotes on each occurrence, identically or differently, a spacer group or a single bond,
R⁰⁰ and R⁰⁰⁰ each, independently of one another, denote H or alkyl having 1 to 12 C atoms,
L denotes on each occurrence, identically or differently, P-Sp-, H, OH, CH₂OH, halogen, SF₅, NO₂, a carbon group or hydrocarbon group,
n1 and n2 each, independently of one another, denote 0, 1, 2 or 3,
n3 denotes 1, 2, 3 or 4.

2. LC medium according to Claim 1, **characterised in that** R^{a} and R^{b} in formula I denote identical or different radicals P or P-Sp-.

3. LC medium according to Claim 1 or 2, **characterised in that** the compounds of the formula I are selected from the group consisting of the following sub-formulae: 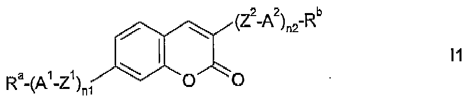 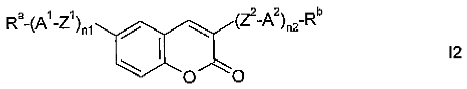 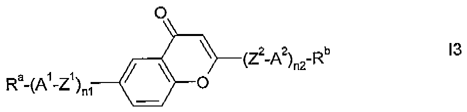 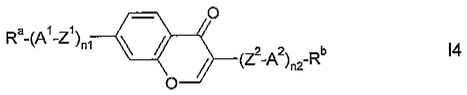 in which the individual radicals have the meanings indicated in Claim 1.

4. LC medium according to one or more of Claims 1 to 3, **characterised in that** the compounds of the formula I are selected from the group consisting of the following sub-formulae: 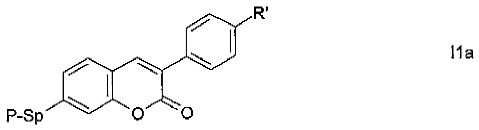 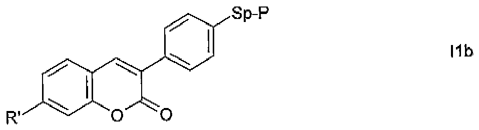 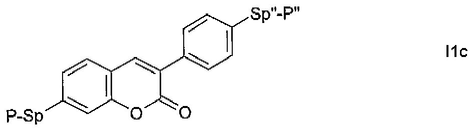 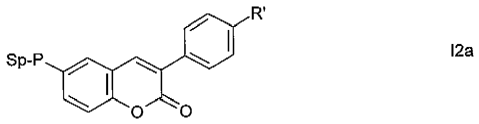 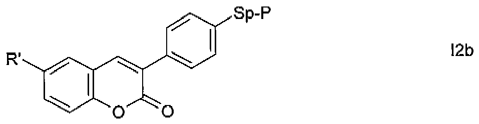 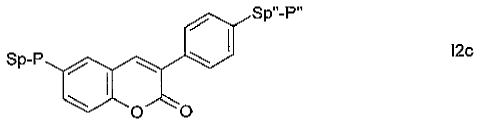 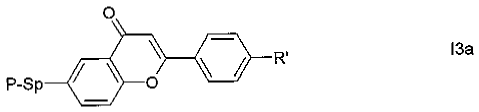 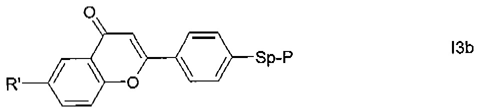 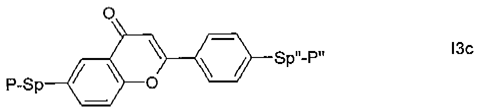 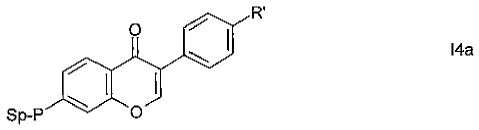 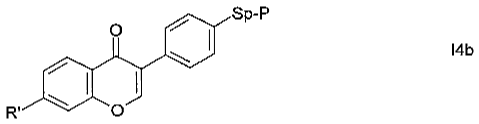 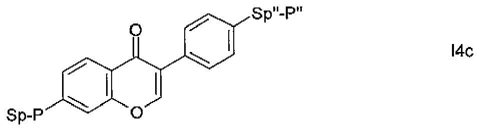 in which P and Sp have the meanings indicated in Claim 1, P" has one of the meanings indicated for P in Claim 1, Sp" has one of the meanings indicated for Sp in Claim 1, and R' has one of the meanings indicated for R^{a} in Claim 1, where R' is other than H and does not denote or contain a group P-Sp-.

5. LC medium according to one or more of Claims 1 to 4, **characterised in that** liquid-crystalline component B) comprises one or more compounds of the formulae CY and/or PY: 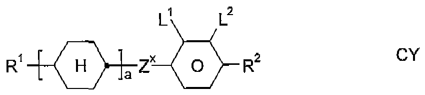 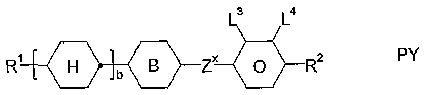 in which the individual radicals have the following meanings:
a denotes 1 or 2,
b denotes 0 or 1, 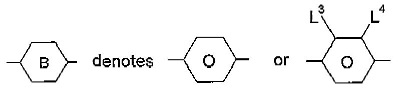
R¹ and R² each, independently of one another, denote alkyl having 1 to 12 C atoms, in which one or two non-adjacent CH₂ groups may also be replaced by -O-, -CH=CH-, -CO-, -OCO- or -COO- in such a way that O atoms are not linked directly to one another,
Z^{x} denotes -CH=CH-, -CH₂O-, -OCH₂-, -CF₂O-, -OCF₂-, -O-, -CH₂-, -CH₂CH₂- or a single bond, preferably a single bond,
L¹⁻⁴ each, independently of one another, denote F, Cl, OCF₃, CF₃, CH₃, CH₂F, CHF₂.

6. LC medium according to one or more of Claims 1 to 5, **characterised in that** liquid-crystalline component B) comprises one or more compounds of the following formula: 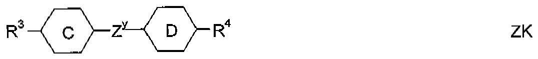 in which the individual radicals have the following meanings: 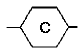 denotes 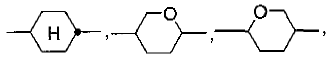 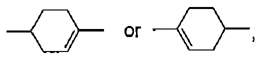 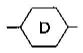 denotes 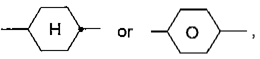
R³ and R⁴ each, independently of one another, denote alkyl having 1 to 12 C atoms, in which one or two non-adjacent CH₂ groups may also be replaced by-O-, -CH=CH-, -CO-, -OCO- or -COO- in such a way that O atoms are not linked directly to one another,
Z^{y} denotes -CH₂CH₂-, -CH=CH-, -CF₂O-, -OCF₂-, -CH₂O-, -OCH₂-, -COO-, -OCO-, -C₂F₄-, -CF=CF- or a single bond.

7. LC medium according to one or more of Claims 1 to 6, **characterised in that** liquid-crystalline component B) comprises one or more compounds of the following formula: 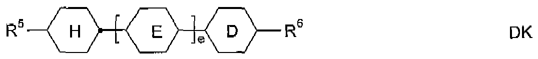 in which the individual radicals on each occurrence, identically or differently, have the following meanings:
R⁵ and R⁶ each, independently of one another, have one of the meanings indicated for R¹ above, 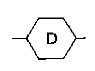
denotes 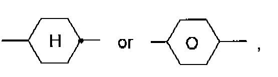 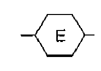
denotes 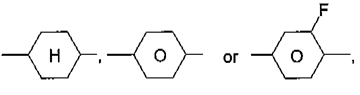 and
e denotes 1 or 2.

8. LC medium according to one or more of Claims 1 to 7, **characterised in that** the concentration of the compounds of the formula I is < 5% by weight.

9. Use of compounds of the formula I as defined in one or more of Claims 1 to 4, or of an LC medium according to one or more of Claims 1 to 8, in LC displays of the PS (polymer stabilised) or PSA (polymer sustained alignment) type.

10. Use of compounds of the formula I as defined in one or more of Claims 1 to 4, or of an LC medium according to one or more of Claims 1 to 8, in LC displays of the PS or PSA type, comprising an LC cell consisting of two substrates and two electrodes, where at least one substrate is transparent to light and at least one substrate has one or two electrodes, and a layer of an LC medium comprising a polymerised component and a low-molecular-weight component located between the substrates, where the polymerised component is obtainable by polymerisation of one or more polymerisable compounds between the substrates of the LC cell in the LC medium, preferably with application of an electrical voltage to the electrodes, where at least one of the polymerisable compounds is a compound of the formula I as defined in one or more of Claims 1 to 4.

11. LC display of the PS or PSA type, comprising a compound of the formula I as defined in one or more of Claims 1 to 4 or an LC medium according to one or more of Claims 1 to 8.

12. LC display according to Claim 11, **characterised in that** it is a PSA-VA, PSA-OCB, PS-IPS, PS-FFS or PS-TN display.

13. Process for the production of an LC display of the PS or PSA type by introducing an LC medium according to one or more of Claims 1 to 8 into an LC cell having two substrates and two electrodes, where at least one substrate is transparent to light and at least one substrate has one or two electrodes, and polymerising the polymerisable compounds, preferably with application of an electrical voltage to the electrodes.

14. Compounds of the formula I 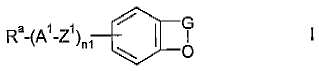 where the individual radicals have the meanings indicated in Claim 1, with the proviso that
a) the two radicals R^{a} and R^{b} each, independently of one another, denote P-Sp-,
and/or
b) n1 and n2 are other than 0,
and/or
c) n2 is other than 0 and -(Z²-A²)ₙ₂- does not denote -CO-C₆H₄-, with the exception of compounds of the following formula: 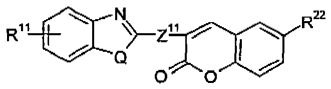
in which the individual radicals have the following meaning:
R¹¹ and R²² each, independently of one another, denote H, halogen, -NO₂, -CN, -NCS, or straight-chain, branched or cyclic alkyl having 1 to 25 C atoms, in which one or more CH₂ groups may also be replaced by -CO-, -O-, -S-, -NR°-, -CH=CH-, -C≡C- in such a way that O and/or S atoms are not linked directly to one another, and in which one or more H atoms may be replaced by F or Cl, or P-(Sp-X)ₙ-,
X denotes -O-, -S-, -CO-, -COO-, -OCO-, -CO-NR°-, -NR°-CO-, -NR°- or a single bond,
n denotes 0 or 1,
R° denotes H or alkyl having 1 to 5 C atoms,
Z¹¹ denotes -CH=CH-, -CF=CH-, -CH=CF-, -CF=CF- or a single bond,
Q denotes -O-, -S-, -NR°- or

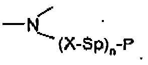

15. Compounds of the formula I according to Claim 14, **characterised in that**
A¹ and A² each, independently of one another, denote 1,4-phenylene, naphthalene-1,4-diyl or naphthalene-2,6-diyl, where one or more CH groups in these groups may also be replaced by N, cyclohexane-1,4-diyl, in which one or more non-adjacent CH₂ groups may also be replaced by O and/or S, 1,4-cyclohexenylene, bicyclo[1.1.1]pentane-1,3-diyl, bicyclo[2.2.2]octane-1,4-diyl, spiro[3.3]heptane-2,6-diyl, piperidine-1,4-diyl, decahydronaphthalene-2,6-diyl, 1,2,3,4-tetrahydronaphthalene-2,6-diyl, indane-2,5-diyl or octahydro-4,7-methanoindane-2,5-diyl, where all these groups may be unsubstituted or mono- or polysubstituted by L,
L denotes P, P-Sp-, OH, CH₂OH, F, Cl, Br, I, -CN, -NO₂, -NCO, -NCS, -OCN, -SCN, -C(=O)N(R^{x})₂, -C(=O)Y¹, -C(=O)R^{x}, -N(R^{x})₂, optionally substituted silyl, optionally substituted aryl having 6 to 20 C atoms, straight-chain or branched alkyl or alkoxy having 1 to 25 C atoms, or straight-chain or branched alkenyl, alkynyl, alkylcarbonyl, alkoxycarbonyl, alkylcarbonyloxy or alkoxycarbonyloxy having 2 to 25 C atoms, in which one or more H atoms in all these groups may also be replaced by F, Cl, P or P-Sp-,
Y¹ denotes halogen, and
R^{x} denotes P, P-Sp-, H, halogen, straight-chain, branched or cyclic alkyl having 1 to 25 C atoms, in which one or more non-adjacent CH₂ groups may also be replaced by -O-, -S-, -CO-, -CO-O-, -O-CO-, -O-CO-O- in such a way that O and/or S atoms are not linked directly to one another, and in which one or more H atoms may also be replaced by F, Cl or P-Sp-.

16. Compounds of the formula I according to Claim 14 or 15, **characterised in that** Sp denotes -(CH₂)ₚ₁-, -(CH₂)ₚ₁-O-, -(CH₂)ₚ₁-OCO- or -(CH₂)ₚ₁-OCOO-, in which p1 denotes an integer from 1 to 12 and r1 denotes an integer from 1 to 8.

17. Compounds of the formula I according to one or more of Claims 14 to 16, **characterised in that** A¹ and A² are selected from the group consisting of 1,4-phenylene and naphthalene-2,6-diyl, where one or two CH groups in these rings may also be replaced by N, where these rings may be mono- or polysubstituted by L as defined in Claim 15.

18. Compounds of the formula I according to one or more of Claims 14 to 17, selected from the group consisting of the following sub-formulae: 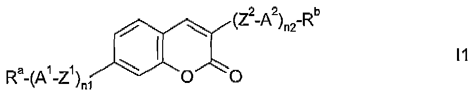 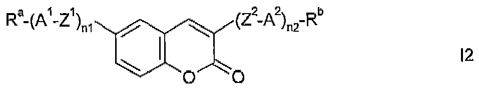 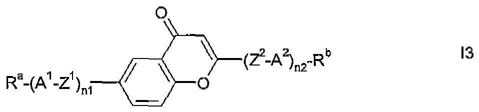 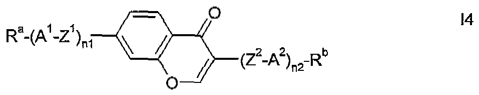 in which the individual radicals have the meanings indicated in Claim 1.

19. Compounds of the formula I according to one or more of Claims 14 to 18, selected from the group consisting of the following sub-formulae: 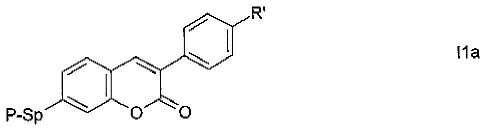 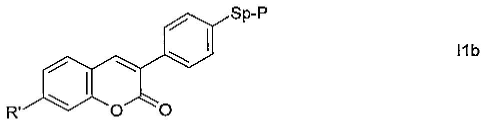 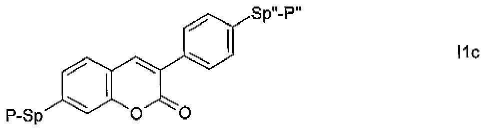 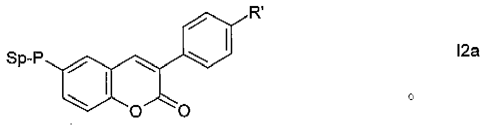 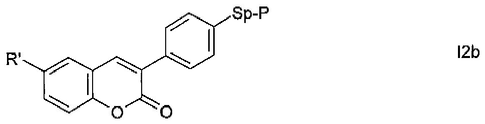 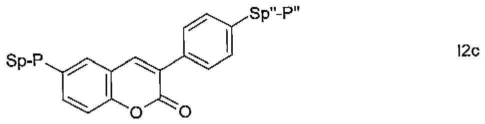 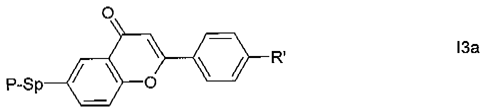 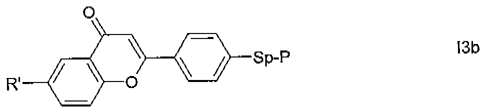 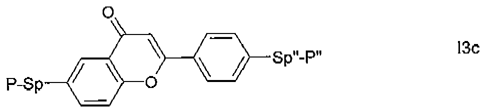 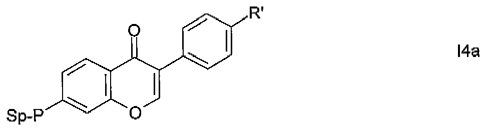 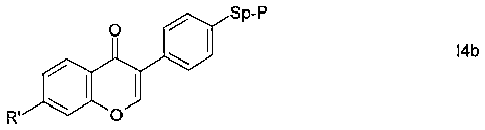 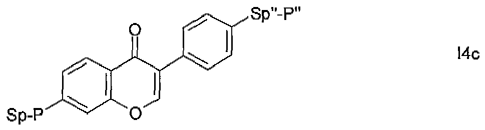 in which P and Sp have the meanings indicated in Claim 1, P" has one of the meanings indicated for P in Claim 1, Sp" has one of the meanings indicated for Sp in Claim 1, and R' has one of the meanings indicated for R^{a} in Claim 1, where R' is other than H and does not denote or contain a group P-Sp-.

20. Compounds of the formula I* 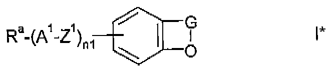 in which the individual radicals have the meanings indicated in Claim 1, with the proviso that the two radicals R^{a} and R^{b} denote -Sp-O-Sg, where Sg denotes an H atom or a protecting group.

21. Compounds according to Claim 20, selected from the group consisting of the following sub-formulae: 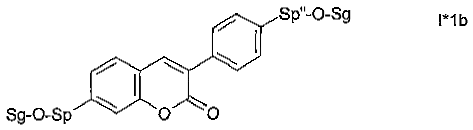 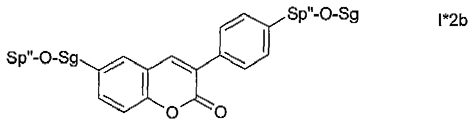 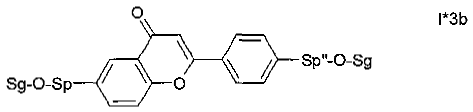 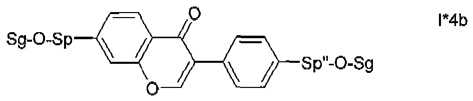 in which Sp, Sp" and Sg have the meanings indicated in Claims 4 and 20.

22. Process for the preparation of a compound according to one or more of Claims 14 to 19, by esterification or etherification of a compound according to Claim 20 or 21 using corresponding acids, acid derivatives, or halogenated compounds containing a group P, in the presence of a dehydrating reagent.

## Revendications

1. Milieu LC comprenant :
- un composant polymérisable A) comprenant un ou plusieurs composés polymérisables, et
- un composant cristallin liquide B) comprenant un ou plusieurs composés de poids moléculaire faible,
**caractérisé en ce que** le composant A) comprend un ou plusieurs composés polymérisables de la formule I 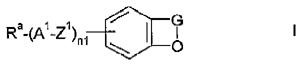 dans laquelle les radicaux individuels présentent les significations qui suivent :
G représente -CM=CR°-CO- ou -CO-CM=CR^{c}-,
M représente -(Z²-A²)ₙ₂-R^{b},
A¹ et A² représentent, chacun indépendamment de l'autre, un groupe aromatique, hétéroaromatique, alicyclique ou hétérocyclique, de préférence comportant de 4 à 25 atomes de C, lequel peut également contenir des cycles fusionnés, et lequel est en option mono- ou polysubstitué par L,
Z¹ représente, pour chaque occurrence, de manière identique ou différente, -O-, -S-, -CO-, -CO-O-, -OCO-, -O-CO-O-, -OCF₂-, -CH₂O-, -SCH₂-, -CH₂S-, -CF₂O-, -OCF₂-, -CF₂S-, -SCF₂-, -(CH₂)ₙ₃-, -CF₂CH₂-, -CH₂CF₂-, -(CF₂)ₙ₃-, -CH=CH-, -CF=CF-, -CH=CF-, -CF=CH-, -C≡C-, -CH=CH-COO-, -OCO-CH=CH-, -CH₂-CH₂-COO-, -OCO-CH₂-CH₂-, -CR⁰R⁰⁰- ou une liaison simple,
R^{a-c} représente P, P-Sp-, H, OH, F, Cl, Br, I, -CN, -NO₂, -NCO, -NCS, -OCN, -SCN, SF₅ ou alkyle en chaîne droite ou ramifié comportant de 1 à 25 atomes de C, où un ou plusieurs groupes CH₂ non adjacents peuvent également être chacun remplacés, indépendamment les uns des autres, par -C(R⁰⁰)=C(R⁰⁰⁰)-, -C≡C-, -N(R⁰⁰)-, -O-, -S-, -CO-, -CO-O-, -O-CO-, -O-CO-O- de telle sorte que des atomes de O et/ou de S ne soient pas liés directement les uns aux autres, et où un ou plusieurs atomes de H peuvent également être remplacés par F, CI, Br, I, CN ou P-Sp-, où au moins l'un des radicaux R² et R^{b} représente ou contient un groupe P ou P-Sp-,
P représente, pour chaque occurrence, de manière identique ou différente, un groupe polymérisable,
Sp représente, pour chaque occurrence, de manière identique ou différente, un groupe d'espaceur ou une liaison simple,
R⁰⁰ et R⁰⁰⁰ représentent, chacun indépendamment de l'autre, H ou alkyle comportant de 1 à 12 atomes de C,
L représente, pour chaque occurrence, de manière identique ou différente, P-Sp-, H, OH, CH₂OH, halogène, SF₅, NO₂, un groupe carbone ou un groupe hydro-carbone,
n1 et n2 représentent, chacun indépendamment de l'autre, 0, 1, 2 ou 3,
n3 représente 1, 2, 3 ou 4.

2. Milieu LC selon la revendication 1, **caractérisé en ce que** R^{a} et R^{b} dans la formule I représentent des radicaux identiques ou différents P ou P-Sp-.

3. Milieu LC selon la revendication 1 ou 2, **caractérisé en ce que** les composés de la formule I sont choisis parmi le groupe constitué par les sous-formules qui suivent : 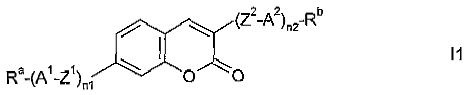 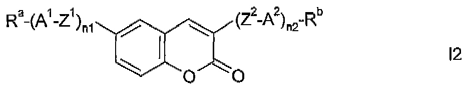 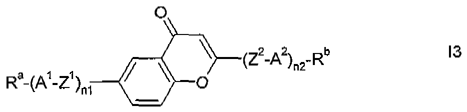 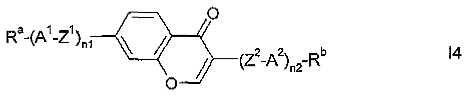 dans lesquelles les radicaux individuels présentent les significations indiquées selon la revendication 1.

4. Milieu LC selon une ou plusieurs des revendication 1 à 3, **caractérisé en ce que** les composés de la formule I sont choisis parmi le groupe constitué par les sous-formules qui suivent : 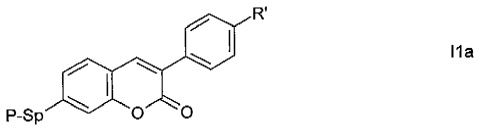 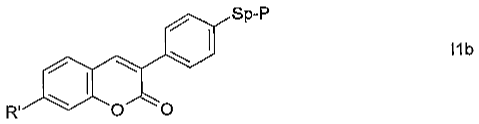 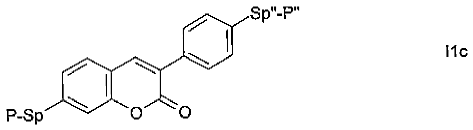 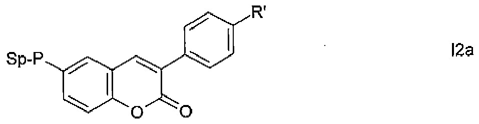 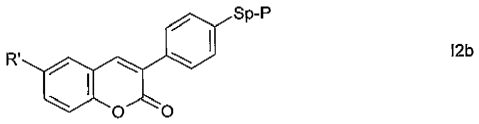 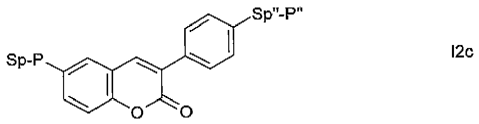 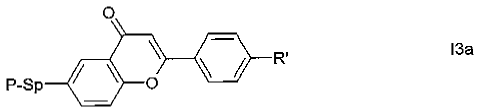 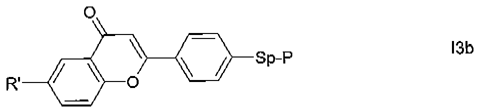 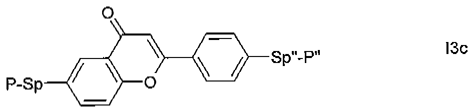 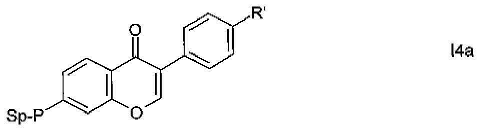 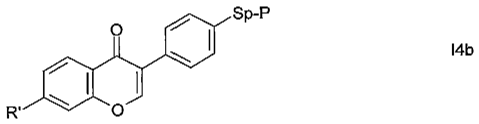 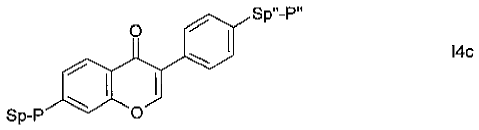 dans lesquelles P et Sp présentent les significations indiquées selon la revendication 1, P" présente l'une des significations indiquées pour P selon la revendication 1, Sp" présente l'une des significations indiquées pour Sp selon la revendication 1, et R' présente l'une des significations indiquées pour R^{a} selon la revendication 1, où R' est autre que H et ni ne représente, ni ne contient un groupe P-Sp-.

5. Milieu LC selon une ou plusieurs des revendications 1 à 4, **caractérisé en ce que** le composant cristallin liquide B) comprend un ou plusieurs composés des formules CY et/ou PY : 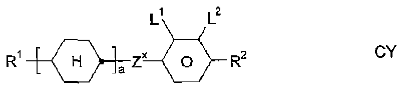 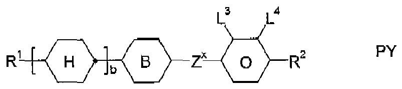 dans lesquelles les radicaux individuels présentent les significations qui suivent :
a représente 1 ou 2,
b représente 0 ou 1, 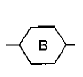
représente 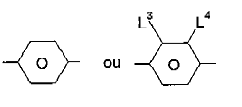
R¹ et R² représentent, chacun indépendamment de l'autre, alkyle comportant de 1 à 12 atomes de C, où un ou deux groupes CH₂ non adjacents peuvent également être remplacés par-O-, -CH=CH-, -CO-, -OCO- ou -COO- de telle sorte que des atomes de O ne soient pas liés directement les uns aux autres,
Z^{x} représente -CH=CH-, -CH₂O-, -OCH₂-, -CF₂O-, -OCF₂-, -O-, -CH₂-, -CH₂CH₂- ou une liaison simple, de préférence une liaison simple,
L¹⁻⁴ représentent, chacun indépendamment des autres, F, Cl, OCF₃, CF₃, CH₃, CH₂F, CHF₂.

6. Milieu LC selon une ou plusieurs des revendications 1 à 5, **caractérisé en ce que** le composant cristallin liquide B) comprend un ou plusieurs composés de la formule qui suit : 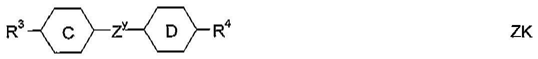 dans laquelle les radicaux individuels présentent les significations qui suivent: 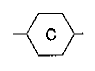
représente 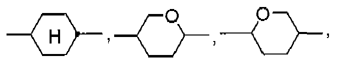 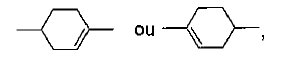 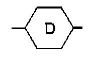
représente 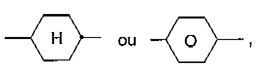
R³ et R⁴ représentent, chacun indépendamment de l'autre, alkyle comportant de 1 à 12 atomes de C, où un ou deux groupes CH₂ non adjacents peuvent également être remplacés par -O-, -CH=CH-, -CO-, -OCO- ou -COO- de telle sorte que des atomes de O ne soient pas liés directement les uns aux autres,
Z^{y} représente -CH₂CH₂-, -CH=CH-, -CF₂O-, -OCF₂-, -CH₂O-, -OCH₂-, -COO-, -OCO-, -C₂F₄-, -CF=CF- ou une liaison simple.

7. Milieu LC selon une ou plusieurs des revendications 1 à 6, **caractérisé en ce que** le composant cristallin liquide B) comprend un ou plusieurs composés de la formule qui suit : 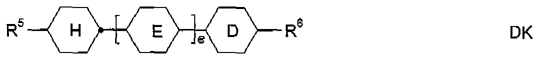 dans laquelle les radicaux individuels présentent, pour chaque occurrence, de manière identique ou différente, les significations qui suivent :
R⁵ et R⁶ présentent, chacun indépendamment de l'autre, l'une des significations indiquées pour R¹ ci avant, 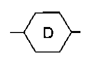
représente 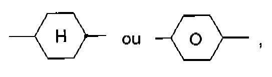 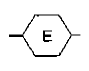
représente 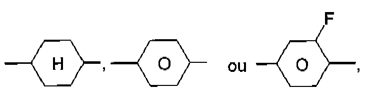 et
e représente 1 ou 2.

8. Milieu LC selon une ou plusieurs des revendications 1 à 7, **caractérisé en ce que** la concentration des composés de la formule I est < 5% en poids.

9. Utilisation de composés de la formule I comme défini selon une ou plusieurs des revendications 1 à 4, ou d'un milieu LC selon une ou plusieurs des revendications 1 à 8, dans des affichages LC du type PS (polymère stabilisé) ou PSA (alignement polymer sustained alignment).

10. Utilisation de composés de la formule I comme défini selon une ou plusieurs des revendications 1 à 4, ou d'un milieu LC selon une ou plusieurs des revendications 1 à 8, dans des affichages LC du type PS ou PSA, comprenant une cellule LC constituée par deux substrats et deux électrodes, où au moins un substrat est transparent vis-à-vis de la lumière et au moins un substrat comporte une ou deux électrodes, et une couche d'un milieu LC comprenant un composant polymérisé et un composant de poids moléculaire faible localisée entre les substrats, où le composant polymérisé peut être obtenu par polymérisation d'un ou de plusieurs composés polymérisables entre les substrats de la cellule LC dans le milieu LC, de préférence grâce à l'application d'une tension électrique sur les électrodes, où au moins l'un des composés polymérisables est un composé de la formule I comme défini selon une ou plusieurs des revendications 1 à 4.

11. Affichage LC du type PS ou PSA, comprenant un composé de la formule I comme défini selon une ou plusieurs des revendications 1 à 4 ou un milieu LC selon une ou plusieurs des revendications 1 à 8.

12. Affichage LC selon la revendication 11, **caractérisé en ce qu'**il s'agit d'un affichage PSA-VA, PSA-OCB, PS-IPS, PS-FFS ou PS-TN.

13. Procédé pour la production d'un affichage LC du type PS ou PSA en introduisant un milieu LC selon une ou plusieurs des revendications 1 à 8 dans une cellule LC comportant deux substrats et deux électrodes, où au moins un substrat est transparent vis-à-vis de la lumière et au moins un substrat comporte une ou deux électrodes, et en polymérisant les composés polymérisables, de préférence grâce à l'application d'une tension électrique sur les électrodes.

14. Composés de la formule I 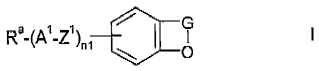 dans laquelle les radicaux individuels présentent les significations indiquées selon la revendication 1, étant entendu que :
a) les deux radicaux R^{a} et R^{b} représentent, chacun indépendamment de l'autre, P-Sp-,
et/ou
b) n1 et n2 sont autres que 0,
et/ou
c) n2 est autre que 0 et -(Z²-A²)ₙ₂- ne représente pas -CO-C₆H₄-,
à l'exception de composés de la formule qui suit : 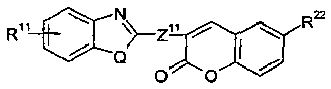 dans laquelle les radicaux individuels présentent la signification qui suit :
R¹¹ et R²² représentent, chacun indépendamment de l'autre, H, halogène, -NO₂, -CN, -NCS, ou alkyle en chaîne droite, ramifié ou cyclique comportant de 1 à 25 atomes de C, où un ou plusieurs groupes CH₂ peuvent également être remplacés par -CO-, -O-, -S-, -NR°-, -CH=CH-, -C≡C- de telle sorte que des atomes de O et/ou de S ne soient pas liés directement les uns aux autres, et où un ou plusieurs atomes de H peuvent être remplacés par F ou Cl, ou P-(Sp-X)ₙ-,
X représente -O-, -S-, -CO-, -COO-, -OCO-, -CO-NR°-, -NR°-CO-, -NR°- ou une liaison simple,
n représente 0 ou 1,
R° représente H ou alkyle comportant de 1 à 5 atomes de C,
Z¹¹ représente -CH=CH-, -CF=CH-, -CH=CF-, -CF=CF- ou une liaison simple,
Q représente -O-, -S-, -NR°- ou

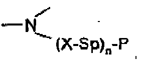

15. Composés de la formule I selon la revendication 14, **caractérisé en ce que** :
A¹ et A² représentent, chacun indépendamment de l'autre, 1,4-phénylène, naphtalène-1,4-diyle ou naphtolèno-2,6-diyle, où un ou plusieurs groupes CH parmi ces groupes peuvent également être remplacés par N, cyclohexane-1,4-diyle, où un ou plusieurs groupes CH₂ non adjacents peuvent également être remplacés par O et/ou S, 1,4-cyclo-hexénylène, bicyclo[1.1.1]pentane-1,3-diyle, bicyclo-[2.2.2]octane-1,4-diyle, spiro[3.3]heptane-2,6-diyle, pipéridine-1,4-diyle, décahydronaphtalène-2,6-diyle, 1,2,3,A-tétrahydronaphtalène-2,6-diyle, indane-2,5-diyle ou octahydro-4,7-méthanoindane-2,5-diyle, où tous ces groupes peuvent être non substitués ou mono- ou polysubstitués par L,
L représente P, P-Sp-, OH, CH₂OH, F, Cl, Br, I, -CN, -NO₂, -NCO, -NCS, -OCN, -SCN, -C(=O)N(R^{x})₂, -C(=O)Y¹, -C(=O)R^{x}, -N(R^{x})₂, silyle en option substitué, aryle en option substitué comportant de 6 à 20 atomes de C, alkyle ou alcoxy en chaîne droite ou ramifié comportant de 1 à 25 atomes de C, ou alkényle, alkynyle, alkylcarbonyle, alcoxycarbonyle, alkylcarbonyloxy ou alcoxycarbonyloxy en chaîne droite ou ramifié, comportant de 2 à 25 atomes de C, où un ou plusieurs atomes de H dans ces groupes peuvent également être remplacés par F, Cl, P ou P-Sp-,
Y¹ représente halogène, et
R^{x} représente P, P-Sp-, H, halogène, alkyle en chaîne droite, ramifié ou cyclique comportant de 1 à 25 atomes C, où un ou plusieurs groupes CH₂ non adjacents peuvent également être remplacés par -O-, -S-, -CO-, -CO-O-, -O-CO-, -O-CO-O- de telle sorte que des atomes de O et/ou de S ne soient pas liés directement les uns aux autres, et où un ou plusieurs atomes de H peuvent également être remplacés par F, Cl ou P-Sp-.

16. Composés de la formule I selon la revendication 14 ou 15, **caractérisés en ce que** Sp représente -(CH₂)ₚ₁-, -(CH₂)ₚ₁-O-, -(CH₂)ₚ₁-OCO- ou -(CH₂)ₚ₁-OCOO-, où p1 représente un entier de 1 à 12 et r1 représente un entier de 1 à 8.

17. Composés de la formule I selon une ou plusieurs des revendications 14 à 16, **caractérisés en ce que** A¹ et A² sont choisis parmi le groupe constitué par 1,4-phénylène et naphtalène-2,6-diyle, où un ou deux groupes CH dans ces cycles peuvent également être remplacés par N, où ces cycles peuvent également être mono- ou polysubstitués par L comme défini selon la revendication 15.

18. Composés de la formule I selon une ou plusieurs des revendications 14 à 17, choisis parmi le groupe constitué par les sous-formules qui suivent : 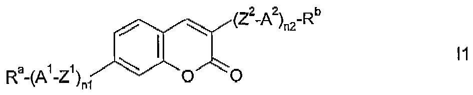 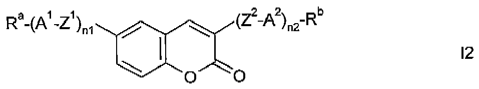 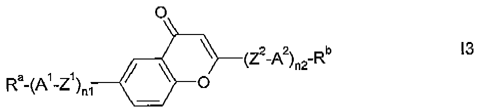 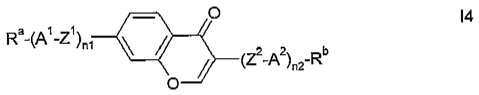 dans lesquelles les radicaux individuels présentent les significations indiquées selon la revendication 1.

19. Composés de la formule I selon une ou plusieurs des revendications 14 à 18, choisis parmi le groupe constitué par les sous-formules qui suivent : 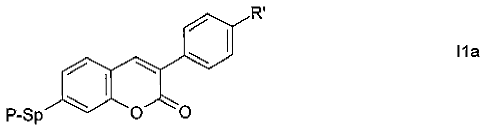 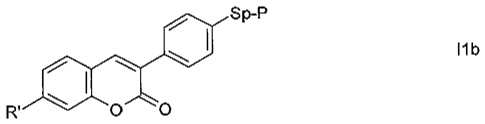 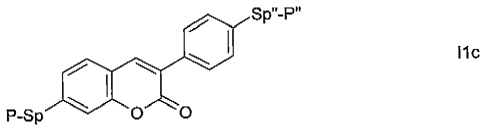 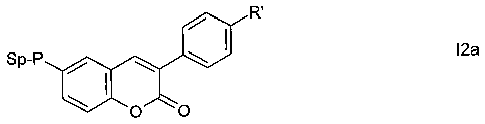 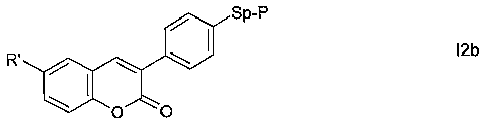 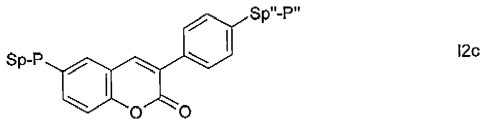 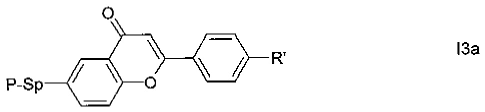 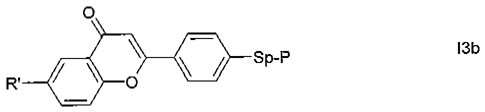 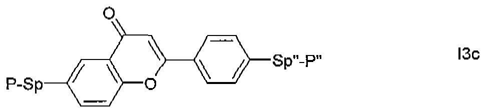 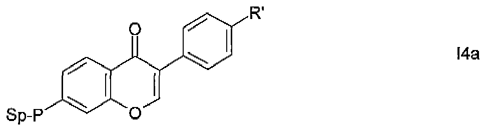 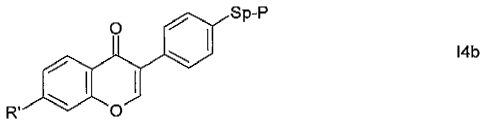 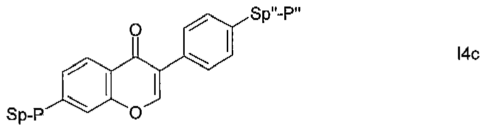 dans lesquelles P et Sp présentent les significations indiquées selon la revendication 1, P" présente l'une des significations indiquées pour P selon la revendication 1, Sp" présente l'une des significations indiquées pour Sp selon la revendication 1, et R' présente l'une des significations indiquées pour R^{a} selon la revendication 1, où R' est autre que H et ni ne représente, ni ne contient un groupe P-Sp-.

20. Composés de la formule I* 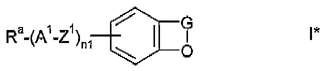 dans laquelle les radicaux individuels présentent les significations indiquées selon la revendication 1, étant entendu que les deux radicaux R^{a} et R^{b} représentent -Sp-O-Sg, où Sg représente un atome de H ou un groupe de protection.

21. Composés selon la revendication 20, choisis parmi le groupe constitué par les sous-formules qui suivent : 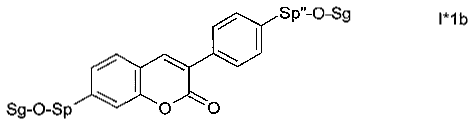 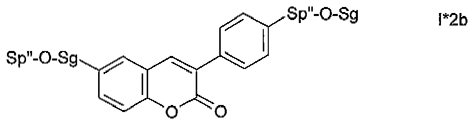 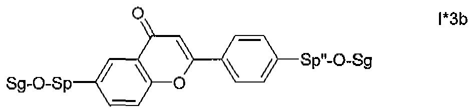 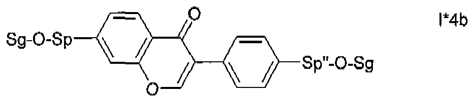 dans lesquelles Sp, Sp" et Sg présentent les significations indiquées selon les revendications 4 et 20.

22. Procédé pour la préparation d'un composé selon une ou plusieurs des revendications 14 à 19, par estérification ou éthérification d'un composé selon la revendication 20 ou 21 en utilisant des acides correspondants, des dérivés d'acides, ou des composés halogénés contenant un groupe P, en présence d'un agent déshydratant.
